# EUROPEAN PATENT APPLICATION

(11) **EP 4 546 683 A2**
(43) Date of publication of application: **30.04.2025**
(21) Application number: 24207532.3
(22) Date of filing: 05.05.2018
(51) Int. Cl.: H04L 1/1607

(54) **DATA TRANSMISSION PROCESSING METHOD AND APPARATUS**

(30) Priority: 05.05.2017 CN 201710314177
(62) Divisional of application: 18794399.8
(71) Applicant: Huawei Technologies Co., Ltd., Shenzhen, Guangdong 518129 (CN)
(72) Inventor: XU, Xiaoying, Shenzhen, 518129 (CN); HUANG, Qufang, Shenzhen, 518129 (CN); LOU, Chong, Shenzhen, 518129 (CN); ZENG, Qinghai, Shenzhen, 518129 (CN); GUO, Yinghao, Shenzhen, 518129 (CN)
(74) Representative: Pfenning, Meinig & Partner mbB

(57) **Abstract**

A plurality of aspects of the present invention disclose a data transmission processing method and apparatus, and a terminal device. The method includes: generating, by an access network device, configuration information of a terminal device, where the configuration information of the terminal device is intended to map one PDCP entity of the terminal device to at least two different RLC entities; and transmitting, by the access network device, the configuration information of the terminal device to the terminal device. The data transmission processing method and apparatus, and the terminal device in the present invention can improve reliability while ensuring service transmission quality.

## Description

This application claims priority to Chinese Patent Application No. 201710314177.2, filed with the Chinese Patent Office on May 5, 2017 and entitled "DATA TRANSMISSION PROCESSING METHOD AND APPARATUS", which is incorporated herein by reference in its entirety.

### TECHNICAL FIELD

Embodiments of the present invention relate to communications technologies, and in particular, to a data transmission processing method and apparatus.

### BACKGROUND

Currently, there are various communications systems, for example, 2nd generation (2G), 3rd generation (3G), and 4th generation (4G) communications systems and a new radio access network, for example, a global system for mobile communications (Global System for Mobile communications, GSM), a code division multiple access (Code Division Multiple Access, CDMA) system, a time division multiple access (Time Division Multiple Access, TDMA) system, wideband code division multiple access (Wideband Code Division Multiple Access, WCDMA), a frequency division multiple access (Frequency Division Multiple Addressing, FDMA) system, an orthogonal frequency division multiple access (Orthogonal Frequency Division Multiple Access, OFDMA) system, a single carrier FDMA (SC-FDMA) system, a general packet radio service (General Packet Radio Service, GPRS) system, a long term evolution (Long Term Evolution, LTE) system, a universal mobile telecommunications system (Universal Mobile Telecommunications System, UMTS), and other similar communications systems. The new radio access network can provide a higher transmission rate than an LTE network. The new radio access network is also referred to as a 5G network, a next generation network, or the like.

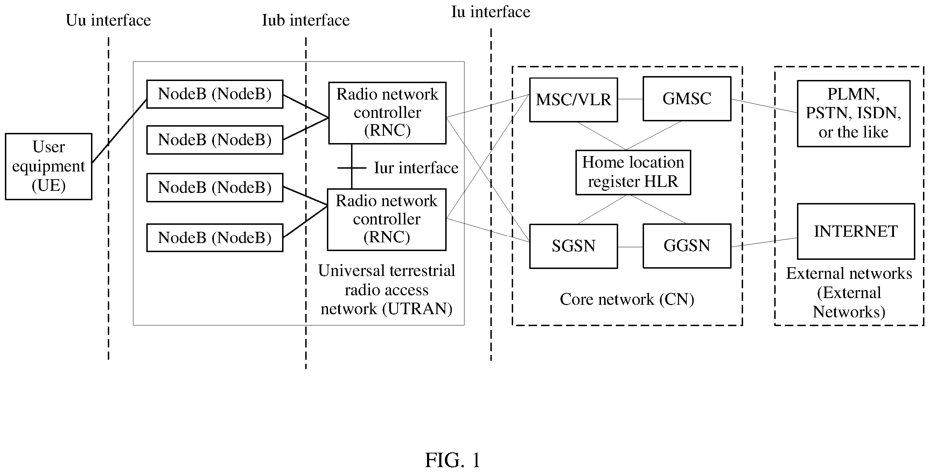

FIG. 1 is a schematic structural diagram of a UMTS communications system in the prior art. The UMTS is a 3rd generation mobile communications system using a WCDMA air interface technology. The UMTS uses a structure similar to that of a 2nd generation mobile communications system. Generally, the UMTS system is referred to as a WCDMA communications system.

The UMTS system includes a radio access network (Radio Access Network, RAN) and a core network (Core Network, CN). The radio access network processes all radio-related functions. The CN processes all voice calls and data connections in the UMTS system and implements functions for switching and routing to an external network. Logically, the CN is divided into a circuit switched domain (Circuit Switched Domain, CS) and a packet switched domain (Packet Switched Domain, PS).

The core network (CN) includes various network elements such as a mobile switching center (Mobile Switching Center, MSC) or a visitor location register (Visitor Location Register, VLR), a serving GPRS support node (Serving GPRS (general packet radio service, General Packet Radio Service) Support Node, SGSN), a home location register (Home Location Register, HLR), a gateway mobile-services switching center (Gateway Mobile-services Switching Centre), and a gateway GPRS support node (GGSN, Gateway GPRS Support Node, GMSC). The core network may be connected to the external network (External Network) by using the GMSC or the GGSN. For example, the core network may be connected to a public land mobile communications network (Public Land Mobile Network, PLMN), a public switched telephone network (Public Switched Telephone Network, PSTN), an integrated services digital network (Integrated Services Digital Network, ISDN), or the like by using the GMSC, and may be connected to the Internet (INTERNET) by using the GGSN.

An interface between user equipment (User Equipment, UE) and a universal terrestrial radio access network (Universal Terrestrial Radio Access Network, UTRAN) is a Uu interface. A NodeB is connected to a radio network controller (Radio Network Controller, RNC) by using an Iub interface. Within the UTRAN, radio network controllers (RNC) are interconnected by using an Iur. The Iur may be connected by using a direct physical inter-RNC link or connected by using a transport network. Interfaces between the UTRAN and the CN are collectively referred to as Iu interfaces, including an Iu-CS interface and an Iu-PS interface.

The NodeB is connected to the RNC by using the Iub interface, and is configured to: implement Uu interface physical layer protocol processing, allocate and control radio resources of the connected NodeB or a related NodeB, and implement data stream conversion between the Iub interface and the Uu interface.

The RNC is configured to control radio resources of the UTRAN, and mainly implements functions such as connection establishment and disconnection, handover, macro diversity combining, and radio resource management and control.

To maintain competitiveness of a future network, the 3GPP puts forward a completely new evolved network architecture to satisfy application requirements of a mobile network in the next decade or even longer in the future. The architecture includes system architecture evolution (SAE, system architecture evolution) and long term evolution (LTE, Long Term Evolution) of an access network, and the evolved access network is referred to as an evolved universal terrestrial radio access network (E-UTRAN, Evolved Universal Terrestrial Radio Access Network). An objective of network evolution is to provide an all-IP-based network that has a low latency, a high data rate, a large system capacity, large system coverage, and low costs.

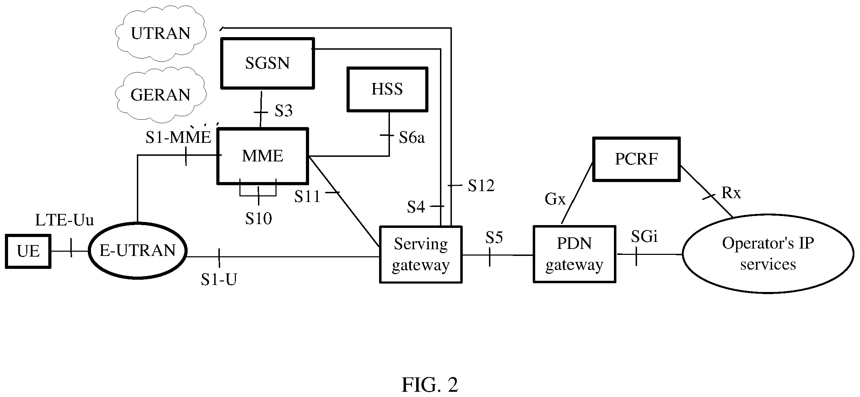

FIG. 2 is a schematic architecture diagram of an evolved packet core network in the prior art. The evolved packet core network may include three logical functional entities: a mobility management entity (Mobility Management Entity, MME), a serving SAE gateway (Serving SAE GW), and a packet data network gateway (PDN (Packet Data Network) SAE GW).

The MME is responsible for mobility management of a control plane, including user context management, mobility status management, temporary user identity allocation, or the like, and corresponds to a control plane part of the serving GPRS support node SGSN in the current GPRS/UMTS system.

The serving SAE GW is responsible for initiating paging for downlink data in an idle state, managing and storing an IP bearer parameter and routing information in a network, or the like, and corresponds to a data plane part of the SGSN and the gateway GPRS support node (GGSN, Gateway GPRS Support Node) in the current GPRS/UMTS system.

The PDN SAE GW serves as a user plane anchor between different access systems.

A policy and charging rules function (Policy and Charging Rules Function, PCRF) is used for functions of policy control decision and flow charging control.

A home network server (Home Subscriber Server, HSS) is configured to store subscription information of a user.

With fast development of receive-end requirements and technologies, a 5th generation mobile communications (the 5th Generation mobile communication technology, 5G) system or a new radio (New radio, NR) technology is upcoming. The 5G system or the NR system can provide a higher transmission rate than the long term evolution (Long Term Evolution, LTE) network, and its maximum theoretical transmission rate may reach tens of gigabytes (Gigabyte, Gb for short) per second.

The new communications system is 5G or a next generation communications system, and includes a next generation core network (NG Core) and a gNB (gNB). The gNB usually includes a radio resource control (Radio Resource Control, RRC) layer, a packet data convergence protocol (Packet Data Convergence Protocol, PDCP) layer, a radio link control (Radio Link Control, RLC) layer, a media access control (Media Access Control, MAC) layer, and a physical layer (Physical Layer, PHY).

Alternatively, the gNB may use a centralized unit (Centralized Unit, CU)-distributed unit (Distributed Unit, DU) architecture. The CU communicates with the DU wiredly or wirelessly, the DU communicates with a receive end by using an air interface, and the receive end moves in different cells of a same DU or different DUs.

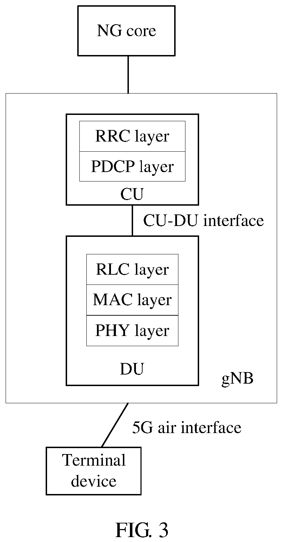

If the gNB uses the CU-DU architecture, there are a plurality of possibilities of function division of the CU and the DU. One function division manner may be shown in FIG. 3. FIG. 3 is a schematic structural diagram of the gNB using the CU-DU architecture in the prior art, where the CU includes an RRC layer and a PDCP layer, and the DU includes an RLC layer, a MAC layer, and a PHY layer.

A CU device is generally responsible for centralized management and control of radio resources and connections. A DU device generally implements a distributed user plane processing function, and mainly processes a physical layer function and a layer 2 (Layer 2) function having a relatively high real-time requirement.

The CU device processes functions of higher layers of a wireless protocol stack, for example, the RRC layer and the PDCP layer, or can even support some core network functions moved to an access network, referred to as an edge computing network, to satisfy a higher requirement of an emerging service such as a video, online shopping, or virtual/augmented reality on a network latency in a future communications network.

The CU includes some functions of higher layers of a protocol stack of the radio access network and the core network, but the DU includes some functions of the physical layer and the layer 2 for baseband processing. The CU may be deployed in a centralized manner, and the DU is deployed depending on an actual network environment. In a core urban area, and an area in which traffic density is relatively high, a distance between sites is relatively short, and equipment room resources are limited, such as a college/university or a large-scale performance venue, the DU may also be deployed in a centralized manner. However, in an area such as an area in which traffic density is relatively low and a distance between sites is relatively long, for example, a suburban county or a mountainous area, the DU may be deployed in a distributed manner.

Different services have different requirements on quality of service (Quality of Service, QoS). For example, QoS class identifiers (QoS Class Identifier, QCI) 1 to 4 are used in a service that requires guaranteed bandwidth, and the QCIs are used in a service with a guaranteed bit rate (guaranteed bit rate, GBR) and guaranteed bandwidth. The service is generally a service requiring continuous equal-bandwidth transmission, for example, a video or audio service. QCIs 5 to 9 are used in a service that does not require guaranteed bandwidth. Although guaranteed bandwidth is not required, the service may have a very high latency requirement, for example, an IMS signaling message whose QCI is 5, where the IMS signaling message is used for VoLTE voice call control (for example, establishment, release, or holding), and is very sensitive to a latency.

H.264 video encoding is used as an example. Video transmission includes a group of pictures (Group of Pictures, GOP), where one GOP is a group of consecutive pictures, that is, a sequence. One sequence is a data stream with encoded images. Three frames are defined in the H264 protocol. A frame that is completely encoded is referred to as an I-frame (an intra frame, denoting a key frame). A frame that is generated by referring to a previous I-frame and that includes only a different encoded part is referred to as a P-frame. The P-frame indicates a difference between the current frame and a previous key frame (or a P-frame), and during decoding, the difference defined by the current frame needs to be superposed on a previously buffered picture to generate a final picture. A frame that is encoded by referring to previous and subsequent frames is referred to as a B-frame. The B-frame is a frame with bidirectional differences, that is, the B-frame records differences between the current frame and the previous and next frames.

Generally, a reliable transmission service, for example, a downloaded and buffered video, is carried in an AM RLC entity in an RLC acknowledged mode (RLC Acknowledged Mode, RLC AM). A service that has a high real-time requirement, for example, a real-time video or voice, is carried in a UM RLC entity in an RLC unacknowledged mode (RLC Unacknowledged Mode, RLC UM).

However, when the real-time video uses the RLC UM mode, if a data packet of a real-time streaming protocol (Real-Time Stream Protocol, RSTP) layer, a real-time transport protocol (Real-time Transport Protocol, RTP) layer, or a user datagram protocol (User Datagram Protocol, UDP) layer at a transport layer fails to be transmitted on an air interface, if retransmission at an application layer is excessively late, poor QoS experience is caused. When the buffered video uses the RLC AM mode, when RLC reconstruction is caused after a P-frame or a segment of a P-frame is retransmitted a maximum quantity of times, even if an I-frame is received, the I-frame cannot be used. When a radio link failure is caused after the I-frame or a segment of the I-frame is retransmitted a maximum quantity of times, the radio link can only be reestablished, causing a long interruption.

Because data transmission in the prior art is unreliable or the latency is excessively long, user experience is affected.

### SUMMARY

A plurality of aspects of the present invention provide a data transmission processing method and apparatus, and a terminal device to improve reliability while ensuring service transmission quality.

A first aspect of the present invention provides a data transmission processing method, including: generating, by an access network device, configuration information of a terminal device, where the configuration information of the terminal device is intended to map one PDCP entity of the terminal device to at least two different RLC entities; and transmitting, by the access network device, the configuration information of the terminal device to the terminal device.

Optionally, the at least two different RLC entities respectively use an RLC AM and an RLC UM.

Optionally, the at least two different RLC entities both use an RLC AM or an RLC UM, timers with different duration are respectively configured for the at least two different RLC entities, and each timer is used by an RLC entity corresponding to the timer to detect whether an RLC PDU transmitted by the access network device is lost.

Optionally, the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.

A second aspect of the present invention provides a data transmission processing apparatus, including: a processor, configured to generate configuration information of a terminal device, where the configuration information of the terminal device is intended to map one PDCP entity of the terminal device to at least two different RLC entities; and a transmitter, configured to transmit the configuration information of the terminal device to the terminal device.

Optionally, the at least two different RLC entities respectively use an RLC AM and an RLC UM.

Optionally, the at least two different RLC entities both use an RLC AM or an RLC UM, timers with different duration are respectively configured for the at least two different RLC entities, and each timer is used by an RLC entity corresponding to the timer to detect whether an RLC PDU transmitted by an access network device is lost.

Optionally, the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.

A third aspect of the present invention provides a data transmission processing method, including: receiving, by a terminal device, configuration information transmitted by an access network device, where the configuration information is intended to map one PDCP entity of the terminal device to at least two different RLC entities; and based on types of data streams or QoS requirements of data streams, selecting, by the terminal device, different RLC entities to transmit data.

Optionally, the at least two different RLC entities respectively use an RLC AM and an RLC UM.

Optionally, the at least two different RLC entities both use an RLC AM or an RLC UM, timers with different duration are respectively configured for the at least two different RLC entities, and each timer is used by an RLC entity corresponding to the timer to detect whether an RLC PDU transmitted by the access network device is lost.

Optionally, the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.

A fourth aspect of the present invention provides a terminal device, including: a receiver, configured to receive configuration information transmitted by an access network device, where the configuration information is intended to map one PDCP entity of the terminal device to at least two different RLC entities; and a transmitter, configured to select, based on types of data streams or QoS requirements of data streams, different RLC entities to transmit data.

Optionally, the at least two different RLC entities respectively use an RLC AM and an RLC UM.

Optionally, the at least two different RLC entities both use an RLC AM or an RLC UM, timers with different duration are respectively configured for the at least two different RLC entities, and each timer is used by an RLC entity corresponding to the timer to detect whether an RLC PDU transmitted by the access network device is lost.

Optionally, the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.

A fifth aspect of the present invention provides a data transmission processing method, including: determining, by a receive end, that a value of a highest receiving state variable VR(H) is greater than a value of a receiving state variable VR(R), starting a first timer, and setting a value of a state variable VR(X), where the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; when the first timer expires, transmitting a status report, and starting a second timer, where the status report indicates a sequence number of at least one lost RLC PDU; and when the second timer expires, setting the value of the VR(R) to a sequence number of a first RLC PDU that is not received among all RLC PDUs corresponding to RLC PDU sequence numbers that are greater than or equal to the value of the VR(X), and setting the value of the VR(X) to 1 plus a sequence number corresponding to a highest RLC PDU already received when the second timer expires.

Optionally, when the first timer expires, starting a third timer, setting a value of a VR1(R) to a sequence number of a first RLC PDU that is not received among all RLC PDUs corresponding to RLC PDU sequence numbers that are greater than or equal to the value of the VR(X) that is set when the first timer is started, and setting a value of the VR1(X) to 1 plus a sequence number corresponding to a highest RLC PDU already received when the first timer expires; and when the third timer expires, setting the value of the VR(R) to a sequence number of a first RLC PDU that is not received among all RLC PDUs corresponding to RLC PDU sequence numbers that are greater than or equal to the value of the VR1(X) that is set when the third timer is started, and setting the value of the VR(X) to 1 plus a sequence number corresponding to a highest RLC PDU already received when the third timer expires.

Optionally, before the first timer expires, the receive end determines that sequence numbers of received RLC PDUs between the value of the VR(X) at the start of the first timer and a current value of the VR(H) are discontinuous, and starts a third timer, where the third timer is used by the receive end to determine whether an RLC PDU corresponding to a missing sequence number is lost.

A sixth aspect of the present invention provides a data transmission processing apparatus, including: a processor, configured to determine that a value of a highest receiving state variable VR(H) is greater than a value of a receiving state variable VR(R), start a first timer, and set a value of a state variable VR(X), where the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and a transmitter, configured to transmit a status report when the first timer expires, where the status report indicates a sequence number of at least one lost RLC PDU; where the processor is further configured to start a second timer when the first timer expires; and when the second timer expires, the processor is further configured to: set the value of the VR(R) to a sequence number of a first RLC PDU that is not received among all RLC PDUs corresponding to RLC PDU sequence numbers that are greater than or equal to the value of the VR(X), and set the value of the VR(X) to 1 plus a sequence number corresponding to a highest RLC PDU already received when the second timer expires.

Optionally, when the first timer expires, the processor is further configured to: start a third timer, set a value of a VR1(R) to a sequence number of a first RLC PDU that is not received among all RLC PDUs corresponding to RLC PDU sequence numbers that are greater than or equal to the value of the VR(X) that is set when the first timer is started, and set a value of the VR1(X) to 1 plus a sequence number corresponding to a highest RLC PDU already received when the first timer expires; and when the third timer expires, the processor is further configured to: set the value of the VR(R) to a sequence number of a first RLC PDU that is not received among all RLC PDUs corresponding to RLC PDU sequence numbers that are greater than or equal to the value of the VR1(X) that is set when the third timer is started, and set the value of the VR(X) to 1 plus a sequence number corresponding to a highest RLC PDU already received when the third timer expires.

Optionally, before the first timer expires, the processor is further configured to: determine that sequence numbers of received RLC PDUs between the value of the VR(X) at the start of the first timer and a current value of the VR(H) are discontinuous, and start a third timer, where the third timer is used by the receive end to determine whether an RLC PDU corresponding to a missing sequence number is lost.

A seventh aspect of the present invention provides a data transmission processing method, including: when determining that a value of a highest receiving state variable VR(H) is greater than a value of a receiving state variable VR(R), transmitting, by a receive end, a status report to a transmit end, starting a first timer, and setting a value of a state variable VR(X), where the status report includes status information of all RLC PDUs received by the receive end when the first timer is started, the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and when the first timer expires, setting the value of the VR(R) to a sequence number of a first RLC PDU that is unsuccessfully received among all received RLC PDUs corresponding to RLC PDU sequence numbers that are greater than or equal to the value of the VR(X) when the first timer is started, and setting the value of the VR(X) at the expiry of the first timer to the value of the VR(H) at the expiry of the first timer; or before the first timer expires, determining, by the receive end, that sequence numbers of received RLC PDUs between the value of the VR(X) at the start of the first timer and a current value of the VR(H) are discontinuous, and starting a third timer, where the third timer is used by the receive end to determine whether an RLC PDU corresponding to a missing sequence number is lost.

Optionally, the method further includes: when the first timer expires and the third timer runs, setting the value of the VR(R) to a sequence number of a first RLC PDU that is unsuccessfully received among all received RLC PDUs corresponding to RLC PDU sequence numbers that are greater than or equal to the value of the VR(X) when the third timer is started.

Optionally, the method further includes: transmitting a status report to the transmit end when the first timer or the third timer expires, where the status report includes status information of all RLC PDUs received by the receive end when the first timer or the third timer expires.

An eighth aspect of the present invention provides a data transmission processing apparatus, including: a processor, configured to: when determining that a value of a highest receiving state variable VR(H) is greater than a value of a receiving state variable VR(R), start a first timer, and set a value of a state variable VR(X), where the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and a transmitter, configured to transmit a status report to a transmit end when it is determined that the value of the highest receiving state variable VR(H) is greater than the value of the receiving state variable VR(R), where the status report includes status information of all RLC PDUs received by the receive end when the first timer is started; where when the first timer expires, the processor is further configured to: set the value of the VR(R) to a sequence number of a first RLC PDU that is unsuccessfully received among all received RLC PDUs corresponding to RLC PDU sequence numbers that are greater than or equal to the value of the VR(X) when the first timer is started, and set the value of the VR(X) at the expiry of the first timer to the value of the VR(H) at the expiry of the first timer; or before the first timer expires, the processor is further configured to determine that sequence numbers of received RLC PDUs between the value of the VR(X) at the start of the first timer and a current value of the VR(H) are discontinuous, and start a third timer, where the third timer is used by the receive end to determine whether an RLC PDU corresponding to a missing sequence number is lost.

Optionally, when the first timer expires and the third timer runs, the processor is further configured to set the value of the VR(R) to a sequence number of a first RLC PDU that is unsuccessfully received among all received RLC PDUs corresponding to RLC PDU sequence numbers that are greater than or equal to the value of the VR(X) when the third timer is started.

Optionally, the transmitter is further configured to transmit a status report to the transmit end when the first timer or the third timer expires, where the status report includes status information of all RLC PDUs received by the receive end when the first timer or the third timer expires.

A ninth aspect of the present invention provides a data transmission processing method, including: receiving, by an RLC layer of a transmit end, a discard indication used for discarding a first PDCP PDU and transmitted by a PDCP layer of the transmit end; and discarding, by the RLC layer based on the discard indication, an RLC PDU corresponding to the first PDCP PDU or an RLC SDU corresponding to the first PDCP PDU.

Optionally, the discarding, by the RLC layer based on the discard indication, an RLC SDU corresponding to the first PDCP PDU includes: if the RLC layer has not processed the first PDCP PDU, discarding, by the RLC layer based on the discard indication, the RLC SDU corresponding to the first PDCP PDU.

Optionally, the discarding, by the RLC layer based on the discard indication, an RLC PDU corresponding to the first PDCP PDU includes: if the RLC layer has performed RLC sequence numbering on the first PDCP PDU, or has generated the RLC PDU corresponding to the first PDCP PDU, or has transmitted the first PDCP PDU, discarding, by the RLC layer based on the discard indication, the RLC PDU corresponding to the first PDCP PDU, and instructing a receive end to discard a sequence number corresponding to the RLC PDU.

Optionally, the discard indication carries information for discarding the first PDCP PDU; or the discard indication is a discard timer for the first PDCP PDU, where the RLC layer starts the discard timer when receiving the first PDCP PDU and discards the first PDCP PDU when the discard timer expires.

A tenth aspect of the present invention provides a data transmission processing apparatus, including: a receiver, configured to receive a discard indication used for discarding a first PDCP PDU and transmitted by a PDCP layer of the transmit end; and a processor, configured to discard, based on the discard indication, an RLC PDU corresponding to the first PDCP PDU or an RLC SDU corresponding to the first PDCP PDU.

Optionally, that the processor is configured to discard, based on the discard indication, an RLC SDU corresponding to the first PDCP PDU specifically includes: if the first PDCP PDU has not been processed, the processor is configured to discard, based on the discard indication, the RLC SDU corresponding to the first PDCP PDU.

Optionally, that the processor is configured to discard, based on the discard indication, an RLC PDU corresponding to the first PDCP PDU specifically includes: if RLC sequence numbering has been performed on the first PDCP PDU, or the RLC PDU corresponding to the first PDCP PDU has been generated, or the first PDCP PDU has been transmitted, the processor is configured to: discard, based on the discard indication, the RLC PDU corresponding to the first PDCP PDU, and instruct a receive end to discard a sequence number corresponding to the RLC PDU.

Optionally, the discard indication carries information for discarding the first PDCP PDU; or the discard indication is a discard timer for the first PDCP PDU, where the processor is further configured to: start the discard timer when the receiver receives the first PDCP PDU and discard the first PDCP PDU when the discard timer expires.

An eleventh aspect of the present invention provides a data transmission processing method, where a base station includes a CU and a DU, and the method includes: receiving, by the DU, a discard timer transmitted by the CU for a first bearer or a first logical channel (group); and starting, by the DU, the discard timer when receiving a PDCP PDU of the first bearer or the first logical channel (group), and discarding the PDCP PDU when the discard timer expires.

Optionally, the discarding the PDCP PDU when the discard timer expires includes: if the DU has not processed the PDCP PDU, when the discard timer expires, discarding, by the DU, the RLC SDU corresponding to the PDCP PDU.

Optionally, the discarding the PDCP PDU when the discard timer expires includes: if the DU has performed RLC sequence numbering on the PDCP PDU, or has generated an RLC PDU corresponding to the PDCP PDU, or has transmitted the PDCP PDU, when the discard timer expires, discarding, by the DU, the RLC PDU corresponding to the PDCP PDU, and instructing a terminal device to discard a sequence number corresponding to the RLC PDU.

A twelfth aspect of the present invention provides a data transmission processing apparatus, including: a receiver, configured to receive a discard timer transmitted by a CU for a first bearer or a first logical channel (group); and a processor, configured to: start the discard timer when the receiver receives a PDCP PDU of the first bearer or the first logical channel (group), and discard the PDCP PDU when the discard timer expires.

Optionally, that the processor is configured to discard the PDCP PDU when the discard timer expires specifically includes: if the PDCP PDU has not been processed, when the discard timer expires, the processor is configured to discard the RLC SDU corresponding to the PDCP PDU.

Optionally, that the processor is configured to discard the PDCP PDU when the discard timer expires specifically includes: if RLC sequence numbering has been performed on the PDCP PDU, or an RLC PDU corresponding to the PDCP PDU has been generated, or the PDCP PDU has been transmitted, when the discard timer expires, the processor is configured to discard the RLC PDU corresponding to the PDCP PDU; and the data transmission processing apparatus further includes a transmitter, configured to instruct a terminal device to discard a sequence number corresponding to the RLC PDU.

A thirteenth aspect of the present invention provides a data transmission processing method, where a base station includes a CU and a DU, and the method includes: receiving, by the DU, QoS parameter information used for discarding a first PDCP PDU and transmitted by the CU; and discarding, by the DU based on the discard indication, an RLC PDU corresponding to the first PDCP PDU or an RLC SDU corresponding to the first PDCP PDU.

Optionally, the discarding, by the DU based on the discard indication, an RLC SDU corresponding to the first PDCP PDU includes: if the DU has not processed the first PDCP PDU, discarding, by the DU based on the discard indication, the RLC SDU corresponding to the first PDCP PDU.

Optionally, the discarding, by the DU based on the discard indication, an RLC PDU corresponding to the first PDCP PDU includes: if the DU has performed RLC sequence numbering on the first PDCP PDU, or has generated the RLC PDU corresponding to the first PDCP PDU, or has transmitted the first PDCP PDU, discarding, by the DU based on the discard indication, the RLC PDU corresponding to the first PDCP PDU, and instructing a terminal device to discard a sequence number corresponding to the RLC PDU.

Optionally, the discard indication carries information for discarding the first PDCP PDU; or the discard indication is a discard timer for the first PDCP PDU, where the DU starts the discard timer when receiving the first PDCP PDU and discards the first PDCP PDU when the discard timer expires.

A fourteenth aspect of the present invention provides a data transmission processing apparatus, including: a receiver, configured to receive a discard indication used for discarding a first PDCP PDU and transmitted by a distributed unit CU; and a processor, configured to discard, based on the discard indication, an RLC PDU corresponding to the first PDCP PDU or an RLC SDU corresponding to the first PDCP PDU.

Optionally, that the processor is configured to discard, based on the discard indication, an RLC SDU corresponding to the first PDCP PDU specifically includes: if the first PDCP PDU has not been processed, the processor is configured to discard, based on the discard indication, the RLC SDU corresponding to the first PDCP PDU.

Optionally, that the processor is configured to discard, based on the discard indication, an RLC PDU corresponding to the first PDCP PDU specifically includes: if RLC sequence numbering has been performed on the first PDCP PDU, or the RLC PDU corresponding to the first PDCP PDU has been generated, or the first PDCP PDU has been transmitted, the processor is configured to discard, based on the discard indication, the RLC PDU corresponding to the first PDCP PDU; and the data transmission processing apparatus further includes a transmitter, configured to instruct a terminal device to discard a sequence number corresponding to the RLC PDU.

Optionally, the discard indication carries information for discarding the first PDCP PDU; or the discard indication is a discard timer for the first PDCP PDU, where the processor is configured to: start the discard timer when the receiver receives the first PDCP PDU and discard the first PDCP PDU when the discard timer expires.

A fifteenth aspect of the present invention provides a data transmission processing method, where a base station includes a CU and a DU, and the method includes: receiving, by the DU, QoS parameter information of a first bearer or a first logical channel (group) that is transmitted by the CU, where the QoS parameter information includes at least one of the following: a guaranteed bit rate, a scheduling priority, a latency allowed for buffering, a prioritized bit rate PBR (Prioritized Bit Rate), and token bucket duration BSD (Bucket Size Duration); and managing, by the DU based on the QoS parameter information, data transmission on the first bearer or the first logical channel (group).

Optionally, the discarding, by the DU based on the latency allowed for buffering, an RLC SDU corresponding to the first PDCP PDU includes: if the DU has not processed the first PDCP PDU, discarding, by the DU based on the discard indication, the RLC SDU corresponding to the first PDCP PDU. For example, a maximum transmission latency at a PDCP layer or an RLC layer.

Optionally, based on the guaranteed bit rate or the scheduling priority, the DU schedules and transmits an uplink or downlink data packet on the bearer.

The data transmission processing method and apparatus, and terminal device described in the foregoing aspects improve reliability while ensuring service transmission quality.

### BRIEF DESCRIPTION OF DRAWINGS

FIG. 1 is a schematic structural diagram of a UMTS communications system in the prior art;
FIG. 2 is a schematic architecture diagram of an evolved packet core network in the prior art;
FIG. 3 is a schematic structural diagram of a gNB using a CU-DU architecture in the prior art;
FIG. 4 is a schematic diagram of a communications system according to an embodiment of the present invention;
FIG. 5 is a schematic structural diagram of another communications system according to another embodiment of the present invention;
FIG. 6 is a schematic structural diagram of another communications system according to another embodiment of the present invention;
FIG. 7 is a schematic flowchart of another data transmission processing method according to another embodiment of the present invention;
FIG. 8 is a schematic structural diagram of another communications system according to another embodiment of the present invention;
FIG. 9 is another schematic diagram of video data transmission according to another embodiment of the present invention;
FIG. 10 is a schematic flowchart of another data transmission processing method according to another embodiment of the present invention;
FIG. 11 is a schematic structural diagram of another communications system according to another embodiment of the present invention;
FIG. 12 is a schematic flowchart of another data transmission processing method according to another embodiment of the present invention;
FIG. 13 is a schematic diagram of a data status in a data transmission process according to another embodiment of the present invention;
FIG. 14 is a schematic diagram of a data status in a data transmission process according to another embodiment of the present invention;
FIG. 15 is a schematic structural diagram of another data transmission processing apparatus according to another embodiment of the present invention;
FIG. 16 is a schematic flowchart of another data transmission processing method according to another embodiment of the present invention;
FIG. 17 is a schematic diagram of a data status in a data transmission process according to another embodiment of the present invention;
FIG. 18 is a schematic structural diagram of another data transmission processing apparatus according to another embodiment of the present invention;
FIG. 19 is a schematic flowchart of another data transmission processing method according to another embodiment of the present invention;
FIG. 20 is a schematic structural diagram of another data transmission processing apparatus according to another embodiment of the present invention;
FIG. 21 is a schematic flowchart of another data transmission processing method according to another embodiment of the present invention;
FIG. 22 is a schematic structural diagram of another data transmission processing apparatus according to another embodiment of the present invention;
FIG. 23 is a schematic flowchart of another data transmission processing method according to another embodiment of the present invention;
FIG. 24 is a schematic flowchart of another data transmission processing method according to another embodiment of the present invention;
FIG. 25 is a schematic structural diagram of another data transmission processing apparatus according to another embodiment of the present invention;
FIG. 26 is a schematic flowchart of another data transmission processing method according to another embodiment of the present invention; and
FIG. 27 is a schematic structural diagram of another data transmission processing apparatus according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

"First", "second", or the like mentioned in this specification does not indicate any order, quantity, or importance, but is used only for distinguishing between different components. Likewise, "a/an", "one", or the like does not indicate a quantity limitation either, but is intended to indicate that at least one exists. "Connection", "link", or the like is not limited to a physical or mechanical connection, but may include an electrical connection, whether directly or indirectly.

A "module" mentioned in this specification is usually a program or an instruction that is stored in a memory and can implement some functions. A "unit" mentioned in this specification is usually a functional structure divided according to logic. The "unit" may be implemented by only hardware, or implemented by a combination of software and hardware.

In this specification, "a plurality of" means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

Technologies described in this specification may be used in various communications systems such as current 2G, 3G, and 4G communications systems and new radio access networks, for example, a GSM system, a CDMA system, a TDMA system, a WCDMA system, an FDMA system, an OFDMA system, an SC-FDMA system, a GPRS system, an LTE system, a UMTS network, a new radio access network, and other similar communications systems. The new radio access network can provide a higher transmission rate than an LTE network. The new radio access network is also referred to as a 5G network, a next generation network, or the like.

Various aspects are described in this specification with reference to a receive end and/or a base station and/or a base station controller.

A terminal device (Terminal Device) may be a wireless terminal or a wired terminal. The wireless terminal may be a device that provides a receive end with voice and/or data connectivity, a handheld device having a wireless connection function, or another processing device connected to a wireless modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, the wireless terminal may be a device such as a personal communication service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile (Mobile) console, a remote station (Remote Station), an access point (Access Point), a remote terminal (Remote Terminal), an access terminal (Access Terminal), a user terminal (User Terminal), user equipment (User Equipment), or a user agent (User Agent).

The base station (namely, a node) may be a device that communicates with the wireless terminal over an air interface in an access network by using one or more sectors. The base station may be configured to mutually convert a received over-the-air frame and an IP packet and serve as a router between the wireless terminal and another part of the access network, where the another part of the access network may include an Internet protocol (IP) network. The base station may further coordinate attribute management of the air interface. For example, the base station may be a base transceiver station (Base Transceiver Station, BTS) in the GSM system or the CDMA system, or may be a NodeB (NodeB) in the WCDMA system, or may be an evolved NodeB (eNodeB or eNB or e-NodeB) in the LTE system, or may be an access network device in the new radio access network. This is not limited in this application. The access network device in the new radio access network is also referred to as a gNB (gNB), an NR Node (node), or an NR BS (base station, Base Station). This is not limited. However, for ease of description, they are collectively referred to as the gNB in this specification.

The base station controller (namely, a control node) may be a base station controller (base station controller, BSC) in the GSM system or the CDMA system, or may be a radio network controller (Radio Network Controller, RNC) in WCDMA. This is not limited in this application.

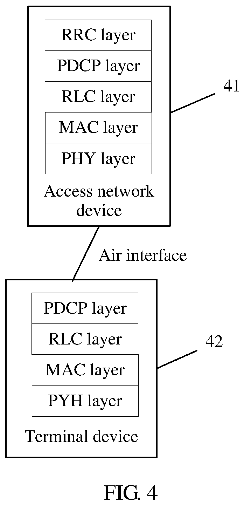

FIG. 4 is a schematic diagram of a communications system according to an embodiment of the present invention. The communications system includes an access network device 41 and a terminal device 42. The communications system may be a 2G, 3G, or 4G communications system, or a new radio access network, for example, a GSM system, a CDMA system, a TDMA system, a WCDMA system, an FDMA system, an OFDMA system, an SC-FDMA system, a GPRS system, an LTE system, a UMTS network, a new radio access network, and other similar communications systems. The new radio access network can provide a higher transmission rate than an LTE network. The new radio access network is also referred to as a 5G network, a next generation network, or the like. Therefore, the access network device 41 may be a base station in the 2G, 3G, or 4G communications system, or may be a gNB in a 5G communications system.

The access network device 41 includes a three-layer structure. A layer 1 is a physical layer (PHY layer), a layer 2 is a media access control layer (MAC layer), a radio link control layer (RLC layer), and a packet data convergence protocol layer (PDCP layer), and a layer 3 is a radio resource control layer (RRC layer). The PHY layer is a lowest layer in a radio access system. The PHY layer uses a transmission channel as an interface to provide a service for an upper layer. At the PHY layer, the MAC layer, the RLC layer, the PDCP layer, and the RRC layer of the access network device 41, a receiving entity and a transmitting entity are disposed for each bearer and are respectively configured to receive and transmit data. However, for ease of description, transmission or reception by each layer is described in the following description.

Data received by the access network device 41 from the terminal device 42 is processed sequentially at the PHY layer, the MAC layer, the RLC layer, the PDCP layer, and the RRC layer of the access network device 41. For example, after the PHY layer of the access network device 41 receives the data (Data) transmitted by the terminal device 42, in the access network device 41, the PHY layer processes the received data into a PHY service data unit (Service Data Unit, SDU), and the PHY layer transmits the PHY SDU to the MAC layer. The MAC layer receives the PYH SDU and then processes the PYH SDU into a MAC SDU, and the MAC layer transmits the MAC SDU to the RLC layer. The RLC layer receives the MAC SDU and then processes the MAC SDU into an RLC SDU, and the RLC layer transmits the RLC SDU to the PDCP layer. The PDCP layer receives the RLC SDU and then processes the RLC SDU into PDCP SDU signaling and PDCP SDU data, the PDCP layer transmits the PDCP SDU signaling to the RRC layer for control layer processing, and the PDCP layer transmits the PDCP SDU data to a core network.

Data transmitted by the access network device 41 is processed sequentially at the PDCP layer, the RLC layer, the MAC layer, and the PHY layer and then transmitted to the terminal device 42. For example, in the access network device 41, the PDCP layer processes the data into a PDCP protocol data unit (Protocol Data Unit, PDU) and then transmits the PDCP PDU to the RLC layer. The RLC layer receives the PDCP PDU and then processes the PDCP PDU into an RLC PDU, and the RLC layer transmits the RLC PDU to the MAC layer. The MAC layer receives the RLC PDU and then processes the RLC PDU into a MAC PDU, and the MAC layer transmits the MAC PDU to the PHY layer. The PHY layer receives the MAC PDU and then processes the MAC PDU into a PHY PDU, and the PHY layer transmits the PHY PDU to the terminal device 42.

The terminal device 42 includes a PHY layer, a MAC layer, an RLC layer, and a PDCP layer. At each layer included in the terminal device 42, a receiving entity and a transmitting entity are disposed for each bearer and are respectively configured to receive and transmit data. However, for ease of description, transmission or reception by each layer is described in the following description.

Data received by the terminal device 42 from the access network device 41 is processed sequentially at the PDCP layer, the RLC layer, the MAC layer, and the PHY layer of the terminal device 42. For example, after the PDCP layer of the terminal device 42 receives a PHY PDU transmitted by the access network device 41, in the terminal device 42, the PDCP layer processes the received PHY PDU into a PDCP PDU and then transmits the PDCP PDU to the RLC layer. The RLC layer receives the PDCP PDU and then processes the PDCP PDU into an RLC PDU, and the RLC layer transmits the RLC PDU to the MAC layer. The MAC layer receives the RLC PDU and then processes the RLC PDU into a MAC PDU, and the MAC layer transmits the MAC PDU to the PHY layer. The PHY layer receives the MAC PDU and then processes the MAC PDU into a PHY PDU, and the PHY layer transmits the PHY PDU to a processor in the terminal device 42 for processing.

Before the terminal device 42 transmits data to the access network device 41, the data is processed sequentially at the PHY layer, the MAC layer, the RLC layer, and the PDCP layer of the terminal device 42. In the terminal device 42, the PHY layer processes the data into a PHY SDU and then transmits the PHY SDU to the MAC layer. The MAC layer receives the PYH SDU and then processes the PYH SDU into a MAC SDU, and the MAC layer transmits the MAC SDU to the RLC layer. The RLC layer receives the MAC SDU and then processes the MAC SDU into an RLC SDU, and the RLC layer transmits the RLC SDU to the PDCP layer. The PDCP layer receives the RLC SDU and then processes the RLC SDU into a PDCP SDU, and the PDCP layer transmits the PDCP SDU to the access network device 41.

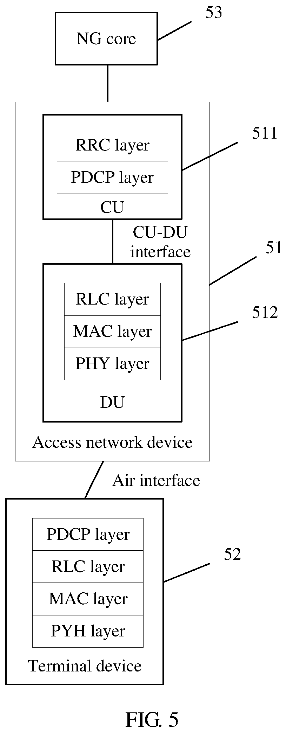

FIG. 5 is a schematic structural diagram of a communications system according to another embodiment of the present invention. The communications system is a 5G communications system or a next generation communications system, and includes an access network device 51, a terminal device 52, and a next generation core network (NG Core) 53. For example, the access network device 51 is a 5G gNB. The access network device 51 includes a centralized unit (CU) 511 and a distributed unit (DU) 512. The CU 511 communicates with the DU 512 wiredly or wirelessly. The DU 512 communicates with the terminal device 52 by using an air interface. Functions of the RRC layer and the PDCP layer are located on the CU 511. Functions of the RLC layer, the MAC layer, and the PHY layer are located on the DU 512.

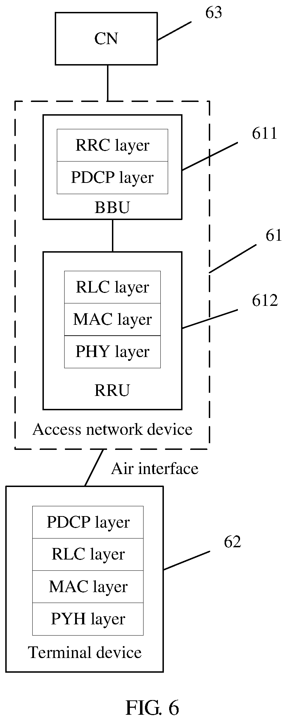

FIG. 6 is a schematic structural diagram of a communications system according to another embodiment of the present invention. The communications system is a 3G or 4G communications system, and includes an access network device 61, a terminal device 62, and a core network (Core Network, CN) 53. For example, the access network device 61 is a distributed base station in the 3G or 4G communications system. The access network device 61 may include a radio remote unit (Radio Remote Unit, RRU) 611 and a baseband processing unit (Building Baseband Unit, BBU) 612. The RRU 611 communicates with the BBU 612 wiredly or wirelessly. The RRU 611 communicates with the terminal device 62 by using an air interface. Functions of an RRC layer and a PDCP layer are located on the BBU 611. Functions of an RLC layer, a MAC layer, and a PHY layer are located on the RRU 612.

For a process of data transmission between the access network device and the terminal device at each layer in the embodiments in FIG. 5 and FIG. 6, refer to the content described in the embodiment in FIG. 4. Details are not described again herein.

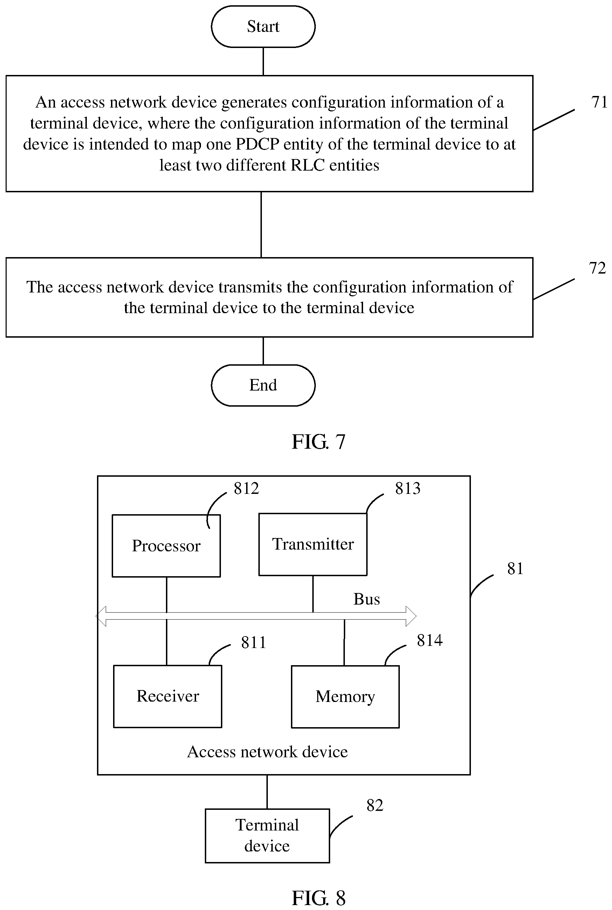

FIG. 7 is a schematic flowchart of a data transmission processing method according to an embodiment of the present invention. The data transmission processing method in this embodiment is performed by an access network device. The access network device may be a base station in a 2G, 3G, 4G, or 5G communications system. A main process is described as follows:

Step 71: The access network device generates configuration information of a terminal device, where the configuration information of the terminal device is intended to map one PDCP entity of the terminal device to at least two different RLC entities.

Step 72: The access network device transmits the configuration information of the terminal device to the terminal device.

For example, the access network device configures a correspondence between one PDCP entity of the terminal device and at least two different RLC entities. For example, one radio bearer (Radio Bearer, RB) or logical channel (Logical Channel, LCH) corresponds to one RLC entity. Based on types of data streams or quality of service (Quality of Service, QoS) requirements of data streams, the PDCP entity of the terminal device selects different RLC entities to transmit data.

In another embodiment of the present invention, if one PDCP entity uses at least two logical channels, different LCHs of a UM RLC entity or an AM RLC entity have different priorities. In an uplink buffer status report (Buffer Status Report, BSR) of the terminal device, an amount of data to be transmitted by the AM RLC entity is preferentially reported, or amounts of data to be transmitted by using the LCHs are reported in descending order of the priorities of the LCHs.

In another embodiment of the present invention, the at least two different RLC entities both use an RLC AM or an RLC UM, timers with different duration (which may be referred to as t-reordering timers or reassembly and segmentation timers) are respectively configured for the at least two different RLC entities, and each t-reordering timer or each reassembly and segmentation timer is used by a receive end of an RLC entity using the RLC AM or the RLC UM in the terminal device, to detect whether an RLC PDU transmitted by the access network device is lost. For example, one RLC entity corresponding to the PDCP entity of the terminal device finds that an RLC PDU transmitted by the access network device is unsuccessfully received. Therefore, the RLC entity starts a t-reordering timer or a reassembly and segmentation timer configured for the RLC entity. When the t-reordering timer or the reassembly and segmentation timer expires, the terminal device is triggered to transmit a status report to the access network device. The status report includes status information of all RLC PDUs received by the receive end when the t-reordering timer or the reassembly and segmentation timer expires, for example, includes a sequence number (Sequence Number, SN) of an RLC PDU that is transmitted by the access network device but not received, and/or includes a sequence number of a successfully received RLC PDU transmitted by the access network device. For example, the receive end of the RLC entity using the RLC AM determines whether the RLC PDU not received is received when the t-reordering timer or the reassembly and segmentation timer expires. When the t-reordering timer or the reassembly and segmentation timer expires, if the RLC entity has not received the unsuccessfully received RLC PDU, the terminal device determines that the RLC PDU transmitted by the access network device is lost, and then transmits a status report to the access network device. The status report includes status information of all RLC PDUs received by the receive end when the t-reordering timer or the reassembly and segmentation timer expires, for example, includes the sequence number of the RLC PDU that is transmitted by the access network device but not received. It should be understood that, alternatively, the timer used by the RLC entity using the RLC AM or the RLC UM may be a timer used to wait for a segmented RLC PDU for assembly. For a UM RLC PDU, no status report is triggered. In another embodiment of the present invention, the at least two different RLC entities both use an RLC AM, a timer (which may be referred to as a continue-to-wait timer) is configured for at least one of the at least two different RLC entities, and each continue-to-wait timer is used by an RLC entity corresponding to the timer to continue to wait for receiving an RLC PDU that is transmitted by the access network device but not received as indicated by a status report transmitted by the terminal device. For example, for the RLC entity for which the continue-to-wait timer is configured, the terminal device transmits a status report to the access network device when a t-reordering timer or a reassembly and segmentation timer expires, or based on a status report transmission request transmitted by the access network device, starts the continue-to-wait timer configured for the RLC entity, continues to receive, within duration of the continue-to-wait timer, the RLC PDU that is not received, and determines whether the RLC PDU not received can be received before the continue-to-wait timer expires. The status report includes status information of all data packets received when the t-reordering timer or the reassembly and segmentation timer expires or when the status report transmission request is received, for example, includes a sequence number of the RLC PDU that is transmitted by the access network device but not received. Optionally, when the continue-to-wait timer expires, if the RLC entity for which the continue-to-wait timer is configured still has not received the RLC PDU that is not received, the terminal device determines that the RLC PDU transmitted by the access network device is lost, and transmits a latest status report to the access network device. The latest status report includes status information of all RLC PDUs received by the receive end when the continue-to-wait timer expires.

In another embodiment of the present invention, when a continue-to-wait timer expires, the terminal device pushes a receive window, and no longer waits for one or more RLC PDUs that are not received and are still not received within the continue-to-wait timer among RLC PDUs that trigger a t-reordering timer or a reassembly and segmentation timer last time, to receive an RLC PDU transmitted by the access network device next time. The terminal device notifies the access network device that the terminal device has pushed the window. For detailed descriptions about window pushing, refer to a window pushing embodiment described later.

In another embodiment of the present invention, the access network device configures a first maximum quantity of retransmission times for at least one AM RLC entity of the terminal device. After transmitting an RLC PDU, the AM RLC entity of the terminal device receives a NACK transmitted by the access network device, and then retransmits the RLC PDU. If the RLC PDU is still unsuccessfully transmitted after the retransmission reaches the first maximum quantity of retransmission times, the retransmitted RLC PDU is discarded, and the terminal device does not instruct the access network device to trigger RLC reconstruction, that is, that the retransmission reaches the first maximum quantity of retransmission times is not used as a basis for determining a radio link failure (Radio Link Failure, RLF).

In another embodiment of the present invention, the access network device configures a second maximum quantity of retransmission times for at least one AM RLC entity of the terminal device. After transmitting an RLC PDU, the AM RLC entity of the terminal device receives a NACK transmitted by the access network device, and then retransmits the RLC PDU. If the RLC PDU is still unsuccessfully transmitted after the retransmission is performed the second maximum quantity of retransmission times, the retransmitted RLC PDU is discarded, and the terminal device instructs the access network device to trigger RLC reconstruction. Optionally, the second maximum quantity of retransmission times is greater than or equal to the first maximum quantity of retransmission times.

In another embodiment of the present invention, if one PDCP entity uses at least two AM RLC entities, at least one RLC entity supports non-triggering of RLC reconstruction when retransmission reaches the first maximum quantity of retransmission times. In the foregoing embodiment, one PDCP entity of the terminal device is mapped to at least two different RLC entities. Therefore, based on types or quality of service (Quality of Service, QoS) requirements of data streams, the PDCP entity of the terminal device may select different RLC entities to transmit data. This ensures normal transmission of different services, and improves reliability while ensuring service experience.

FIG. 8 is a schematic structural diagram of a communications system according to an embodiment of the present invention. The communications system includes an access network device 81 and a terminal device 82. The access network device communicates with the terminal device by using an air interface. The access network device may be a 2G/3G/4G base station or a gNB in a 5G communications system. The access network device includes a receiver 811, a processor 812, a transmitter 813, and a memory 814. The receiver 811, the processor 812, the transmitter 813, and the memory 814 communicate with each other by using a bus.

In this embodiment of this application, the processor 812 may be an erasable programmable logic device (Erasable Programmable Logic Device, EPLD), a field programmable gate array (Field Programmable Gate Array, FPGA), a digital signal processor (Digital Signal Processor, DSP) chip, an application-specific integrated circuit (Application-Specific Integrated Circuit, ASIC) or another programmable logic device, a discrete gate or transistor logic device, a discrete hardware component, or the like.

The memory 814 is configured to store code or instruction information, and may further store information about a device type. The memory 814 may include a read-only memory (Read-Only Memory, ROM) and a random access memory (Random Access Memory, RAM), and is configured to provide an instruction and data for the processor 812. A part of the memory 814 may further include a non-volatile random access memory.

The receiver 811 is configured to receive data transmitted by the terminal device or a core network.

The processor 812 is configured to generate configuration information of the terminal device, where the configuration information of the terminal device is intended to map one PDCP entity of the terminal device to at least two different RLC entities.

The transmitter 813 is configured to transmit the configuration information of the terminal device to the terminal device.

For example, the processor 812 configures a correspondence between one PDCP entity of the terminal device and at least two different RLC entities. For example, one RB or LCH corresponds to one RLC entity. Based on types of data streams or quality of service QoS requirements of data streams, the PDCP entity of the terminal device selects different RLC entities to transmit data.

In another embodiment of the present invention, if one PDCP entity uses at least two logical channels, different LCHs of a UM RLC entity or an AM RLC entity have different priorities. In an uplink BSR of the terminal device, an amount of data to be transmitted by the AM RLC entity is preferentially reported to the receiver 811, or amounts of data to be transmitted by using the LCHs are reported to the receiver 811 in descending order of the priorities of the LCHs.

In another embodiment of the present invention, the at least two different RLC entities both use an RLC AM or an RLC UM, timers with different duration (which may be referred to as t-reordering timers or reassembly and segmentation timers) are respectively configured for the at least two different RLC entities, and each t-reordering timer or each reassembly and segmentation timer is used by a receive end of an RLC entity using the RLC AM or the RLC UM in the terminal device, to detect whether an RLC PDU transmitted by the access network device is lost. For example, one RLC entity corresponding to the PDCP entity of the terminal device finds that an RLC PDU transmitted by the access network device is unsuccessfully received. Therefore, the RLC entity starts a t-reordering timer or a reassembly and segmentation timer configured for the RLC entity. When the t-reordering timer or the reassembly and segmentation timer expires, the terminal device is triggered to transmit a status report to the receiver 811 of the access network device. The status report includes status information of all RLC PDUs received by the receive end when the t-reordering timer or the reassembly and segmentation timer expires, for example, includes a sequence number of a lost RLC PDU transmitted by the transmitter 813 of the access network device, and/or includes a sequence number of a successfully received RLC PDU transmitted by the transmitter 813 of the access network device. For example, the receive end of the RLC entity using the RLC AM or the RLC UM determines whether the RLC PDU not received is received when the t-reordering timer or the reassembly and segmentation timer expires. When the t-reordering timer or the reassembly and segmentation timer expires, if the RLC entity has not received the RLC PDU that is not received, the terminal device determines that the RLC PDU transmitted by the transmitter 813 of the access network device is lost, and then transmits a status report to the receiver 811 of the access network device. The status report includes status information of all RLC PDUs received by the receive end when the t-reordering timer or the reassembly and segmentation timer expires, for example, includes the sequence number of the RLC PDU that is transmitted by the transmitter 813 but not received.

In another embodiment of the present invention, the at least two different RLC entities both use an RLC AM, a timer (which may be referred to as a continue-to-wait timer) is configured for at least one of the at least two different RLC entities, and each continue-to-wait timer is used by an RLC entity corresponding to the timer to continue to wait for an RLC PDU that is transmitted by the transmitter 813 of the access network device but not received as indicated by a status report transmitted by the terminal device. For example, for the RLC entity for which the continue-to-wait timer is configured, the terminal device transmits a status report to the receiver 811 of the access network device when a t-reordering timer or a reassembly and segmentation timer expires, or based on a status report transmission request transmitted by the transmitter 813 of the access network device, starts the continue-to-wait timer configured for the RLC entity, continues to receive, within duration of the continue-to-wait timer, the RLC PDU that is not received, and determines whether the RLC PDU not received can be received before the continue-to-wait timer expires. The status report includes status information of all data packets received when the t-reordering timer or the reassembly and segmentation timer expires or when the status report transmission request is received, for example, includes a sequence number of the RLC PDU that is transmitted by the transmitter 813 but not received. When the continue-to-wait timer expires, if the RLC entity for which the continue-to-wait timer is configured still has not received the RLC PDU that is not received, the terminal device determines that the RLC PDU transmitted by the transmitter 813 is lost, and transmits a latest status report to the receiver 811. The latest status report includes status information of all RLC PDUs received by the receive end when the continue-to-wait timer expires.

In another embodiment of the present invention, when a continue-to-wait timer expires, the terminal device pushes a receive window to receive an RLC PDU transmitted by the access network device next time. The terminal device notifies the access network device that the terminal device has pushed the window. For detailed descriptions about window pushing, refer to a window pushing embodiment described later.

In another embodiment of the present invention, the processor 812 configures a first maximum quantity of retransmission times for an AM RLC entity of the terminal device. After transmitting an RLC PDU, the AM RLC entity of the terminal device receives a NACK transmitted by the transmitter 813 of the access network device, and then retransmits the RLC PDU. If the RLC PDU is still unsuccessfully transmitted after the retransmission reaches the first maximum quantity of retransmission times, the retransmitted RLC PDU is discarded, and the terminal device does not instruct the access network device to trigger RLC reconstruction, that is, that the retransmission reaches the first maximum quantity of retransmission times is not used as a basis for determining an RLF.

In another embodiment of the present invention, the processor 812 configures a second maximum quantity of retransmission times for an AM RLC entity of the terminal device. After transmitting an RLC PDU, the AM RLC entity of the terminal device receives a NACK transmitted by the transmitter 813 of the access network device, and then retransmits the RLC PDU. If the RLC PDU is still unsuccessfully transmitted after the retransmission is performed the second maximum quantity of retransmission times, the retransmitted RLC PDU is discarded, and the terminal device instructs the processor 812 of the access network device to trigger RLC reconstruction.

In the foregoing embodiment, one PDCP entity of the terminal device is mapped to at least two different RLC entities. Therefore, based on types or QoS requirements of data streams, the PDCP entity of the terminal device may select different RLC entities to transmit data. This ensures normal transmission of different services, and improves reliability while ensuring service experience.

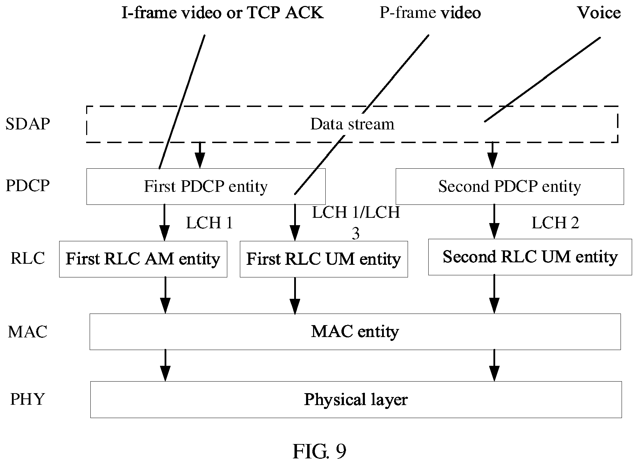

FIG. 9 is a schematic diagram of video data transmission according to another embodiment of the present invention. In this embodiment, the video data stream (Video packet) includes an I-frame and a P-frame, and the at least two different RLC entities respectively use an RLC AM and an RLC UM.

A terminal device includes a PHY layer, a MAC layer, an RLC layer, and a PDCP layer. For example, the access network device configures a correspondence between one RB and at least one RLC entity or a correspondence between one LCH and at least one RLC entity in one PDCP entity of the terminal device. For example, an LCH 1 of a first PDCP entity corresponds to a first AM RLC entity using an RLC AM, the LCH 1 or an LCH 3 of the first PDCP entity corresponds to a first UM RLC entity using an RLC UM, and an LCH 2 of a second PDCP entity corresponds to a second UM RLC entity using the RLC UM. Based on types or QoS requirements of data streams, the first PDCP entity selects different RLC entities to transmit data. For example, the first PDCP entity may obtain the information based on a manner in which an application layer instructs an access stratum or on a basis that an access stratum parses a feature of an application layer data packet. For example, control signaling such as an I-frame, an important P-frame, or application layer RSTP is transmitted by the RLC entity using the RLC AM, a normal P-frame is transmitted by the first UM RLC entity using the RLC UM, and a voice service (Voice service) is transmitted by the second UM RLC entity corresponding to the second PDCP entity.

In another embodiment of the present invention, when one RB corresponds to at least one RLC entity in an LTE system, PDCP determines, based on a feature or a QoS parameter of an IP stream, a correspondence between the IP stream and an RB, and transmits an IP data packet to the corresponding RB. In a next generation system, SDAP responsible for performing mapping between an IP stream and an RB transmits an IP data packet to a corresponding RB based on a feature or a QoS parameter of the IP stream.

In another embodiment of the present invention, the LCH 1, the LCH 2, and the LCH 3 have different priorities. For example, a priority of the LCH 1 is higher than a priority of the LCH 2, and the priority of the LCH 2 is higher than a priority of the LCH 3. In an uplink BSR of the terminal device, an amount of data to be transmitted by the first AM RLC entity is preferentially reported, or amounts of data to be transmitted by using the LCHs are reported in descending order of the priorities of the LCHs.

In another embodiment of the present invention, t-reordering timers or reassembly and segmentation timers with different duration are respectively configured for the first AM RLC entity, the first UM RLC entity, and the second UM RLC entity, and each t-reordering timer or reassembly and segmentation timer is used by a receive end of a corresponding RLC entity to detect whether an RLC PDU transmitted by the access network device is lost. For example, the first AM RLC entity finds that an I-frame RLC PDU transmitted by the access network device is not received. Therefore, the first AM RLC entity starts a t-reordering timer or a reassembly and segmentation timer configured for the first AM RLC entity. When the t-reordering timer or the reassembly and segmentation timer expires, the terminal device is triggered to transmit a status report to the access network device. The status report includes status information of all RLC PDUs received by the receive end when the t-reordering timer or the reassembly and segmentation timer expires, for example, includes a sequence number of the lost I-frame RLC PDU, and/or includes a sequence number of the successfully received I-frame RLC PDU. For example, the receive end of the first AM RLC entity determines whether the I-frame RLC PDU not received is received when the t-reordering timer or the reassembly and segmentation timer expires. If the first AM RLC entity has not received the I-frame RLC PDU that is not received, the terminal device determines that the I-frame RLC PDU transmitted by the access network device is lost, and then transmits a status report to the access network device. The status report includes status information of all RLC PDUs received by the receive end when the t-reordering timer or the reassembly and segmentation timer expires, for example, includes the sequence number of the I-frame RLC PDU that is transmitted by the access network device but not received.

In another embodiment of the present invention, the PDCP entity corresponds to at least two AM RLC entities that both use the RLC AM. For example, one AM RLC entity is configured to transmit an I-frame RLC PDU, the other AM RLC entity is configured to transmit a P-frame RLC PDU, and a continue-to-wait timer is configured for at least one of the at least two AM RLC entities. Each continue-to-wait timer is used by an AM RLC entity corresponding to the timer to continue to wait for an RLC PDU that is transmitted by the access network device but not received as indicated by a status report transmitted by the terminal device. For example, for the AM RLC entity for which the continue-to-wait timer is configured, the terminal device transmits a status report to the access network device when a t-reordering timer or a reassembly and segmentation timer expires, or based on a status report transmission request transmitted by the access network device, starts the continue-to-wait timer configured for the RLC entity, continues to receive, within duration of the continue-to-wait timer, the RLC PDU that is not received, and determines whether the RLC PDU not received can be received before the continue-to-wait timer expires. The status report includes status information of all RLC PDUs received by the receive end when the t-reordering timer or the reassembly and segmentation timer expires, for example, includes a sequence number of the RLC PDU that is transmitted by the access network device but not received. When the continue-to-wait timer expires, if the AM RLC entity of the terminal device still has not received the RLC PDU that is not received, the terminal device determines that the RLC PDU transmitted by the access network device is lost, and optionally transmits a latest status report or window moving indication information to the access network device. The latest status report includes status information of all RLC PDUs received by the receive end when the continue-to-wait timer expires. The window moving indication information is used to indicate a sequence number of the lost RLC PDU that is no longer received, or indicate a sequence number of a next RLC PDU packet that the receive end expects to receive.

In another embodiment of the present invention, when a continue-to-wait timer expires, the terminal device pushes a receive window to receive an RLC PDU transmitted by the access network device next time. The terminal device notifies the access network device that the terminal device has pushed the window. For detailed descriptions about window pushing, refer to a window pushing embodiment described later.

In another embodiment of the present invention, the access network device configures a first maximum quantity of retransmission times for the first AM RLC entity of the terminal device. After transmitting an RLC PDU, the first AM RLC entity receives a NACK transmitted by the access network device, and then retransmits the RLC PDU. If the RLC PDU is still unsuccessfully transmitted after the retransmission reaches the first maximum quantity of retransmission times, the retransmitted RLC PDU is discarded, and the terminal device does not instruct the access network device to trigger RLC reconstruction, that is, that the retransmission reaches the first maximum quantity of retransmission times is not used as a basis for determining an RLF. Optionally, the terminal device transmits a latest status report or window moving indication information to the access network device. The window moving indication information is used to indicate sequence numbers of one or more lost RLC PDU packets that are no longer received, or indicate a sequence number of a next RLC PDU packet whose reception is expected.

In another embodiment of the present invention, the access network device configures a second maximum quantity of retransmission times for the first AM RLC entity of the terminal device. After transmitting an RLC PDU, the first AM RLC entity receives a NACK transmitted by the access network device, and then retransmits the RLC PDU. If the RLC PDU is still unsuccessfully transmitted after the retransmission is performed the second maximum quantity of retransmission times, the retransmitted RLC PDU is discarded, and the terminal device instructs the access network device to trigger RLC reconstruction.

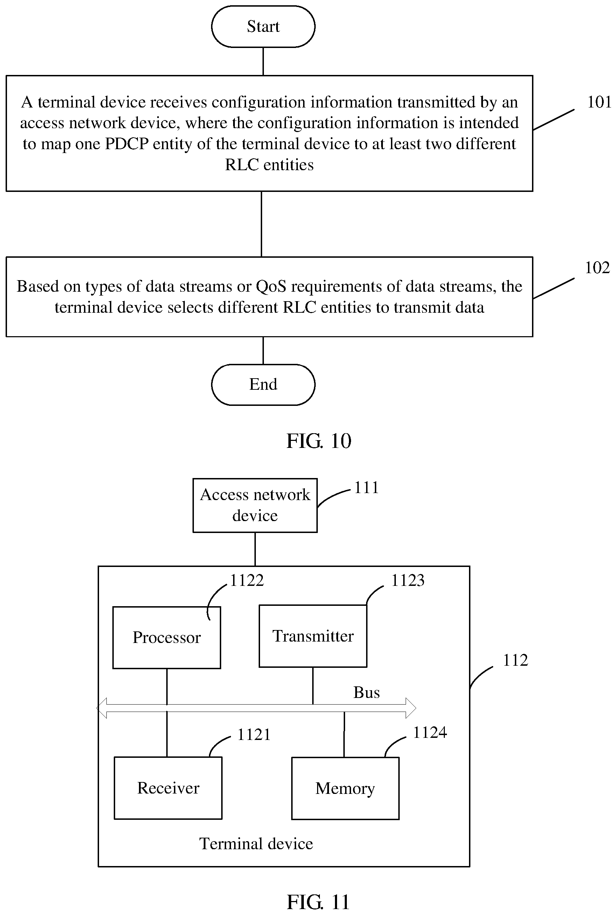

FIG. 10 is a schematic flowchart of a data transmission processing method according to an embodiment of the present invention. The data transmission processing method in this embodiment is performed by a terminal device. An access network device may be a base station in a 2G, 3G, 4G, or 5G communications system. A main process is described as follows:

Step 101: The terminal device receives configuration information transmitted by the access network device, where the configuration information is intended to map one PDCP entity of the terminal device to at least two different RLC entities.

Step 102: Based on types of data streams or QoS requirements of data streams, the terminal device selects different RLC entities to transmit data.

For example, the access network device configures a correspondence between one PDCP entity of the terminal device and at least two different RLC entities. For example, one RB or LCH corresponds to one RLC entity. Based on types of data streams or QoS requirements of data streams, the PDCP entity of the terminal device selects different RLC entities to transmit data.

In another embodiment of the present invention, if one PDCP entity uses at least two logical channels, different LCHs of a UM RLC entity or an AM RLC entity have different priorities. When the terminal device transmits an uplink BSR, an amount of data to be transmitted by the AM RLC entity is preferentially reported, or amounts of data to be transmitted by using the LCHs are reported in descending order of the priorities of the LCHs.

In another embodiment of the present invention, the at least two different RLC entities both use an RLC AM or an RLC UM, timers with different duration (which may be referred to as t-reordering timers or reassembly and segmentation timers) are respectively configured for the at least two different RLC entities, and each t-reordering timer or reassembly and segmentation timer is used by a receive end of an RLC entity using the RLC AM or the RLC UM in the terminal device, to detect whether an RLC PDU transmitted by the access network device is lost. For example, one RLC entity corresponding to the PDCP entity of the terminal device finds that an RLC PDU transmitted by the access network device is not received. Therefore, the RLC entity starts a t-reordering timer or a reassembly and segmentation timer configured for the RLC entity. When the t-reordering timer or the reassembly and segmentation timer expires, the terminal device is triggered to transmit a status report to the access network device. The status report includes status information of all RLC PDUs received by the receive end when the t-reordering timer or the reassembly and segmentation timer expires, for example, includes a sequence number of a lost RLC PDU transmitted by the access network device, and/or includes a sequence number of a successfully received RLC PDU that is transmitted by the access network device. For example, the receive end of the RLC entity using the RLC AM or the RLC UM determines whether the RLC PDU not received is received when the t-reordering timer or the reassembly and segmentation timer expires. If the RLC entity has not received the RLC PDU that is not received, the terminal device determines that the RLC PDU transmitted by the access network device is lost, and then transmits a status report to the access network device. The status report includes status information of all RLC PDUs received by the receive end when the t-reordering timer or the reassembly and segmentation timer expires, for example, includes the sequence number of the RLC PDU that is transmitted by the access network device but not received.

In another embodiment of the present invention, the at least two different RLC entities both use an RLC AM, a timer (which may be referred to as a continue-to-wait timer) is configured for at least one of the at least two different RLC entities, and each continue-to-wait timer is used by an RLC entity corresponding to the timer to continue to wait for receiving an RLC PDU that is transmitted by the access network device but not received as indicated by a status report transmitted by the terminal device. For example, for the RLC entity for which the continue-to-wait timer is configured, the terminal device transmits a status report to the access network device when a t-reordering timer or a reassembly and segmentation timer expires, or based on a status report transmission request transmitted by the access network device, starts the continue-to-wait timer configured for the RLC entity, continues to receive, within duration of the continue-to-wait timer, the RLC PDU that is not received, and determines whether the RLC PDU not received can be received before the continue-to-wait timer expires. The status report includes status information of all data packets received when the t-reordering timer or the reassembly and segmentation timer expires or when the status report transmission request is received, for example, includes a sequence number of the RLC PDU that is transmitted by the access network device but not received. When the continue-to-wait timer expires, if the RLC entity for which the continue-to-wait timer is configured still has not received the RLC PDU that is not received, the terminal device determines that the RLC PDU transmitted by the access network device is lost, and transmits a latest status report to the access network device.

In another embodiment of the present invention, when a continue-to-wait timer expires, the terminal device pushes a receive window to receive an RLC PDU transmitted by the access network device next time. The terminal device notifies the access network device that the terminal device has pushed the window. For detailed descriptions about window pushing, refer to a window pushing embodiment described later.

In another embodiment of the present invention, the terminal device further receives a first maximum quantity of retransmission times that is configured by the access network device for the AM RLC entity of the terminal device. After transmitting an RLC PDU, the AM RLC entity of the terminal device receives a NACK transmitted by the access network device, and then retransmits the RLC PDU. If the RLC PDU is still unsuccessfully transmitted after the retransmission reaches the first maximum quantity of retransmission times, the retransmitted RLC PDU is discarded, and the terminal device does not instruct the access network device to trigger RLC reconstruction, that is, that the retransmission reaches the first maximum quantity of retransmission times is not used as a basis for determining an RLF.

In another embodiment of the present invention, the terminal device further receives a second maximum quantity of retransmission times that is configured by the access network device for the AM RLC entity of the terminal device. After transmitting an RLC PDU, the AM RLC entity of the terminal device receives a NACK transmitted by the access network device, and then retransmits the RLC PDU. If the RLC PDU is still unsuccessfully transmitted after the retransmission is performed the second maximum quantity of retransmission times, the retransmitted RLC PDU is discarded, and the terminal device instructs the access network device to trigger RLC reconstruction.

In the foregoing embodiment, one PDCP entity of the terminal device is mapped to at least two different RLC entities. Therefore, based on types or QoS requirements of data streams, the PDCP entity of the terminal device may select different RLC entities to transmit data. This ensures normal transmission of different services, and improves reliability while ensuring service experience.

FIG. 11 is a schematic structural diagram of another communications system according to another embodiment of the present invention. The communications system includes an access network device 111 and a terminal device 112. The access network device communicates with the terminal device by using an air interface. The access network device may be a 2G/3G/4G base station or a gNB in a 5G communications system. The terminal device 112 includes a receiver 1121, a processor 1122, a transmitter 1123, and a memory 1124. The receiver 1121, the processor 1122, the transmitter 1123, and the memory 1124 communicate with each other by using a bus.

In this embodiment of this application, the processor 1122 may be an EPLD, an FPGA, a DSP chip, an ASIC or another programmable logic device, a discrete gate or transistor logic device, a discrete hardware component, or the like.

The memory 1124 is configured to store code or instruction information, and may further store information about a device type. The memory 1124 may include a ROM and a RAM, and is configured to provide an instruction and data for the processor 1122. A part of the memory 1124 may further include a non-volatile random access memory.

The receiver 1121 is configured to receive configuration information transmitted by the access network device 111, where the configuration information is intended to map one PDCP entity of the terminal device to at least two different RLC entities.

The transmitter 1123 is configured to select, based on types of data streams or QoS requirements of data streams, different RLC entities to transmit data.

For example, the access network device configures a correspondence between one PDCP entity of the terminal device and at least two different RLC entities. For example, one RB or LCH corresponds to one RLC entity. Based on types of data streams or QoS requirements of data streams, the PDCP entity of the terminal device selects different RLC entities to transmit data.

In another embodiment of the present invention, if one PDCP entity uses at least two logical channels, different LCHs of a UM RLC entity or an AM RLC entity have different priorities. When the transmitter 1123 transmits an uplink BSR, an amount of data to be transmitted by the AM RLC entity is preferentially reported, or amounts of data to be transmitted by using the LCHs are reported in descending order of the priorities of the LCHs.

In another embodiment of the present invention, the at least two different RLC entities both use an RLC AM or an RLC UM, timers with different duration (which may be referred to as t-reordering timers or reassembly and segmentation timers) are respectively configured for the at least two different RLC entities, and each t-reordering timer or reassembly and segmentation timer is used by a receive end of an RLC entity using the RLC AM or the RLC UM in the terminal device, to detect whether an RLC PDU transmitted by the access network device is lost. For example, one RLC entity corresponding to the PDCP entity of the terminal device finds that an RLC PDU transmitted by the access network device is not received. Therefore, the RLC entity starts a t-reordering timer or a reassembly and segmentation timer configured for the RLC entity. When the t-reordering timer or the reassembly and segmentation timer expires, the transmitter 1123 is triggered to transmit a status report to the access network device. The status report includes status information of all RLC PDUs received by the receive end when the t-reordering timer or the reassembly and segmentation timer expires, for example, includes a sequence number of a lost RLC PDU transmitted by the access network device, and/or includes a sequence number of a successfully received RLC PDU that is transmitted by the access network device. For example, the receive end of the RLC entity using the RLC AM or the RLC UM determines whether the RLC PDU not received is received when the t-reordering timer or the reassembly and segmentation timer expires. If the RLC entity has not received the RLC PDU that is not received, the processor 1122 determines that the RLC PDU transmitted by the access network device is lost, and then the transmitter 1123 transmits a status report to the access network device. The status report includes status information of all RLC PDUs received by the receive end when the t-reordering timer or the reassembly and segmentation timer expires, for example, includes the sequence number of the RLC PDU that is transmitted by the access network device but not received.

In another embodiment of the present invention, the at least two different RLC entities both use an RLC AM, a timer (which may be referred to as a continue-to-wait timer) is configured for at least one of the at least two different RLC entities, and each continue-to-wait timer is used by an RLC entity corresponding to the timer to continue to wait for receiving an RLC PDU that is transmitted by the access network device but not received as indicated by a status report transmitted by the terminal device. For example, for the RLC entity for which the continue-to-wait timer is configured, the transmitter 1123 transmits a status report to the access network device when a t-reordering timer or a reassembly and segmentation timer expires, or based on a status report transmission request transmitted by the access network device, and the RLC entity for which the continue-to-wait timer is configured starts the continue-to-wait timer configured for the RLC entity, continues to receive, within duration of the continue-to-wait timer, the RLC PDU that is not received, and determines whether the RLC PDU not received can be received before the continue-to-wait timer expires. The status report includes status information of all RLC PDUs received by the receive end when the t-reordering timer or the reassembly and segmentation timer expires, for example, includes a sequence number of the RLC PDU that is transmitted by the access network device but not received. When the continue-to-wait timer expires, if the RLC entity for which the continue-to-wait timer is configured still has not received the RLC PDU that is not received, the processor 1122 determines that the RLC PDU transmitted by the access network device is lost, and the transmitter 1123 transmits a latest status report to the access network device, where the latest status report includes status information of all RLC PDUs received by the receive end when the continue-to-wait timer expires.

In another embodiment of the present invention, when a continue-to-wait timer expires, the processor 1122 pushes a receive window, so that the receiver 1121 receives an RLC PDU transmitted by the access network device next time. The transmitter 1123 notifies the access network device that the terminal device has pushed the window. For detailed descriptions about window pushing, refer to a window pushing embodiment described later.

In another embodiment of the present invention, the receiver 1121 is further configured to receive a first maximum quantity of retransmission times that is configured by the access network device for the AM RLC entity of the terminal device. After the AM RLC entity of the terminal device transmits an RLC PDU, if the receiver 1121 receives a NACK transmitted by the access network device, the transmitter 1123 retransmits the RLC PDU. If the RLC PDU is still unsuccessfully transmitted after the retransmission reaches the first maximum quantity of retransmission times, the retransmitted RLC PDU is discarded, and the transmitter 1123 does not instruct the access network device to trigger RLC reconstruction, that is, that the retransmission reaches the first maximum quantity of retransmission times is not used as a basis for determining an RLF.

In another embodiment of the present invention, the receiver 1121 is further configured to receive a second maximum quantity of retransmission times that is configured by the access network device for the AM RLC entity of the terminal device. After the AM RLC entity of the terminal device transmits an RLC PDU, if the receiver 1121 receives a NACK transmitted by the access network device, the transmitter 1123 retransmits the RLC PDU. If the RLC PDU is still unsuccessfully transmitted after the retransmission is performed the second maximum quantity of retransmission times, the retransmitted RLC PDU is discarded, and the transmitter 1123 instructs the access network device to trigger RLC reconstruction.

In the foregoing embodiment, one PDCP entity of the terminal device is mapped to at least two different RLC entities. Therefore, based on types or QoS requirements of data streams, the PDCP entity of the terminal device may select different RLC entities to transmit data. This ensures normal transmission of different services, and improves reliability while ensuring service experience.

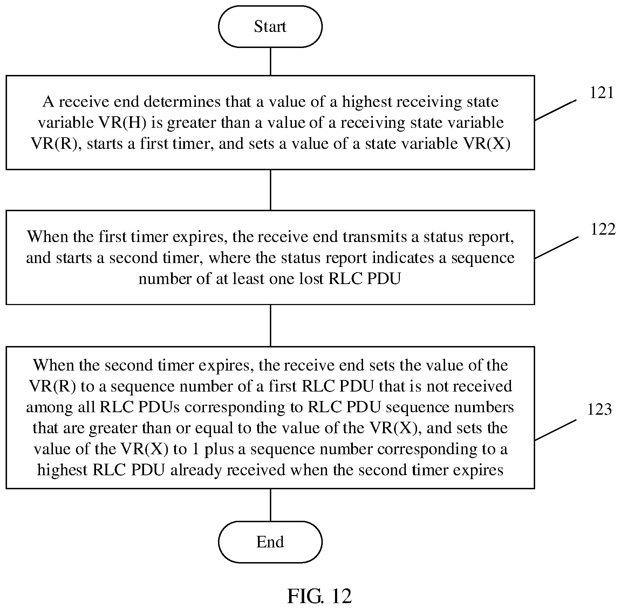

FIG. 12 is a schematic flowchart of another data transmission processing method according to another embodiment of the present invention. A communications system includes an access network device and a terminal device. The access network device communicates with the terminal device by using an air interface. The access network device may be a 2G/3G/4G base station or a gNB in a 5G communications system. One of the access network device and the terminal device is a transmit end, and the other one is a receive end. For example, when the access network device is a transmit end, the terminal device is a receive end, or vice versa. An RLC layer of the access network device and an RLC layer of the terminal device use an RLC AM mode.

Step 121: A receive end determines that a value of a highest receiving state variable VR(H) is greater than a value of a receiving state variable VR(R), starts a first timer, and sets a value of a state variable VR(X).

The receive end stores several variables, for example, the VR(R), the VR(H), and the VR(X). Every time the receive end receives an RLC PDU transmitted by the transmit end, the receive end needs to determine values of the variables VR(R), VR(H), and VR(X), and compare the values of the variables VR(H) and VR(R). For example, when the receive end receives an RLC PDU transmitted by the transmit end, the receive end determines whether the value of the VR(H) is greater than the value of the VR(R), and starts the first timer (which may be referred to as a t-reordering timer or a reassembly and segmentation timer). The value of the VR(H) indicates a sequence number of an RLC PDU and is 1 plus a sequence number corresponding to a highest RLC PDU already received when the first timer is started. The value of the VR(R) indicates a sequence number of an RLC PDU and is a sequence number corresponding to an RLC PDU that the receive end expects to receive when the first timer is started. The value of the VR(X) indicates a sequence number of an RLC PDU and is 1 plus the sequence number corresponding to the highest RLC PDU already received when the first timer is started.

For example, in a receive window, the receive end sequentially receives a first RLC PDU, a second RLC PDU, and a third RLC PDU transmitted by the transmit end, where a sequence number of the first RLC PDU is 1, a sequence number of the second RLC PDU is 2, and a sequence number of the third RLC PDU is 3. In this case, a lower boundary of the current receive window is a receive time point at which the receive end expects to receive the first RLC PDU.

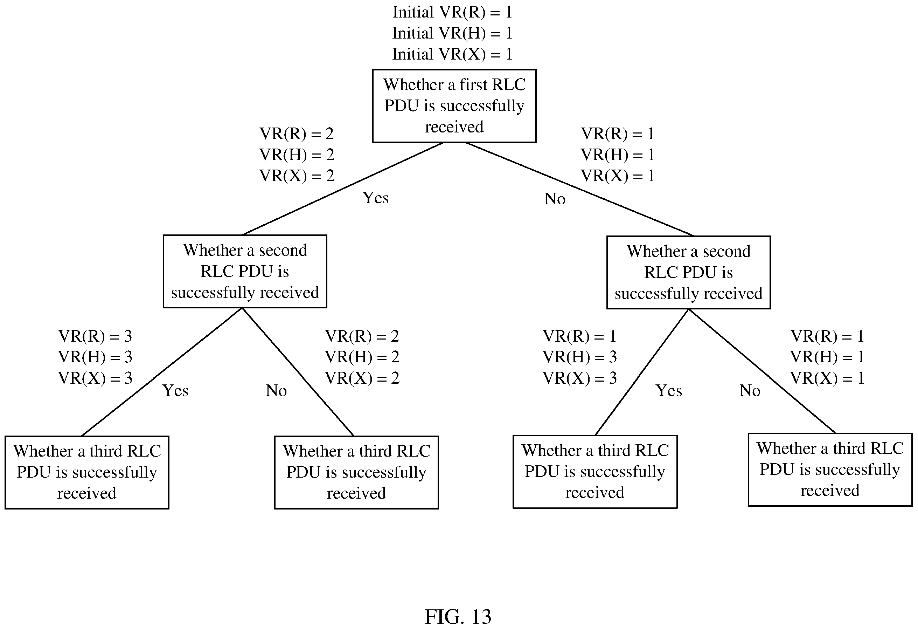

FIG. 13 is a schematic diagram of a data status in a data transmission process according to another embodiment of the present invention, that is, a schematic diagram of a change process of the values of the variables VR(R), VR(H), and VR(X) when the receive end receives an RLC PDU.

Before receiving an RLC PDU transmitted by the transmit end, the receive end expects to receive the first RLC PDU whose sequence number is 1, and currently has not received any RLC PDU. To be specific, initial values of the variables VR(R), the VR(H), and the VR(X) are set as follows: Initial VR(R) = 1, Initial VR(H) = 1, and Initial VR(X) = 1.

When the receive end receives the first RLC PDU, the receive end needs to determine values of the variables VR(R), VR(H), and VR(X), and compare the values of the variables VR(H) and VR(R). If the receive end successfully receives the first RLC PDU whose sequence number is 1, the receive end expects to receive the second RLC PDU whose sequence number is 2, that is, VR(R) = 2 and VR(H) = 2, the VR(X) is set to 2, and the receive end determines that the VR(H) is equal to the VR(R). If the receive end unsuccessfully receives the first RLC PDU, the receive end expects to receive the first RLC PDU whose sequence number is 1, that is, VR(R) = 1 and VR(H) = 1, the VR(X) is set to 1, and the receive end determines that the VR(H) is equal to the VR(R).

After successfully receiving the first RLC PDU, the receive end continues to receive the second RLC PDU. If the receive end successfully receives the second RLC PDU, a highest RLC PDU that is currently successfully received is the second RLC PDU whose sequence number is 2, and an RLC PDU that the receive end expects to receive is the third RLC PDU whose sequence number is 3, that is, VR(R) = 3 and VR(H) = 3, the VR(X) is set to 3, and the receive end determines that the VR(H) is equal to the VR(R). If the receive end does unsuccessfully receive the second RLC PDU, a highest RLC PDU that is currently successfully received is the first RLC PDU whose sequence number is 1, and an RLC PDU that the receive end expects to receive is the second RLC PDU whose sequence number is 2, that is, VR(R) = 2 and VR(H) = 2, the VR(X) is set to 2, and the receive end determines that the VR(H) is equal to the VR(R).

After unsuccessfully receiving the first RLC PDU, the receive end continues to receive the second RLC PDU. If the receive end successfully receives the second RLC PDU, a highest RLC PDU that is currently successfully received is the second RLC PDU whose sequence number is 2, and an RLC PDU that the receive end expects to receive is the first RLC PDU whose sequence number is 1, that is, VR(R) = 1 and VR(H) = 3, the VR(X) is set to 3, and the receive end determines that the VR(H) is greater than the VR(R). If the receive end unsuccessfully receives the second RLC PDU, no RLC PDU is currently successfully received, and an RLC PDU that the receive end expects to receive is the first RLC PDU whose sequence number is 1, that is, VR(R) = 1 and VR(H) = 1, the VR(X) is set to 1, and the receive end determines that the VR(H) is equal to the VR(R).

Determining values of the variables VR(R), VR(H), and VR(X) and comparing the values of the variables VR(H) and VR(R) after reception of the third RLC PDU are similar to determining the values of the variables VR(R), VR(H), and VR(X) and comparing the values of the variables VR(H) and VR(R) after reception of the second RLC PDU. Details are not described again herein.

When the receive end determines that the VR(H) is greater than the VR(R), that is, when the receive end currently successfully receives the second RLC PDU but unsuccessfully receives the first RLC PDU, which may also mean that a hole exists during RLC PDU reception before the current RLC PDU is successfully received, the first timer (which may be referred to as the t-reordering timer or the reassembly and segmentation timer) is started for the first RLC PDU that is unsuccessfully received. When the first timer is started, VR(R) = 1, VR(H) = 3, and the VR(X) is set to 3. The first timer is used by the receive end to continue to receive the first RLC PDU within duration of the first timer. When the first timer expires, the receive end determines whether the first RLC PDU is successfully received.

In another embodiment of the present invention, within the duration of the first timer, that is, before the first timer expires, the receive end may further receive an RLC PDU that is after the second RLC PDU, for example, the third RLC PDU and an RLC PDU after the third RLC PDU.

Step 122: When the first timer expires, the receive end transmits a status report, and starts a second timer, where the status report indicates a sequence number of at least one lost RLC PDU.

When the first timer expires, if the receive end has successfully received the first RLC PDU, a highest RLC PDU that is already successfully received by the receive end when the first timer expires is the second RLC PDU whose sequence number is 2, and an RLC PDU that the receive end expects to receive is the third RLC PDU whose sequence number is 3, that is, VR(R) = 3 and VR(H) = 3, the VR(X) is set to 3, and the receive end determines that the VR(H) is equal to the VR(R). Optionally, the receive end transmits a status report to the transmit end, and the status report includes status information of all RLC PDUs received by the receive end when the first timer expires, for example, includes the sequence number of the successfully received first RLC PDU and the sequence number of the successfully received second RLC PDU.

When the first timer expires, if the receive end still has unsuccessfully received the first RLC PDU, the receive end determines that the first RLC PDU is lost. The receive end transmits a status report, and starts the second timer (which may also be referred to as a continue-to-wait timer). The status report indicates the sequence number of the lost first RLC PDU. The second timer is used by the receive end to continue to wait for receiving an RLC PDU that is transmitted by the access network device but not received as indicated by the status report transmitted by the receive end. For example, the receive end continues to receive, within duration of the second timer, the first RLC PDU that is not received, and determines whether the first RLC PDU not received can be received before the second timer expires.

Within the duration of the first timer, the receive end may further receive an RLC PDU that is after the second RLC PDU, for example, the third RLC PDU and an RLC PDU after the third RLC PDU.

When the first timer expires, if receiving an RLC PDU that is after the second RLC PDU by the receive end is continuous reception, for example, if the receive end has successfully and continuously received an RLC PDU having a highest sequence number equal to N when the first timer expires, where N is a positive integer greater than or equal to 3, an RLC PDU that the receive end expects to receive is still the first RLC PDU whose sequence number is 1. However, the highest sequence number of the RLC PDU successfully received by the receive end when the first timer expires is N. In this case, the receive end sets VR(R) = 1, VR(H) = N, and VR(X) = N, and the receive end transmits a status report. The status report includes status information of all RLC PDUs received by the receive end when the first timer expires.

When the first timer expires, if receiving an RLC PDU that is after the second RLC PDU by the receive end is discontinuous reception, for example, if the receive end has received an RLC PDU having a highest sequence number equal to N when the first timer expires, where N is a positive integer greater than or equal to 3, but at least one RLC PDU that is not received exists before the sequence number N, assuming that a sequence number of a first unsuccessfully received RLC PDU after the second RLC PDU that has the sequence number 2 and has been successfully received is M, where M is a positive integer greater than or equal to 3, and M is less than or equal to N, an RLC PDU that the receive end expects to receive when the first timer expires is still the first RLC PDU whose sequence number is 1. If M is less than N, that is, if the RLC PDU whose sequence number is N is successfully received, but the RLC PDU whose sequence number is M is the first unsuccessfully received RLC PDU after the second RLC PDU, the highest sequence number of the RLC PDU successfully received by the receive end when the first timer expires is N. In this case, the receive end sets VR(R) = 1, VR(H) = N+1, and VR(X) = N+1. If M is equal to N, that is, if an RLC PDU whose sequence number is N/M is the first unsuccessfully received RLC PDU after the second RLC PDU, the highest sequence number of the RLC PDU successfully received by the receive end when the first timer expires is N-1. In this case, the receive end sets VR(R) = 1, VR(H) = (N - 1) + 1, and VR(X) = (N - 1) + 1. The receive end transmits a status report, and the status report includes status information of all RLC PDUs received by the receive end when the first timer expires.

In another embodiment of the present invention, within the duration of the second timer, that is, before the second timer expires, the receive end may further receive an RLC PDU that is after the second RLC PDU, for example, the third RLC PDU and an RLC PDU after the third RLC PDU.

Step 123: When the second timer expires, the receive end sets the value of the VR(R) to a sequence number of a first RLC PDU that is not received among all RLC PDUs corresponding to RLC PDU sequence numbers that are greater than or equal to the value of the VR(X), and sets the value of the VR(X) to 1 plus a sequence number corresponding to a highest RLC PDU already received when the second timer expires.

When the second timer expires, if the receive end still has not received the first RLC PDU that is not received, the receive end determines that the first RLC PDU transmitted by the transmit end is lost, and optionally transmits a latest status report or window moving indication information to the access network device. In this case, the receive end sets a receive time point of a next RLC PDU that is transmitted by the transmit end and that the receive end expects to receive (that is, does not receive), or moves the lower boundary of the receive window at the expiry of the second timer to the foregoing point. This process is referred to as moving of the lower boundary of the receive window.

Within the duration of the second timer, that is, before the second timer expires, the receive end may further receive an RLC PDU that is after the second RLC PDU. When there is discontinuous reception during reception of the RLC PDU that is after the second RLC PDU, another RLC PDU is lost. Therefore, when the second timer expires, the receive end sets the values of the variables VR(R), VR(H), and VR(X) for moving the lower boundary of the receive window as follows: The receive end sets the value of the VR(R) to the sequence number of the first RLC PDU that is not received among all the RLC PDUs corresponding to the RLC PDU sequence numbers that are greater than or equal to the value of the VR(X) at the start of the first timer, sets the value of the VR(H) to 1 plus the sequence number corresponding to the highest RLC PDU already received when the second timer expires, and sets the value of the VR(X) to 1 plus the sequence number corresponding to the highest RLC PDU already received when the second timer expires. To be specific, the receive end no longer waits for receiving the first RLC PDU, but moves the lower boundary of the receive window to a receive sequence number of a first RLC PDU that is not received after an RLC PDU (that is, the second RLC PDU) that has a highest sequence number and has been successfully received when the first timer is started. The receive end transmits a status report or window moving indication information. The status report includes status information of all RLC PDUs received by the receive end when the second timer expires, and the window moving indication information includes a sequence number of a latest RLC PDU that the terminal expects to receive, that is, a current sequence number of the VR(R).

For example, when the second timer expires, if receiving an RLC PDU that is after the second RLC PDU by the receive end is discontinuous reception, for example, if the receive end has received an RLC PDU having a highest sequence number equal to K when the second timer expires, where K is a positive integer greater than or equal to 3, but at least one RLC PDU that is not received exists before the sequence number K, for example, if an RLC PDU that has a highest sequence number and has been successfully received when the first timer is started is the second RLC PDU, assuming that a sequence number of a first RLC PDU that is unsuccessfully received after the second RLC PDU is L, where L is a positive integer greater than or equal to 3, and L is less than or equal to K, when the second timer expires, the receive end moves the lower boundary of the receive window, that is, moves the lower boundary of the receive window to a receive time point of the first RLC PDU that is unsuccessfully received after the second RLC PDU. For example, if L is less than K, that is, if the RLC PDU whose sequence number is K is an RLC PDU that has a highest sequence number and has been successfully received when the second timer expires, but the RLC PDU whose sequence number is L is the first RLC PDU that is unsuccessfully received after the second RLC PDU, the receive end sets VR(R) = L, VR(H) = K+1, and VR(X) = K+1. If L is equal to K, that is, if an RLC PDU whose sequence number is L/K is the first RLC PDU that is unsuccessfully received after the second RLC PDU, the highest sequence number of the RLC PDU successfully received by the receive end when the second timer expires is L/K-1. In this case, the receive end sets VR(R) = L/K, VR(H) = (L/K-1)+1, and VR(X) = (L/K-1)+1. To be specific, the receive end no longer waits for receiving the first RLC PDU, but moves the lower boundary of the receive window from the receive time point of the first RLC PDU that the receive end expects to receive to the receive time point of the first RLC PDU not received after the second RLC PDU that has the highest sequence number 2 and has been successfully received when the first timer is started, that is, changes VR(R) = 1 to VR(R) = L/K. The receive end transmits a status report, and the status report includes status information of all RLC PDUs received when the second timer expires.

In another embodiment of the present invention, before the first timer expires, the receive end determines that sequence numbers of received RLC PDUs between the value of the VR(X) at the start of the first timer and a current value of the VR(H) are discontinuous, and starts a third timer. The third timer is used by the receive end to determine whether an RLC PDU corresponding to a missing sequence number between the value of the VR(X) at the start of the first timer and the current value of the VR(H) is lost.

For example, for the first RLC PDU (for example, the RLC PDU whose sequence number is M, denoted as RLC PDU SN = M) not received after the RLC PDU (for example, the second RLC PDU) that has the highest sequence number and has been successfully received when the first timer is started, the receive end also starts a t-reordering timer or a reassembly and segmentation timer, that is, the third timer. For example, the receive end determines, when the third timer expires, whether the RLC PDU whose sequence number is M is lost. It should be understood that the RLC PDU M may be a segmented or complete RLC PDU. In another embodiment of the present invention, the duration of the first timer is equal to duration of the third timer, or the duration of the first timer is unequal to duration of the third timer. It should be understood that, in an implementation, the third timer is the first timer. A plurality of first timers run simultaneously on the terminal device, respectively for managing or waiting for RLC PDUs in different ranges.

For example, when the first timer expires, the receive end starts the third timer, and for the first RLC PDU (for example, the RLC PDU whose sequence number is M) not received after the RLC PDU (for example, the second RLC PDU) that has the highest sequence number and has been successfully received when the first timer is started, sets a value of a VR1(R) to a sequence number of a first RLC PDU that is not received among all RLC PDUs corresponding to RLC PDU sequence numbers that are greater than or equal to the value of the VR(X) that is set when the first timer is started, for example, VR1(R) = M, and sets a value of the VR1(X) to 1 plus a sequence number corresponding to a highest RLC PDU already received when the first timer expires, for example, VR1(X) = N + 1. The receive end transmits a status report, and the status report includes status information of all RLC PDUs received by the receive end when the first timer expires.

Optionally, when the third timer expires, a status report is transmitted, where the status report indicates that the RLC PDU whose sequence number is M is lost, and a continue-to-wait timer, that is, a fourth timer, is started. When the fourth timer expires, the value of the VR(R) is set to a sequence number of a first RLC PDU that is not received among all RLC PDUs corresponding to RLC PDU sequence numbers that are greater than or equal to the value of the VR1(X) that is set when the third timer is started, and the value of the VR(X) is set to 1 plus a sequence number corresponding to a highest RLC PDU already received when the third timer expires. The receive end transmits a status report, and the status report includes status information of all RLC PDUs received by the receive end when the third timer expires. In an implementation, when the third timer expires, if a status of an RLC PDU received in the receive window is not updated, or an RLC PDU not received as indicated in a status report is received, the terminal device may not transmit a status report.

In another embodiment of the present invention, the fourth timer is used by the receive end to continue to wait for receiving, within duration of the fourth timer, the lost RLC PDU whose sequence number is M, and when the fourth timer expires, determines whether the RLC PDU whose sequence number is M is received, and if the RLC PDU whose sequence number is M is not received, determines that the RLC PDU whose sequence number is M is lost, and moves the lower boundary of the receive window, for example, sets the VR1(R) to a sequence number of a first RLC PDU that is not received among RLC PDUs whose sequence numbers are greater than or equal to a sequence number of a highest RLC PDU already successfully received when the third timer is started, sets the value of the VR1(X) to 1 plus a sequence number corresponding to a highest RLC PDU already received when the fourth timer expires, and sets a value of a VR1(H) to 1 plus the sequence number corresponding to the highest RLC PDU already received when the fourth timer expires. The receive end transmits a status report, and the status report includes status information of all RLC PDUs received by the receive end when the fourth timer expires.

In the foregoing embodiment, for an RLC PDU that is unsuccessfully received and for which a t-reordering timer or a reassembly and segmentation timer is started, before the t-reordering timer or the reassembly and segmentation timer expires, once the receive end successfully receives the unsuccessfully received RLC PDU, the receive end stops the t-reordering timer or the reassembly and segmentation timer. Similarly, for an unsuccessfully received RLC PDU for which a continue-to-wait timer is started, before the continue-to-wait timer expires, once the receive end successfully receives the unsuccessfully received RLC PDU, the receive end stops the continue-to-wait timer. It should be understood that this includes stopping the continue-to-wait timer only after all unsuccessfully received RLC PDUs detected by starting the t-reordering timer or the reassembly and segmentation timer are successfully received.

The foregoing embodiment describes a solution about how to move the lower boundary of the receive window when RLC PDU data is transmitted between the RLC entity of the receive end and an RLC entity of the transmit end. A solution to moving a lower boundary of a receive window when PDCD PDU data is transmitted between a PDCP entity of the receive end and a PDCD entity of the transmit end may also be similar to the solution to moving the lower boundary of the receive window when RLC PDU data is transmitted. Details are not described again herein. A difference lies in that the PDCP layer triggers a PDCP status report or window moving indication information including a PDCP SN. It should be understood that the PDCP layer may have at least one of a first timer, a second timer, a third timer, and a fourth timer similar to that of RLC, and duration of each timer may be different from duration of the timer of the RLC layer. When the RLC layer does not reorder RLC PDUs and is responsible only for reassembling segmented RLC PDUs, and PDCP is responsible for reordering, waiting and window moving by the PDCP layer are preferred in this embodiment.

In another implementation of the present invention, when a UM RLC entity corresponds to one PDCP entity, variables VR(R), VR(H), and VR(X) are also used, where a value of the VR(H) indicates a sequence number of a PDCP PDU and is 1 plus a sequence number corresponding to a highest PDCP PDU already received when a first timer is started, a value of the VR(R) indicates a sequence number of a PDCP PDU and is a sequence number corresponding to a PDCP PDU that the receive end expects to receive when the first timer is started, and a value of the VR(X) indicates the sequence number of the PDCP PDU and is 1 plus the sequence number corresponding to the highest PDCP PDU already received when the first timer is started.

If the receive end receives a data packet beyond a receive window, the receive end changes the value of the VR(R) to the VR(H) minus a length of the receive window, that is, VR(R) = VR(H) - Length of the receive window. The length of the receive window is a fixed quantity of data packets that can be received. For example, n data packets are fixedly received in the receive window, where n is a positive integer greater than or equal to 1, for example, n = 100. In this case, the length of the receive window is 100. When determining that the VR(H) is greater than the VR(R), the receive end sets the VR(X), starts a t-reordering timer or a reassembly and segmentation timer, manages a reordering window (VR(R), VR(X)) based on the t-reordering timer or the reassembly and segmentation timer, for example, sorts received PDCP PDUs in ascending order of sequence numbers, and after the t-reordering timer or the reassembly and segmentation timer expires, delivers a complete PDCP SDU in a management window of the t-reordering timer or the reassembly and segmentation timer to an upper layer, sets the VR(X) to the V(H), and sets the VR(R) to a first packet that is greater than or equal to the VR(X) and not received. If a sequence number of a received PDCP satisfies (VR(H) - Length of the receive window) ≤ PDCP SN < VR(R), the receive end discards the PDCP PDU.

In another implementation of the present invention, when an AM RLC entity corresponds to one PDCP entity, if the receive end receives a data packet at a lower boundary, that is, receives a data packet whose sequence number is a value of a VR(R), the receive end moves the lower boundary of the receive window, sets VR(R) = VR(R)+1, and sets Maximum receive sequence number VR(MR) = VR(R) + Length of the receive window. When the VR(H) is greater than the VR(R), a t-reordering timer or a reassembly and segmentation timer is started, and duration of the t-reordering timer or the reassembly and segmentation timer is infinite. If the receive end receives a data packet beyond the window, for example, if the receive end receives a PDCP PDU whose sequence number is greater than a value of the VR(MR), the receive end discards the PDCP PDU.

In another implementation of the present invention, when at least two UM RLCs correspond to one PDCP, if the receive end receives a data packet beyond a receive window, the receive end changes a value of a VR(R) to a VR(H) minus a length of the receive window, that is, VR(R) = VR(H) - Length of the receive window. If the VR(H) is greater than the VR(R), the receive end sets a VR(X), starts a t-reordering timer or a reassembly and segmentation timer, manages a reordering window (VR(R), VR(X)) based on the t-reordering timer or the reassembly and segmentation timer, for example, sorts received PDCP PDUs in ascending order of sequence numbers, does not move the window after the t-reordering timer or the reassembly and segmentation timer expires, delivers a complete PDCP SDU in a management window of the t-reordering timer or the reassembly and segmentation timer after the expiry to an upper layer, sets the VR(X) to the V(H), and if receiving a packet that is before the ordering window of the t-reordering timer or the reassembly and segmentation timer, discards the packet.

This embodiment is applied to window pushing of PDCP corresponding to different RLC entities, to push a PDCP window of UM RLC in time and avoid a data loss of AM PDCP.

In the foregoing embodiment, moving the lower boundary of the receive window in time for data transmission in the RLC AM mode can improve reliability and smoothness of data transmission.

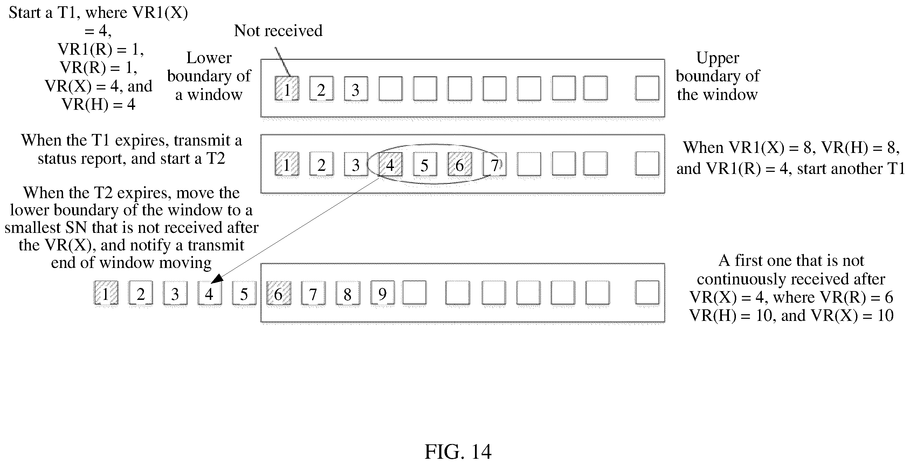

To describe moving of the lower boundary of the receive window more clearly, another embodiment of the present invention is shown in FIG. 14, which is a schematic diagram of a data status in a data transmission process according to another embodiment of the present invention.

As shown in FIG. 14, in a receive window, a receive end receives an RLC PDU data packet or a PDCP PDU data packet transmitted by a transmit end. For brevity of description, such data packets are collectively referred to as data packets in this embodiment.

A T1 (that is, a t-reordering timer or a reassembly and segmentation timer) is configured, or is prescribed in a protocol. When there are discontinuous packets, the T1 is started. For example, the receive end currently receives a data packet whose number is 3 and the reception is successful, but the receive end finds that a data packet whose number is 1 is unsuccessfully received, that is, the receive end currently expects to receive the data packet whose sequence number is 1, and the data packet having the highest sequence number 3 has been successfully received. Therefore, VR(R) = 1, VR(H) = 4, and VR(X) = 4. The receive end determines that the VR(H) is greater than the VR(R). In this case, the receive end starts the first T1.

In another embodiment of the present invention, intervals in moving window management are distinguished. For example, for the data packet whose sequence number is 1, the following is initially set: VR1(R) = VR(R) = 1, VR1(X) = VR(X) = 4, and VR1(H) = VR(H) = 4. The receive end continues to receive, within duration of the T1, the data packet whose sequence number is 1.

A timer T2 (that is, a continue-to-wait timer) is configured, or is prescribed in a protocol. Before the first T1 expires, the receive end determines whether the data packet whose sequence number is 1 is lost.

If the receive end successfully receives, before the first T1 expires, the data packet that has the sequence number 1 and is previously unsuccessfully received, the receive end optionally transmits a status report. Preferably, in this case, no status report is transmitted, and the first T1 started for the data packet that is previously not received is stopped. The receive end continues to receive a subsequent data packet, until another data packet is unsuccessfully received. To be specific, the receive end determines that the VR(H) is greater than the VR(R), and starts a second timer T1 for the new unsuccessfully received data packet.

For example, before the first T1 expires, the receive end may further receive a data packet that is after the data packet whose number is 3. If another discontinuous packet appears between the start of the first T1 and the expiry of the first T1, that is, if an unsuccessfully received data packet appears among all received data packets whose sequence numbers are greater than or equal to a value of the VR(X) or the VR1(X) when the first T1 is started, which means that all the received data packets from a data packet whose sequence number is greater than or equal to the value of the VR(X) when the first T1 is started to a data packet whose sequence number is a current value of the VR(X), another second T1 is started for a first unsuccessfully received data packet between the start of the first T1 and the expiry of the first T1.

For example, before the first T1 expires, the receive end has successfully received a data packet whose number is 7, and data packets whose numbers are 2, 3, and 5 are successfully received, but data packets whose numbers are 1, 4, and 6 are unsuccessfully received. To be specific, the receive end expects to receive the data packet whose sequence number is 1, and the data packet having the highest sequence number 7 has been successfully received currently. Therefore, the receive end sets VR(R) = 1, VR(H) = 8, and VR(X) = 4. To start the second T1 for the first data packet that has the number 4 and is unsuccessfully received between the first T1 and the expiry of the first T1, the receive end sets a value of the VR1(R) to the sequence number of the first data packet that is unsuccessfully received among all data packets whose sequence numbers are greater than or equal to the VR(X) or the VR1(X) when the first T1 is started, that is, VR1(R) = 4, VR1(X) = VR(X) = 8, and VR1(H) = VR(H) = 8. The receive end determines that received data packets whose sequence numbers are VR1(R) = 4 to VR1(X) = 8 are discontinuous data packets.

When the first T1 expires, if the receive end still has unsuccessfully received the data packet whose sequence number is 1, for example, if the receive end has successfully received the data packet whose number is 7, and the data packets whose numbers are 2, 3, and 5 are successfully received, but the data packets whose numbers are 1, 4, and 6 are unsuccessfully received, the receive end transmits a status report, and starts the first T2. The status report includes status reports of all data packets received by the receive end when the first T1 expires. For example, the status report indicates that the data packets whose numbers are 1, 4, and 6 are unsuccessfully received, and that the data packets whose numbers are 2, 3, 5, and 7 are successfully received. The receive end determines that the data packet whose sequence number is 1 is lost when the first T1 expires. The receive end continues to wait for receiving, within duration of the first T2, the data packet whose sequence number is 1. The data packet that the receive end expects to receive is the data packet whose sequence number is 1. The highest sequence number of the data packet successfully received when the first T1 expires is 7. The receive end sets VR(R) = 1, VR(H) = 8, VR(X) = 8, VR1(R) = 4, VR1(X) = VR(X) = 8, and VR1(H) = VR(H) = 8.

If the receive end successfully receives, before the first T2 expires, all data packets that are previously unsuccessfully received, the receive end optionally transmits a status report, stops the second T1 started for a data packet that is not received, and stops the first T2, that is, stops the second T1 for a data packet whose sequence number is the value of the VR1(R), and stops the first T2 for a data packet whose sequence number is the value of the VR(R). The receive end continues to receive a subsequent data packet, until another data packet is unsuccessfully received. To be specific, the receive end determines that the VR(H) is greater than the VR(R), and starts a third timer T1 for the new unsuccessfully received data packet.

For example, before the T2 expires, the receive end may further receive a data packet that is after the data packet whose number is 7. If another discontinuous packet appears between the start of the T2 and the expiry of the T2, that is, if an unsuccessfully received data packet appears among all received data packets whose sequence numbers are greater than or equal to the value of the VR(X) or the VR1(X) when the T2 is started, which means that all the received data packets from a data packet whose sequence number is greater than or equal to the value of the VR(X) when the T2 is started to a data packet whose sequence number is the current value of the VR(X), another third T1 is started for a first data packet that is unsuccessfully received between the start of the T2 and the expiry of the T2.

For example, before the T2 expires, the receive end has successfully received a data packet whose number is 9, and data packets whose numbers are 2, 3, 4, and 5 are successfully received, but data packets whose numbers are 1 and 6 are unsuccessfully received. In this case, the receive end stops a second T1 started for the data packet whose sequence number is 4, but does not stop a first T2 started for the data packet whose sequence number is 1 and a second T1 started for the data packet whose sequence number is 6. It should be understood that, if it is found that both the data packets whose sequence numbers are 4 and 6 are unsuccessfully received, a second T1 is started to wait for both the data packets whose sequence numbers are 4 and 6, there is no need to stop a second T1 for the data packet whose sequence number is 4, and there is no need to restart a second T1 for the data packet whose number is 6.

When the first T2 expires, the receive end still has unsuccessfully received the data packet whose sequence number is 1, and the data packets whose numbers are 2, 3, 4, and 5 are successfully received, but the data packets whose numbers are 1 and 6 are unsuccessfully received. The receive end moves a lower boundary of a receive window to a sequence number of a first data packet that is unsuccessfully received among all data packets after a data packet that has a highest sequence number and is successfully received when the T1 is started, that is, a sequence number of a first data packet that is unsuccessfully received among all data packets whose sequence numbers are greater than or equal to the value of the VR(X) when the T1 is started. To be specific, the receive end sets a data packet that the receive end expects to receive to the data packet whose sequence number is 6, and a highest sequence number of a data packet successfully received when the first T2 expires is 9, that is, VR(R) = 6, VR(H) = 10, VR(X) = 10, VR1(R) = 6, VR1(X) = VR(X) = 10, and VR1(H) = VR(H) = 10. The receive end determines that received data packets whose sequence numbers are VR1(R) = 6 to VR1(X) = 10 are discontinuous data packets. The receive end transmits a status report, and the status report includes status reports of all data packets received by the receive end when the first T2 expires.

If the receive end receives a packet beyond an upper boundary, if an AM mode is used, the receive end discards the packet; or if a UM mode is used, the receive end updates the upper boundary to the packet beyond the window, sets VR(R) = VR(H) - AM_Window_Size, and sets VR(X) = VR(H).

In another embodiment of the present invention, the receive end configures a maximum quantity of uplink retransmission times, and after the maximum quantity of retransmission times, RLC resetting is not triggered.

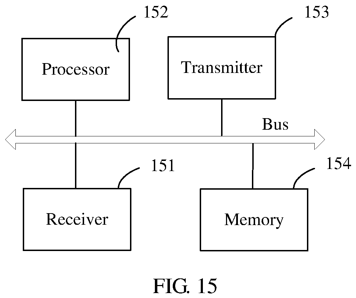

FIG. 15 is a schematic structural diagram of another data transmission processing apparatus according to another embodiment of the present invention. A communications system includes an access network device and a terminal device. The access network device communicates with the terminal device by using an air interface. The access network device may be a 2G/3G/4G base station or a gNB in a 5G communications system. An RLC layer of the access network device and an RLC layer of the terminal device use an RLC AM mode. One of the access network device and the terminal device is a transmit end, and the other one is a receive end. For example, when the access network device is a transmit end, the terminal device is a receive end, or vice versa. In this embodiment, the receive end is the data transmission processing apparatus. The data transmission processing apparatus includes a receiver 151, a processor 152, a transmitter 153, and a memory 154. The receiver 151, the processor 152, the transmitter 153, and the memory 154 communicate with each other by using a bus.

In this embodiment of this application, the processor 152 may be an EPLD, an FPGA, a DSP chip, an ASIC or another programmable logic device, a discrete gate or transistor logic device, a discrete hardware component, or the like.

The memory 154 is configured to store code or instruction information, and may further store information about a device type. The memory 154 may include a ROM and a RAM, and is configured to provide an instruction and data for the processor 152. A part of the memory 154 may further include a non-volatile random access memory.

The processor 152 is configured to determine that a value of a highest receiving state variable VR(H) is greater than a value of a receiving state variable VR(R), start a first timer, and set a value of a state variable VR(X).

The memory 154 stores several variables, for example, the VR(R), the VR(H), and the VR(X). Every time the receiver 151 receives an RLC PDU transmitted by the transmit end, the processor 152 needs to determine values of the variables VR(R), VR(H), and VR(X), and compare the values of the variables VR(H) and VR(R). For example, when the receiver 151 receives an RLC PDU transmitted by the transmit end, the processor 152 determines whether the value of the VR(H) is greater than the value of the VR(R), and starts the first timer (which may be referred to as a t-reordering timer or a reassembly and segmentation timer). The value of the VR(H) indicates a sequence number of an RLC PDU and is 1 plus a sequence number corresponding to a highest RLC PDU already received when the first timer is started. The value of the VR(R) indicates a sequence number of an RLC PDU and is a sequence number corresponding to an RLC PDU that the receiver 151 expects to receive when the first timer is started. The value of the VR(X) indicates a sequence number of an RLC PDU and is 1 plus the sequence number corresponding to the highest RLC PDU already received when the first timer is started.

For example, in a receive window, the receiver 151 sequentially receives a first RLC PDU, a second RLC PDU, and a third RLC PDU transmitted by the transmit end, where a sequence number of the first RLC PDU is 1, a sequence number of the second RLC PDU is 2, and a sequence number of the third RLC PDU is 3. In this case, a lower boundary of the current receive window is a receive time point at which the receive end expects to receive the first RLC PDU.

As shown in FIG. 13, before receiving an RLC PDU transmitted by the transmit end, the receiver 151 expects to receive the first RLC PDU whose sequence number is 1, and currently has not received any RLC PDU. To be specific, initial values of the variables VR(R), the VR(H), and the VR(X) are set as follows: Initial VR(R) = 1, Initial VR(H) = 1, and Initial VR(X) = 1.

When the receiver 151 receives the first RLC PDU, the processor 152 needs to determine values of the variables VR(R), VR(H), and VR(X), and compare the values of the variables VR(H) and VR(R). If the receiver 151 successfully receives the first RLC PDU whose sequence number is 1, the receiver 151 expects to receive the second RLC PDU whose sequence number is 2, that is, VR(R) = 2 and VR(H) = 2, the VR(X) is set to 2, and the processor 152 determines that the VR(H) is equal to the VR(R). If the receiver 151 unsuccessfully receives the first RLC PDU, the receiver 151 expects to receive the first RLC PDU whose sequence number is 1, that is, VR(R) = 1 and VR(H) = 1, the VR(X) is set to 1, and the processor 152 determines that the VR(H) is equal to the VR(R).

After successfully receiving the first RLC PDU, the receiver 151 continues to receive the second RLC PDU. If the receiver 151 successfully receives the second RLC PDU, a highest RLC PDU that is currently successfully received is the second RLC PDU whose sequence number is 2, and an RLC PDU that the receiver expects to receive is the third RLC PDU whose sequence number is 3, that is, VR(R) = 3 and VR(H) = 3, the VR(X) is set to 3, and the processor 152 determines that the VR(H) is equal to the VR(R). If the receiver 151 unsuccessfully receives the second RLC PDU, a highest RLC PDU that is currently successfully received is the first RLC PDU whose sequence number is 1, and an RLC PDU that the receiver expects to receive is the second RLC PDU whose sequence number is 2, that is, VR(R)=2 and VR(H)=2, the VR(X) is set to 2, and the processor 152 determines that the VR(H) is equal to the VR(R).

After unsuccessfully receiving the first RLC PDU, the receiver 151 continues to receive the second RLC PDU. If the receiver 151 successfully receives the second RLC PDU, a highest RLC PDU that is currently successfully received is the second RLC PDU whose sequence number is 2, and an RLC PDU that the receiver expects to receive is the first RLC PDU whose sequence number is 1, that is, VR(R) = 1 and VR(H) = 3, the VR(X) is set to 3, and the processor 152 determines that the VR(H) is greater than the VR(R). If the receiver 151 unsuccessfully receives the second RLC PDU, no RLC PDU is currently successfully received, and an RLC PDU that the receiver expects to receive is the first RLC PDU whose sequence number is 1, that is, VR(R) = 1 and VR(H) = 1, the VR(X) is set to 1, and the processor 152 determines that the VR(H) is equal to the VR(R).

Determining values of the variables VR(R), VR(H), and VR(X) and comparing the values of the variables VR(H) and VR(R) after reception of the third RLC PDU are similar to determining the values of the variables VR(R), VR(H), and VR(X) and comparing the values of the variables VR(H) and VR(R) after reception of the second RLC PDU. Details are not described again herein.

When the processor 152 determines that the VR(H) is greater than the VR(R), that is, when the receiver 151 currently successfully receives the second RLC PDU but successfully receives the first RLC PDU, which may also mean that a hole exists during RLC PDU reception before the current RLC PDU is successfully received, the first timer (which may be referred to as the t-reordering timer or the reassembly and segmentation timer) is started for the first RLC PDU that is unsuccessfully received. When the processor 152 starts the first timer, VR(R) = 1, VR(H) = 3, and the VR(X) is set to 3. The first timer is used by the receiver 151 to continue to receive the first RLC PDU within duration of the first timer. When the first timer expires, the processor 152 determines whether the first RLC PDU is successfully received.

In another embodiment of the present invention, within the duration of the first timer, the receiver 151 may further receive an RLC PDU that is after the second RLC PDU, for example, the third RLC PDU and an RLC PDU after the third RLC PDU.

When the first timer expires, the transmitter 153 is configured to transmit a status report to the transmit end, and the processor 152 is further configured to start a second timer, where the status report indicates a sequence number of at least one lost RLC PDU.

When the first timer expires, if the receiver 151 has successfully received the first RLC PDU, a highest RLC PDU that is already successfully received by the receiver 151 when the first timer expires is the second RLC PDU whose sequence number is 2, and an RLC PDU that the receiver expects to receive is the third RLC PDU whose sequence number is 3, that is, VR(R) = 3 and VR(H) = 3, the VR(X) is set to 3, and the processor 152 determines that the VR(H) is equal to the VR(R). Optionally, the transmitter 153 transmits a status report to the transmit end, and the status report includes status information of all RLC PDUs received by the receiver 151 when the first timer expires, for example, includes the sequence number of the successfully received first RLC PDU and the sequence number of the second successfully received RLC PDU.

When the first timer expires, if the receiver 151 still has unsuccessfully received the first RLC PDU, the processor 152 determines that the first RLC PDU is lost. The transmitter 153 transmits a status report, and the processor 152 starts the second timer (which may also be referred to as a continue-to-wait timer), where the status report indicates the sequence number of the lost first RLC PDU. The second timer is used by the receiver 151 to continue to wait for receiving an RLC PDU that is transmitted by the access network device but not received as indicated by the status report transmitted by the receiver. For example, the processor 152 continues to receive, within duration of the second timer, the first RLC PDU that is not received, and determines whether the first RLC PDU not received can be received before the second timer expires.

Within the duration of the first timer, the receiver 151 may further receive an RLC PDU that is after the second RLC PDU, for example, the third RLC PDU and an RLC PDU after the third RLC PDU.

When the first timer expires, if receiving an RLC PDU that is after the second RLC PDU by the receiver 151 is continuous reception, for example, if the receiver 151 has successfully and continuously received an RLC PDU having a highest sequence number equal to N when the first timer expires, where N is a positive integer greater than or equal to 3, an RLC PDU that the receiver 151 expects to receive is still the first RLC PDU whose sequence number is 1. However, the highest sequence number of the RLC PDU successfully received by the receiver 151 when the first timer expires is N. In this case, the processor 152 sets VR(R) = 1, VR(H) = N, and VR(X) = N, and the transmitter 153 transmits a status report. The status report includes status information of all RLC PDUs received by the receiver 151 when the first timer expires.

When the first timer expires, if receiving an RLC PDU that is after the second RLC PDU by the receiver 151 is discontinuous reception, for example, if the receiver 151 has received an RLC PDU having a highest sequence number equal to N when the first timer expires, where N is a positive integer greater than or equal to 3, but at least one RLC PDU that is not received exists before the sequence number N, assuming that a sequence number of a first unsuccessfully received RLC PDU after the second RLC PDU that has the sequence number 2 and has been successfully received is M, where M is a positive integer greater than or equal to 3, and M is less than or equal to N, an RLC PDU that the receiver 151 expects to receive when the first timer expires is still the first RLC PDU whose sequence number is 1. If M is less than N, that is, if the RLC PDU whose sequence number is N is successfully received, but the RLC PDU whose sequence number is M is the first unsuccessfully received RLC PDU after the second RLC PDU, the highest sequence number of the RLC PDU successfully received by the receiver 151 when the first timer expires is N. In this case, the processor 152 sets VR(R) = 1, VR(H) = N+1, and VR(X) = N+1. If M is equal to N, that is, if an RLC PDU whose sequence number is N/M is the first unsuccessfully received RLC PDU after the second RLC PDU, the highest sequence number of the RLC PDU successfully received by the receiver 151 when the first timer expires is N-1. In this case, the processor 152 sets VR(R) = 1, VR(H) = (N - 1) + 1, and VR(X) = (N - 1) + 1. The transmitter 153 transmits a status report to the transmit end, and the status report includes status information of all RLC PDUs received by the receiver 151 when the first timer expires.

In another embodiment of the present invention, within the duration of the second timer, the receiver 151 may further receive an RLC PDU that is after the second RLC PDU, for example, the third RLC PDU and an RLC PDU after the third RLC PDU.

When the second timer expires, the processor 152 is further configured to: set the value of the VR(R) to a sequence number of a first RLC PDU that is not received among all RLC PDUs corresponding to RLC PDU sequence numbers that are greater than or equal to the value of the VR(X), and set the value of the VR(X) to 1 plus a sequence number corresponding to a highest RLC PDU already received when the second timer expires.

When the second timer expires, if the receiver 151 still has not received the first RLC PDU that is not received, the processor 152 determines that the first RLC PDU transmitted by the transmit end is lost, and optionally transmits a latest status report or window moving indication information to the access network device. In this case, the processor 152 sets a receive time point of a next RLC PDU that is transmitted by the transmit end and that the receiver expects to receive (that is, does not receive), or moves the lower boundary of the receive window at the expiry of the second timer to the foregoing point. This process is referred to as moving of the lower boundary of the receive window.

Within the duration of the second timer, the receiver 151 may further receive an RLC PDU that is after the second RLC PDU. When there is discontinuous reception during reception of the RLC PDU that is after the second RLC PDU, another RLC PDU is lost. Therefore, when the second timer expires, the processor 152 sets the values of the variables VR(R), VR(H), and VR(X) for moving the lower boundary of the receive window as follows: The processor 152 sets the value of the VR(R) to the sequence number of the first RLC PDU that is not received among all the RLC PDUs corresponding to the RLC PDU sequence numbers that are greater than or equal to the value of the VR(X) at the start of the first timer, sets the value of the VR(H) to 1 plus the sequence number corresponding to the highest RLC PDU already received when the second timer expires, and sets the value of the VR(X) to 1 plus the sequence number corresponding to the highest RLC PDU already received when the second timer expires. To be specific, the receiver 151 no longer waits for receiving the first RLC PDU, but moves the lower boundary of the receive window to a receive sequence number of a first RLC PDU that is not received after an RLC PDU (that is, the second RLC PDU) that has a highest sequence number and has been successfully received when the first timer is started. The transmitter 153 transmits a status report or window moving indication information to the transmit end. The status report includes status information of all RLC PDUs received by the receiver 151 when the second timer expires, and the window moving indication information includes a sequence number of a latest RLC PDU that the terminal expects to receive, that is, a current sequence number of the VR(R).

For example, when the second timer expires, if receiving an RLC PDU that is after the second RLC PDU by the receiver 151 is discontinuous reception, for example, if the receiver 151 has received an RLC PDU having a highest sequence number equal to K when the second timer expires, where K is a positive integer greater than or equal to 3, but at least one RLC PDU that is not received exists before the sequence number K, for example, if an RLC PDU that has a highest sequence number and has been successfully received when the first timer is started is the second RLC PDU, assuming that a sequence number of a first RLC PDU that is unsuccessfully received after the second RLC PDU is L, where L is a positive integer greater than or equal to 3, and L is less than or equal to K, when the second timer expires, the processor 152 moves the lower boundary of the receive window, that is, moves the lower boundary of the receive window to a receive time point of the first RLC PDU that is unsuccessfully received after the second RLC PDU. For example, if L is less than K, that is, if the RLC PDU whose sequence number is K is an RLC PDU that has a highest sequence number and has been successfully received when the second timer expires, but the RLC PDU whose sequence number is L is the first RLC PDU that is unsuccessfully received after the second RLC PDU, the processor 152 sets VR(R) = L, VR(H) = K+1, and VR(X) = K+1. If L is equal to K, that is, if an RLC PDU whose sequence number is L/K is the first RLC PDU that is unsuccessfully received after the second RLC PDU, the highest sequence number of the RLC PDU successfully received by the receiver 151 when the second timer expires is L/K-1. In this case, the processor 152 sets VR(R) = L/K, VR(H) = (L/K-1)+1, and VR(X) = (L/K-1)+1. To be specific, the receiver 151 no longer waits for receiving the first RLC PDU, but moves the lower boundary of the receive window from the receive time point of the first RLC PDU that the receiver expects to receive to the receive time point of the first RLC PDU not received after the second RLC PDU that has the highest sequence number 2 and has been successfully received when the first timer is started, that is, changes VR(R) = 1 to VR(R) = L/K. The transmitter 153 transmits a status report to the transmit end, and the status report includes status information of all RLC PDUs received by the receiver 151 when the second timer expires.

In another embodiment of the present invention, before the first timer expires, the processor 152 determines that sequence numbers of received RLC PDUs between the value of the VR(X) at the start of the first timer and a current value of the VR(H) are discontinuous, and starts a third timer. The third timer is used by the processor 152 to determine whether an RLC PDU corresponding to a missing sequence number is lost.

For example, for the first RLC PDU (for example, the RLC PDU whose sequence number is M, denoted as RLC PDU SN = M) not received after the RLC PDU (for example, the second RLC PDU) that has the highest sequence number and has been successfully received when the first timer is started, the processor 152 also starts a t-reordering timer or a reassembly and segmentation timer, that is, the third timer. For example, the processor 152 determines, when the third timer expires, whether the RLC PDU whose sequence number is M is lost. It should be understood that the RLC PDU M may be a segmented or complete RLC PDU. In another embodiment of the present invention, the duration of the first timer is equal to duration of the third timer, or the duration of the first timer is unequal to duration of the third timer. It should be understood that, in an implementation, the third timer is the first timer. A plurality of first timers run simultaneously on the terminal device, respectively for managing or waiting for RLC PDUs in different ranges.

For example, when the first timer expires, the processor 152 starts the third timer, and for the first RLC PDU (for example, the RLC PDU whose sequence number is M) not received after the RLC PDU (for example, the second RLC PDU) that has the highest sequence number and has been successfully received when the first timer is started, sets a value of a VR1(R) to a sequence number of a first RLC PDU that is not received among all RLC PDUs corresponding to RLC PDU sequence numbers that are greater than or equal to the value of the VR(X) that is set when the first timer is started, for example, VR1(R) = M, and sets a value of the VR1(X) to 1 plus a sequence number corresponding to a highest RLC PDU already received when the first timer expires, for example, VR1(X) = N + 1. The transmitter 153 transmits a status report to the transmit end, and the status report includes status information of all RLC PDUs received by the receiver 151 when the first timer expires.

Optionally, when the third timer expires, a status report is transmitted, where the status report indicates that the RLC PDU whose sequence number is M is lost, and a continue-to-wait timer, that is, a fourth timer, is started. When the fourth timer expires, the value of the VR(R) is set to a sequence number of a first RLC PDU that is not received among all RLC PDUs corresponding to RLC PDU sequence numbers that are greater than or equal to the value of the VR1(X) that is set when the third timer is started, and the value of the VR(X) is set to 1 plus a sequence number corresponding to a highest RLC PDU already received when the third timer expires. The transmitter 153 transmits a status report to the transmit end, and the status report includes status information of all RLC PDUs received by the receiver 151 when the third timer expires. In an implementation, when the third timer expires, if a status of an RLC PDU received in the receive window is not updated, or an RLC PDU not received as indicated in a status report is received, the terminal device may not transmit a status report.

In another embodiment of the present invention, the fourth timer is used by the receiver 151 to continue to wait for receiving, within duration of the fourth timer, the lost RLC PDU whose sequence number is M, and when the fourth timer expires, determines whether the RLC PDU whose sequence number is M is received, and if the RLC PDU whose sequence number is M is not received, determines that the RLC PDU whose sequence number is M is lost, and moves the lower boundary of the receive window, for example, sets the VR1(R) to a sequence number of a first RLC PDU that is not received among RLC PDUs whose sequence numbers are greater than or equal to a sequence number of a highest RLC PDU already successfully received when the third timer is started, sets the value of the VR1(X) to 1 plus a sequence number corresponding to a highest RLC PDU already received when the fourth timer expires, and sets a value of a VR1(H) to 1 plus the sequence number corresponding to the highest RLC PDU already received when the fourth timer expires. The transmitter 153 transmits a status report to the transmit end, and the status report includes status information of all RLC PDUs received by the receiver 151 when the fourth timer expires.

In the foregoing embodiment, for an RLC PDU that is unsuccessfully received and for which a t-reordering timer or a reassembly and segmentation timer is started, before the t-Reordering timer or the reassembly and segmentation timer expires, once the receiver 151 successfully receives the unsuccessfully received RLC PDU, the processor 152 stops the t-reordering timer or the reassembly and segmentation timer. Similarly, for an unsuccessfully received RLC PDU for which a continue-to-wait timer is started, before the continue-to-wait timer expires, once the receiver 151 successfully receives the unsuccessfully received RLC PDU, the processor 152 stops the continue-to-wait timer. It should be understood that this includes stopping the continue-to-wait timer only after all unsuccessfully received RLC PDUs detected by starting the t-reordering timer or the reassembly and segmentation timer are successfully received.

The foregoing embodiment describes a solution about how to move the lower boundary of the receive window when RLC PDU data is transmitted between the RLC entity of the receive end and an RLC entity of the transmit end. A solution to moving a lower boundary of a receive window when PDCD PDU data is transmitted between a PDCP entity of the receive end and a PDCD entity of the transmit end may also be similar to the solution to moving the lower boundary of the receive window when RLC PDU data is transmitted. Details are not described again herein. A difference lies in that the PDCP layer triggers a PDCP status report or window moving indication information including a PDCP SN. It should be understood that the PDCP layer may have at least one of a first timer, a second timer, a third timer, and a fourth timer similar to that of RLC, and duration of each timer may be different from duration of the timer of the RLC layer. When the RLC layer does not reorder RLC PDUs and is responsible only for reassembling segmented RLC PDUs, and PDCP is responsible for reordering, waiting and window moving by the PDCP layer are preferred in this embodiment.

In another implementation of the present invention, when a UM RLC entity corresponds to one PDCP entity, variables VR(R), VR(H), and VR(X) are also used, where a value of the VR(H) indicates a sequence number of a PDCP PDU and is 1 plus a sequence number corresponding to a highest PDCP PDU already received when a first timer is started, a value of the VR(R) indicates a sequence number of a PDCP PDU and is a sequence number corresponding to a PDCP PDU that the receive end expects to receive when the first timer is started, and a value of the VR(X) indicates the sequence number of the PDCP PDU and is 1 plus the sequence number corresponding to the highest PDCP PDU already received when the first timer is started.

If the receiver 151 receives a data packet beyond a receive window, the processor 152 changes the value of the VR(R) to the VR(H) minus a length of the receive window, that is, VR(R) = VR(H) - Length of the receive window. The length of the receive window is a fixed quantity of data packets that can be received. For example, n data packets are fixedly received in the receive window, where n is a positive integer greater than or equal to 1, for example, n = 100. In this case, the length of the receive window is 100. When determining that the VR(H) is greater than the VR(R), the processor 152 sets the VR(X), starts a t-reordering timer or a reassembly and segmentation timer, manages a reordering window (VR(R), VR(X)) based on the t-reordering timer or the reassembly and segmentation timer, for example, sorts received PDCP PDUs in ascending order of sequence numbers. After the t-reordering timer or the reassembly and segmentation timer expires, the transmitter 153 delivers a complete PDCP SDU in a management window of the t-reordering timer or the reassembly and segmentation timer to an upper layer, and the processor 152 sets the VR(X) to the V(H), and sets the VR(R) to a first packet that is greater than or equal to the VR(X) and not received. If a sequence number of a PDCP received by the receiver 151 satisfies (VR(H) - Length of the receive window) ≤ PDCP SN < VR(R), the receiver 151 discards the PDCP PDU.

In another implementation of the present invention, when an AM RLC entity corresponds to one PDCP entity, if the receiver 151 receives a data packet at a lower boundary, that is, receives a data packet whose sequence number is a value of a VR(R), the processor 152 moves the lower boundary of the receive window, sets VR(R) = VR(R)+1, and sets Maximum receive sequence number VR(MR) = VR(R) + Length of the receive window. When determining that a VR(H) is greater than the VR(R), the processor 152 starts a t-reordering timer or a reassembly and segmentation timer, and duration of the t-reordering timer or the reassembly and segmentation timer is infinite. If the receiver 151 receives a data packet beyond the window, for example, if the receiver 151 receives a PDCP PDU whose sequence number is greater than a value of the VR(MR), the receiver 151 discards the PDCP PDU.

In another implementation of the present invention, when at least two UM RLCs correspond to one PDCP, if the receiver 151 receives a data packet beyond a receive window, the processor 152 changes a value of a VR(R) to a VR(H) minus a length of the receive window, that is, VR(R) = VR(H) - Length of the receive window. If the processor 152 determines that the VR(H) is greater than the VR(R), the processor 152 sets a VR(X), starts a t-reordering timer or a reassembly and segmentation timer, manages a reordering window (VR(R), VR(X)) based on the t-reordering timer or the reassembly and segmentation timer, for example, sorts received PDCP PDUs in ascending order of sequence numbers, and does not move the window after the t-reordering timer or the reassembly and segmentation timer expires. After the expiry, the transmitter 153 delivers a complete PDCP SDU in a management window of the t-reordering timer or the reassembly and segmentation timer to an upper layer, the processor 152 sets the VR(X) to the V(H), and if the receiver 151 receives a packet before the ordering window of the t-reordering timer or the reassembly and segmentation timer, the receiver 151 discards the packet.

This embodiment is applied to window pushing of PDCP corresponding to different RLC entities, to push a PDCP window of UM RLC in time and avoid a data loss of AM PDCP.

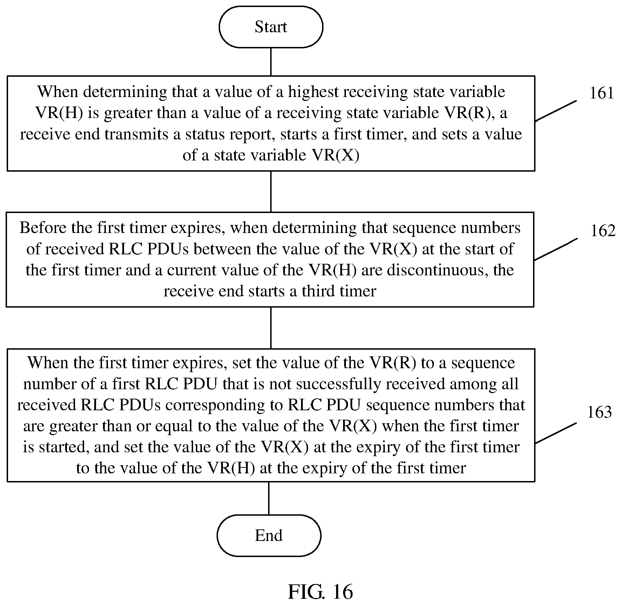

FIG. 16 is a schematic flowchart of another data transmission processing method according to another embodiment of the present invention. A communications system includes an access network device and a terminal device. The access network device communicates with the terminal device by using an air interface. The access network device may be a 2G/3G/4G distributed base station or a gNB in a 5G communications system. One of the access network device and the terminal device is a transmit end, and the other one is a receive end. For example, when the access network device is a transmit end, the terminal device is a receive end, or vice versa.

Step 161: When determining that a value of a highest receiving state variable VR(H) is greater than a value of a receiving state variable VR(R), a receive end transmits a status report to a transmit end, starts a first timer, and sets a value of a state variable VR(X).

The first timer is used by the receive end to detect whether a corresponding RLC PDU that is unsuccessfully received and whose sequence number is the value of the VR(R) is discarded. The receive end receives, within duration of the first timer, the corresponding RLC PDU whose sequence number is the value of the VR(R).

The status report includes status information of all RLC PDUs received by the receive end when the first timer is started. For example, the status report includes a sequence number of at least one unsuccessfully received RLC PDU.

The value of the VR(H) indicates a sequence number of an RLC PDU and is 1 plus a sequence number corresponding to a highest RLC PDU already received when the first timer is started. The value of the VR(R) indicates a sequence number of an RLC PDU and is a sequence number corresponding to an RLC PDU that the receive end expects to receive when the first timer is started. The value of the VR(X) indicates the sequence number of the RLC PDU and is 1 plus the sequence number corresponding to the highest RLC PDU already received when the first timer is started.

Step 162: Before the first timer expires, when determining that sequence numbers of received RLC PDUs between the value of the VR(X) at the start of the first timer and a current value of the VR(H) are discontinuous, the receive end starts a third timer.

The third timer is used by the receive end to determine whether an RLC PDU corresponding to a missing sequence number is lost.

Step 163: When the first timer expires, set the value of the VR(R) to a sequence number of a first RLC PDU that is unsuccessfully received among all received RLC PDUs corresponding to RLC PDU sequence numbers that are greater than or equal to the value of the VR(X) when the first timer is started, and set the value of the VR(X) at the expiry of the first timer to the value of the VR(H) at the expiry of the first timer.

In another embodiment of the present invention, optionally, a status report or window moving indication information is transmitted to the transmit end when the first timer or the third timer expires, and the status report includes status information of all RLC PDUs received by the receive end when the first timer or the third timer expires. For example, the status report includes a sequence number of at least one RLC PDU that is not received. The window moving indication information includes a sequence number of a latest RLC PDU that the terminal expects to receive, that is, a current sequence number of the VR(R).

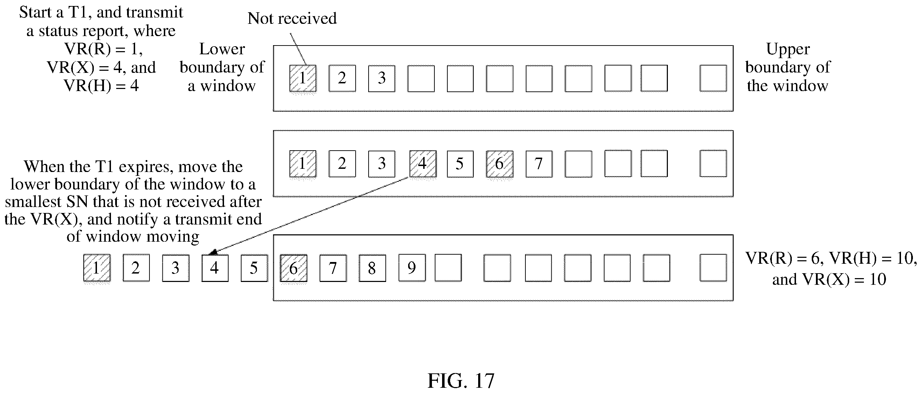

To describe moving of the lower boundary of the receive window more clearly, another embodiment of the present invention is shown in FIG. 17, which is a schematic diagram of a data status in a data transmission process according to another embodiment of the present invention.

As shown in FIG. 17, in a receive window, a receive end receives an RLC PDU data packet or a PDCP PDU data packet transmitted by a transmit end. For brevity of description, such data packets are collectively referred to as data packets in this embodiment.

A T1 is configured, or is prescribed in a protocol. After determining that there is a discontinuous packet, the receive end starts the T1. For example, the receive end currently receives a data packet whose number is 3 and the reception is successful, but the receive end finds that a data packet whose number is 1 is unsuccessfully received, that is, the receive end currently expects to receive the data packet whose sequence number is 1, and the data packet having the highest sequence number 3 has been successfully received. Therefore, VR(R) = 1, VR(H) = 4, and VR(X) = 4. The receive end determines that the VR(H) is greater than the VR(R). In this case, the receive end starts the T1, and transmits a status report to the transmit end. The status report includes status information of all data packets received by the receive end when the T1 is started, for example, includes sequence numbers of an unsuccessfully received data packet and a successfully received data packet. For example, the sequence number of the unsuccessfully received data packet is 1, and sequence numbers of successfully received data packets are 2 and 3. For the data packet corresponding to the sequence number 1, the receive end sets VR1(R) = VR(R) = 1, VR1(H) = VR(H) = 4, and VR1(X) = VR(X) = 4. The receive end continues to receive, within duration of the T1, the data packet whose sequence number is 1.

If the receive end successfully receives, before the first T1 expires, the data packet that has the sequence number 1 and is previously unsuccessfully received, the receive end sets the VR(R) to a sequence number of a first RLC PDU that is not received among all RLC PDUs whose sequence numbers are greater than or equal to the VR(X), and optionally transmits a status report or window moving indication information, and stops the T1 started for the data packet whose sequence number is 1. The receive end continues to receive a subsequent data packet, until another data packet is unsuccessfully received. To be specific, the receive end determines that the VR(H) is greater than the VR(R), starts another T1 for the new unsuccessfully received data packet, and sets the VR(X) to 1 plus a highest sequence number of a data packet that is currently successfully received. The window moving indication information indicates the sequence number VR(R) that the receive end currently expects to receive.

For example, before the T1 expires, the receive end may further receive a data packet that is after the data packet whose number is 3. If another discontinuous packet appears between the start of the T1 and the expiry of the T1, that is, if a data packet that is unsuccessfully received appears among all received data packets whose sequence numbers are greater than or equal to a value of the VR(X) or the VR1(X) when the T1 is started, which means that all the received data packets from a data packet whose sequence number is greater than or equal to the value of the VR(X) when the T1 is started to a data packet whose sequence number is a current value of the VR(X), another T1 is started for a first unsuccessfully received data packet between the start of the T1 and the expiry of the T1.

For example, before the T1 expires, the receive end has successfully received a data packet whose number is 7, and data packets whose numbers are 2, 3, and 5 are successfully received, but data packets whose numbers are 1, 4, and 6 are unsuccessfully received. To be specific, the receive end expects to receive the data packet whose sequence number is 1, and the data packet having the highest sequence number 7 has been successfully received currently. Therefore, the receive end sets VR(R) = 1, VR(H) = 8, and VR(X) = 8. For the first data packet that has the number 4 and is unsuccessfully received between the start of the T1 and the expiry of the T1, the receive end sets a value of the VR1(R) to the sequence number of the first data packet that is unsuccessfully received among all data packets whose sequence numbers are greater than or equal to the VR(X) or the VR1(X) when the T1 is started, that is, VR1(R) = 4, VR1(X) = VR(X) = 8, VR1(H) = VR(H) = 8. The receive end determines that received data packets whose sequence numbers are VR1(R) = 4 to VR1(X) = 8 are discontinuous data packets.

When the T1 expires, the receive end still has unsuccessfully received the data packet whose sequence number is 1, and the data packets whose numbers are 2, 3, 4, and 5 are successfully received, but the data packets whose numbers are 1 and 6 are unsuccessfully received. The receive end moves a lower boundary of a receive window to a sequence number of a first data packet that is unsuccessfully received among all data packets after a data packet that has a highest sequence number and is successfully received when the T1 is started, that is, a sequence number of a first data packet that is unsuccessfully received among all data packets whose sequence numbers are greater than or equal to the value of the VR(X) when the T1 is started. To be specific, the receive end sets a data packet that the receive end expects to receive to the data packet whose sequence number is 6, and a highest sequence number of a data packet successfully received when the T1 expires is 9, that is, VR(R) = 6, VR(H) = 10, VR(X) = 10, VR1(R) = 6, VR1(X) = VR(X) = 10, and VR1(H) = VR(H) = 10. The receive end determines that received data packets whose sequence numbers are VR1(R) = 6 to VR1(X) = 10 are discontinuous data packets. Optionally, the receive end transmits a status report or the window moving indication information, and the status report includes status reports of all data packets received by the receive end when the T1 expires. The window moving indication information indicates that the sequence number that the receive end expects to receive is 6.

If the receive end receives a packet beyond an upper boundary, if an AM mode is used, the receive end discards the packet; or if a UM mode is used, the receive end updates the upper boundary to the packet beyond the window, sets VR(R) = VR(H) - AM_Window_Size, and sets VR(X) = VR(H).

In another embodiment of the present invention, the receive end configures a maximum quantity of uplink retransmission times, and after the maximum quantity of retransmission times, RLC resetting is not triggered.

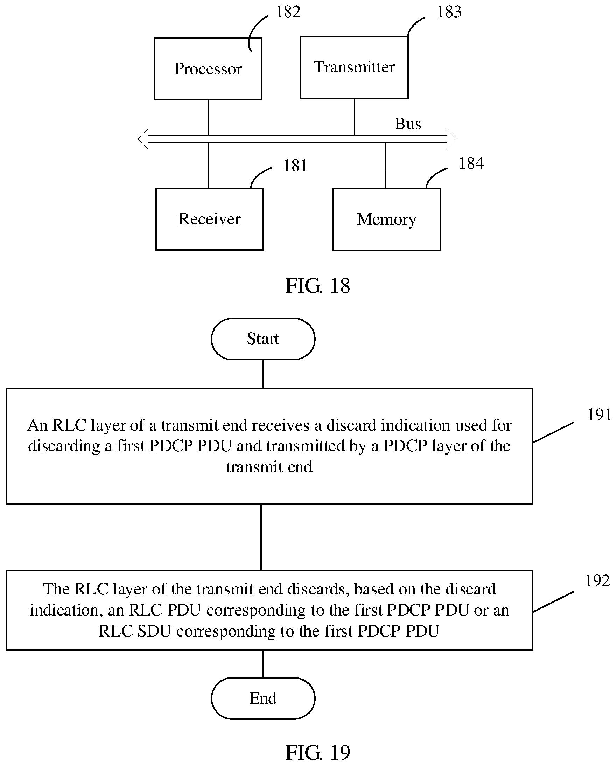

FIG. 18 is a schematic structural diagram of another data transmission processing apparatus according to another embodiment of the present invention. A communications system includes an access network device and a terminal device. The access network device communicates with the terminal device by using an air interface. The access network device may be a 2G/3G/4G base station or a gNB in a 5G communications system. One of the access network device and the terminal device is a transmit end, and the other one is a receive end. For example, when the access network device is a transmit end, the terminal device is a receive end, or vice versa.

In this embodiment, the data transmission processing apparatus is the receive end. The data transmission processing apparatus includes a receiver 181, a processor 182, a transmitter 183, and a memory 184. The receiver 181, the processor 182, the transmitter 183, and the memory 184 communicate with each other by using a bus.

In this embodiment of this application, the processor 182 may be an EPLD, an FPGA, a DSP chip, an ASIC or another programmable logic device, a discrete gate or transistor logic device, a discrete hardware component, or the like.

The memory 184 is configured to store code or instruction information, and may further store information about a device type. The memory 184 may include a ROM and a RAM, and is configured to provide an instruction and data for the processor 182. A part of the memory 184 may further include a non-volatile random access memory.

The receiver 181 is configured to receive an RLC PDU transmitted by a transmit end.

The processor 182 is configured to: when determining that a value of a highest receiving state variable VR(H) is greater than a value of a receiving state variable VR(R), start a first timer, and set a value of a state variable VR(X).

The transmitter 183 is configured to transmit a status report to the transmit end when the processor 182 determines that the value of the highest receiving state variable VR(H) is greater than the value of the receiving state variable VR(R).

The first timer is used by the processor 182 to detect whether a corresponding RLC PDU that is unsuccessfully received and whose sequence number is the value of the VR(R) is discarded. The receiver 181 receives, within duration of the first timer, the corresponding RLC PDU whose sequence number is the value of the VR(R).

The status report includes status information of all RLC PDUs received by the receive end when the first timer is started. For example, the status report includes a sequence number of at least one RLC PDU that is unsuccessfully received.

The value of the VR(H) indicates a sequence number of an RLC PDU and is 1 plus a sequence number corresponding to a highest RLC PDU already received when the first timer is started. The value of the VR(R) indicates a sequence number of an RLC PDU and is a sequence number corresponding to an RLC PDU that the receive end expects to receive when the first timer is started. The value of the VR(X) indicates the sequence number of the RLC PDU and is 1 plus the sequence number corresponding to the highest RLC PDU already received when the first timer is started.

Before the first timer expires, when determining that sequence numbers of received RLC PDUs between the value of the VR(X) at the start of the first timer and a current value of the VR(H) are discontinuous, the processor 182 is further configured to start a third timer, where the third timer is used by the receive end to determine whether an RLC PDU corresponding to a missing sequence number is lost.

When the first timer expires, the processor 182 is further configured to: set the value of the VR(R) to a sequence number of a first RLC PDU that is unsuccessfully received among all received RLC PDUs corresponding to RLC PDU sequence numbers that are greater than or equal to the value of the VR(X) when the first timer is started, and set the value of the VR(X) at the expiry of the first timer to the value of the VR(H) at the expiry of the first timer.

In another embodiment of the present invention, the transmitter 183 is further configured to transmit a status report to the transmit end when the first timer or the third timer expires, and the status report includes status information of all RLC PDUs received by the receive end when the first timer or the third timer expires. For example, the status report includes a sequence number of at least one RLC PDU that is not received.

In all the foregoing embodiments, for various timers, for example, the t-reordering timer, the reassembly and segmentation timer, the continue-to-wait timer, the first timer, the second timer, the third timer, and the fourth timer, if a data packet (for example, an RLC PDU or a PDCP PDU) for which a timer is started is successfully received before the timer corresponding to the data packet expires, the timer is stopped. For example, when the receive end finds that one RLC PDU or PDCP PDU is unsuccessfully received, the receive end starts a t-reordering timer. Before the t-reordering timer expires, if the receive end has successfully received the RLC PDU or PDCP PDU, the t-reordering timer is stopped. For example, when the receive end finds that one RLC PDU or PDCP PDU is unsuccessfully received, the receive end starts a t-reordering timer. If the receive end still unsuccessfully receives the RLC PDU or PDCP PDU before the t-reordering timer expires, the receive end starts a continue-to-wait timer for the RLC PDU or the PDCP PDU. If the receive end successfully receives the RLC PDU or PDCP PDU before the continue-to-wait timer expires, the receive end stops the continue-to-wait timer.

It should be understood that, when the t-reordering timer, the reassembly and segmentation timer, the continue-to-wait timer, the first timer, the second timer, the third timer, or the fourth timer expires, the timer is stopped.

FIG. 19 is a schematic flowchart of another data transmission processing method according to another embodiment of the present invention. A communications system includes an access network device and a terminal device. The access network device communicates with the terminal device by using an air interface. The access network device may be a 2G/3G/4G base station or a gNB in a 5G communications system. One of the access network device and the terminal device is a transmit end, and the other one is a receive end. For example, when the access network device is a transmit end, the terminal device is a receive end, or vice versa.

Step 191: An RLC layer of a transmit end receives a discard indication used for discarding a first PDCP PDU and transmitted by a PDCP layer of the transmit end.

Step 192: The RLC layer of the transmit end discards, based on the discard indication, an RLC PDU corresponding to the first PDCP PDU or an RLC SDU corresponding to the first PDCP PDU.

In another embodiment of the present invention, if the RLC layer has not processed the first PDCP PDU, the RLC layer discards, based on the discard indication, the RLC SDU corresponding to the first PDCP PDU. In another embodiment of the present invention, that the RLC layer has not processed the first PDCP PDU includes: The RLC layer has not performed RLC sequence numbering on the first PDCP PDU, or has not generated the RLC PDU corresponding to the first PDCP PDU.

In another embodiment of the present invention, if the RLC layer has performed RLC sequence numbering on the first PDCP PDU, or has generated the RLC PDU corresponding to the first PDCP PDU, or has transmitted the first PDCP PDU, the RLC layer discards, based on the discard indication, the RLC PDU corresponding to the first PDCP PDU, and instructs a receive end to discard a sequence number corresponding to the RLC PDU.

Optionally, the PDCP layer of the transmit end determines to discard the first PDCP PDU, and notifies an SN of discarded PDCP to PDCP of the receive end.

In another embodiment of the present invention, the discard indication carries information for discarding the first PDCP PDU; or the discard indication is a discard timer for the first PDCP PDU, where the RLC layer starts the discard timer when receiving the first PDCP PDU and discards the first PDCP PDU when the discard timer expires.

Optionally, the RLC layer discards, based on the discard indication, the RLC PDU corresponding to the first PDCP PDU, and instructs the receive end to discard the sequence number corresponding to the RLC PDU.

In the data transmission processing method in this embodiment, for a PDCP PDU packet, after RLC segmentation and transmission, there is no need to retransmit other packet segments after some packet segments are discarded. Therefore, a transmission rate is increased.

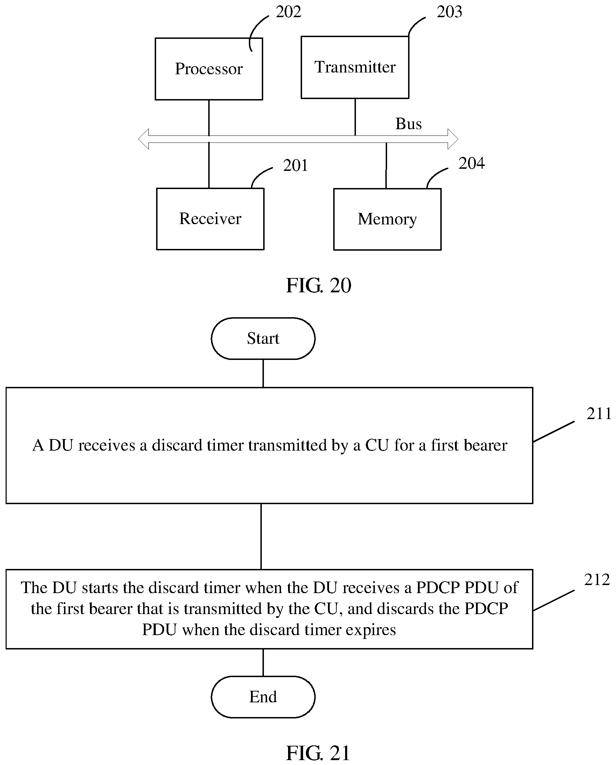

FIG. 20 is a schematic structural diagram of another data transmission processing apparatus according to another embodiment of the present invention. A communications system includes an access network device and a terminal device. The access network device communicates with the terminal device by using an air interface. The access network device may be a 2G/3G/4G base station or a gNB in a 5G communications system. One of the access network device and the terminal device is a transmit end, and the other one is a receive end. For example, when the access network device is a transmit end, the terminal device is a receive end, or vice versa. In this embodiment, the transmit end is the data transmission processing apparatus. The data transmission processing apparatus includes a receiver 201, a processor 202, a transmitter 203, and a memory 204. The receiver 201, the processor 202, the transmitter 203, and the memory 204 communicate with each other by using a bus.

In this embodiment of this application, the processor 202 may be an EPLD, an FPGA, a DSP chip, an ASIC or another programmable logic device, a discrete gate or transistor logic device, a discrete hardware component, or the like.

The memory 204 is configured to store code or instruction information, and may further store information about a device type. The memory 204 may include a ROM and a RAM, and is configured to provide an instruction and data for the processor 202. A part of the memory 204 may further include a non-volatile random access memory.

The receiver 201 is configured to receive a discard indication used for discarding a first PDCP PDU and transmitted by a PDCP layer of the transmit end.

The processor 202 is configured to discard, based on the discard indication, an RLC PDU corresponding to the first PDCP PDU or an RLC SDU corresponding to the first PDCP PDU.

In another embodiment of the present invention, if the processor 202 has not processed the first PDCP PDU, the processor 202 discards, based on the discard indication, the RLC SDU corresponding to the first PDCP PDU. In another embodiment of the present invention, that the processor 202 has not processed the first PDCP PDU includes: The processor 202 has not performed RLC sequence numbering on the first PDCP PDU, or has not generated the RLC PDU corresponding to the first PDCP PDU.

In another embodiment of the present invention, if the processor 202 has performed RLC sequence numbering on the first PDCP PDU, or has generated the RLC PDU corresponding to the first PDCP PDU, or has transmitted the first PDCP PDU, the processor 202 discards, based on the discard indication, the RLC PDU corresponding to the first PDCP PDU, and instructs a receive end to discard a sequence number corresponding to the RLC PDU.

In another embodiment of the present invention, the discard indication carries information for discarding the first PDCP PDU; or the discard indication is a discard timer for the first PDCP PDU, where the processor 202 is configured to: start the discard timer when the receiver 201 receives the first PDCP PDU and discard the first PDCP PDU when the discard timer expires.

In the data transmission processing method in this embodiment, for a PDCP PDU packet, after RLC segmentation and transmission, there is no need to retransmit other packet segments after some packet segments are discarded. Therefore, a transmission rate is increased.

FIG. 21 is a schematic flowchart of another data transmission processing method according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. However, for brevity of description, the gNB is used as an example for description in this embodiment. One of the access network device and the terminal device is a transmit end, and the other one is a receive end. For example, when the access network device is a transmit end, the terminal device is a receive end, or vice versa.

Step 211: The DU receives a discard timer transmitted by the CU for a first bearer or a first logical channel (group).

It should be understood that the discard timer transmitted for the first bearer or the first logical channel (group) may be a discard timer shared for one or a plurality of bearers of the terminal device. The discard timer is used to manage discarding of an RLC SDU, an RLC PDU, or a PDCP PDU.

Step 212: The DU starts the discard timer when the DU receives a PDCP PDU of the first bearer or the first logical channel (group) that is transmitted by the CU, and discards the PDCP PDU when the discard timer expires.

In another embodiment of the present invention, if the DU has not processed the PDCP PDU, when the discard timer expires, the DU discards the RLC SDU corresponding to the PDCP PDU. In another embodiment of the present invention, that the DU has not processed the PDCP PDU includes: The DU has not performed RLC sequence numbering on the PDCP PDU, or has not generated the RLC PDU corresponding to the PDCP PDU.

In another embodiment of the present invention, if the DU has performed RLC sequence numbering on the PDCP PDU, or has generated an RLC PDU corresponding to the PDCP PDU, or has transmitted the PDCP PDU, when the discard timer expires, the DU discards the RLC PDU corresponding to the PDCP PDU, and instructs a terminal device to discard a sequence number corresponding to the RLC PDU.

Optionally, the PDCP layer of the transmit end determines to discard the PDCP PDU, and notifies an SN of discarded PDCP to PDCP of the receive end.

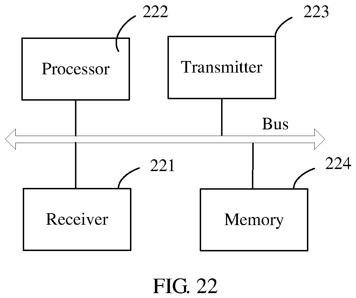

FIG. 22 is a schematic structural diagram of another data transmission processing apparatus according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. One of the access network device and the terminal device is a transmit end, and the other one is a receive end. For example, when the access network device is a transmit end, the terminal device is a receive end, or vice versa.

However, in this embodiment, for brevity of description, the gNB is used as an example for description in this embodiment. The data transmission processing apparatus is the DU. The data transmission processing apparatus includes a receiver 221, a processor 222, a transmitter 223, and a memory 224. The receiver 221, the processor 222, the transmitter 223, and the memory 224 communicate with each other by using a bus.

In this embodiment of this application, the processor 222 may be an EPLD, an FPGA, a DSP chip, an ASIC or another programmable logic device, a discrete gate or transistor logic device, a discrete hardware component, or the like.

The memory 224 is configured to store code or instruction information, and may further store information about a device type. The memory 224 may include a ROM and a RAM, and is configured to provide an instruction and data for the processor 222. A part of the memory 224 may further include a non-volatile random access memory.

The receiver 221 is configured to receive a discard timer transmitted by a CU for a first bearer or a first logical channel (group).

The processor 222 is configured to: start the discard timer when the DU receives a PDCP PDU of the first bearer or the first logical channel (group) that is transmitted by the CU, and discard the PDCP PDU when the discard timer expires.

In another embodiment of the present invention, if the processor 222 has not processed the PDCP PDU, when the discard timer expires, the processor 222 discards the RLC SDU corresponding to the PDCP PDU. In another embodiment of the present invention, that the processor 222 has not processed the PDCP PDU includes: The processor 222 has not performed RLC sequence numbering on the PDCP PDU, or has not generated the RLC PDU corresponding to the PDCP PDU.

In another embodiment of the present invention, if the processor 222 has performed RLC sequence numbering on the PDCP PDU, or has generated an RLC PDU corresponding to the PDCP PDU, or has transmitted the PDCP PDU, when the discard timer expires, the processor 222 is further configured to discard the RLC PDU corresponding to the PDCP PDU, and the transmitter 223 is configured to instruct a terminal device to discard a sequence number corresponding to the RLC PDU.

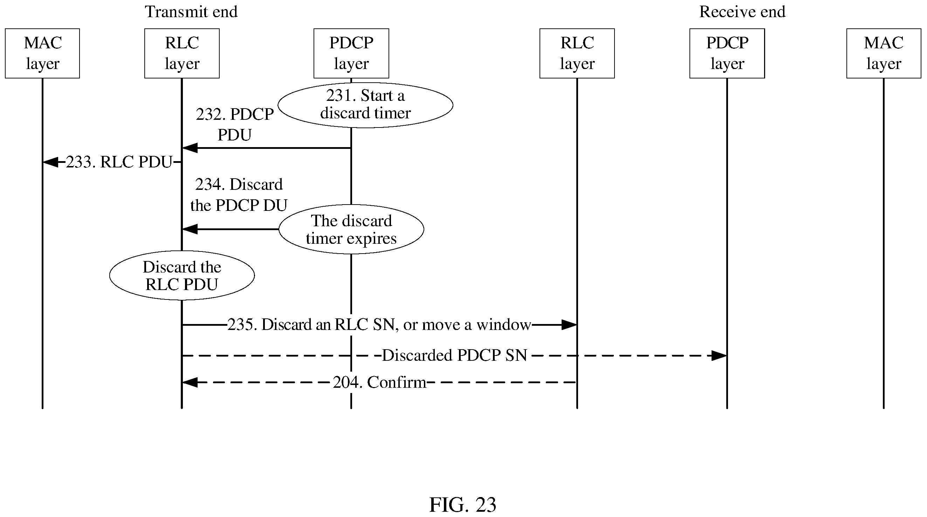

FIG. 23 is a schematic flowchart of another data transmission processing method according to another embodiment of the present invention. A communications system includes an access network device and a terminal device. The access network device communicates with the terminal device by using an air interface. The access network device may be a 2G/3G/4G distributed base station or a gNB in a 5G communications system. One of the access network device and the terminal device is a transmit end, and the other one is a receive end. For example, when the access network device is a transmit end, the terminal device is a receive end, or vice versa.

Step 231: After receiving an upper layer packet, a PDCP layer or an SDAP layer of a transmit end starts a discard timer (discard timer).

For example, the discard timer is preconfigured.

Step 232: The PDCP layer of the transmit end transmits a PDCP PDU to an RLC layer of the transmit end.

For example, the PDCP layer of the transmit end processes the upper layer packet into the PDCP PDU, and transmits the PDCP PDU to the RLC layer of the transmit end.

Step 233: The RLC layer of the transmit end transmits an RLC PDU to a MAC layer of the transmit end.

For example, the RLC layer of the transmit end processes the PDCP PDU received from the PDCP layer of the transmit end into the RLC PDU, and transmits the RLC PDU to the MAC layer of the transmit end.

Step 234: After the timer expires, the PDCP layer of the transmit end instructs the RLC layer of the transmit end to discard the RLC PDU corresponding to the PDCP PDU or an RLC SDU corresponding to the PDCP PDU.

For example, if the PDCP layer of the transmit end has transmitted the PDCP PDU to the RLC layer of the transmit end, the PDCP layer of the transmit end instructs the RLC layer of the transmit end to discard the RLC SDU packet, regardless of whether the RLC layer of the transmit end has generated the corresponding RLC PDU or has transmitted the RLC PDU.

Step 235: The RLC layer of the transmit end notifies an RLC SN corresponding to the discarded RLC PDU or RLC SDU data packet to an RLC layer of a receive end.

This step is an optional step, and may not be performed.

In another embodiment of the present invention, if the RLC layer of the transmit end already has an RLC PDU SN for the PDCP or has transmitted the RLC PDU corresponding to the PDCP, the RLC layer of the transmit end notifies discard information about the discarded RLC SN to the RLC layer of the receive end, and the RLC layer of the receive end moves a receive window of the RLC layer of the transmit end based on the discard information. If the RLC layer of the receive end finds that some segments (segment) of the packet corresponding to the RLC SN have been received, the RLC layer of the receive end deletes the received segments.

In another embodiment of the present invention, the PDCP layer of the transmit end may further notify a PDCP SN corresponding to the discarded RLC PDU or RLC SDU data packet to PDCP layer of the receive end.

In another embodiment of the present invention, the RLC layer of the transmit end may further notify an SN of the discarded RLC PDU to the RLC layer of the receive end.

Optionally, after moving the receive window, the RLC layer of the receive end updates a VR(R). Optionally, the RLC layer of the receive end transmits the updated VR(R) to the RLC layer of the transmit end. The transmit end moves an upper boundary of a transmit window to a value of a sequence number VR(R) in a window moving indication.

Optionally, if the RLC layer of the transmit end notifies the RLC layer of the receive end that the RLC SN corresponding to the discarded packet is greater than the VR(R) stored by the RLC layer of the receive end, and all packets between the RLC SN and the VR(R) have been received, the RLC layer of the receive end updates the VR(R) to a sequence number of a first packet that is not received after the RLC SN.

In another embodiment of the present invention, the RLC layer of the receive end does not need to transmit the updated VR(R) to the RLC layer of the transmit end.

In another embodiment of the present invention, the RLC layer of the receive end determines that a data packet corresponding to an RLC SN and not retransmitted as indicated by the RLC layer of the transmit end has been received. Optionally, the transmit end indicates, to a PDCP entity of the receive end, that the data packet having the PDCP SN corresponding to the RLC SN has been received.

Step 236: The RLC layer of the receive end notifies the PDCP SN to the PDCP layer of the receive end.

This step is an optional step, and may not be performed.

Step 237: The RLC layer of the receive end transmits a discard determining indication to the RLC layer of the transmit end.

This step is an optional step, and may not be performed.

In another embodiment of the present invention, if the PDCP layer and the RLC layer are respectively located in a CU and a DU, when the PDCP layer of the CU transmits a PDCP PDU data packet to the RLC layer of the DU, the PDCP layer of the CU also transmits a discard timer to the RLC layer of the DU, or before the CU transmits the PDCP PDU data packet, the CU configures a discard timer for the RLC layer of the DU, for example, configures the discard timer by using signaling or a network management system. After receiving the PDCP PDU data packet, the RLC layer of the DU starts the discard timer. When the discard timer expires, the RLC layer of the DU discards an RLC PDU or an RLC SDU corresponding to the PDCP PDU, and notifies the receive end of the discarding.

In another embodiment of the present invention, different discard timers are set for different PDCP PDU data packets, duration of a discard timer for an important packet (for example, an important I-frame of video data) is long, and duration of a discard timer for an unimportant packet (for example, an unimportant P-frame of video data) is short. Assuming that an association relationship exists between an important packet and an unimportant packet, provided that the transmit end finds that a discard timer corresponding to data of a last unimportant packet in a same association relationship expires, the transmit end considers that a discard timer corresponding to an important packet associated with the packet expires. The PDCP of the transmit end or the CU instructs the RLC layer to discard RLC PDUs/SDUs corresponding to a plurality of PDCP PDUs.

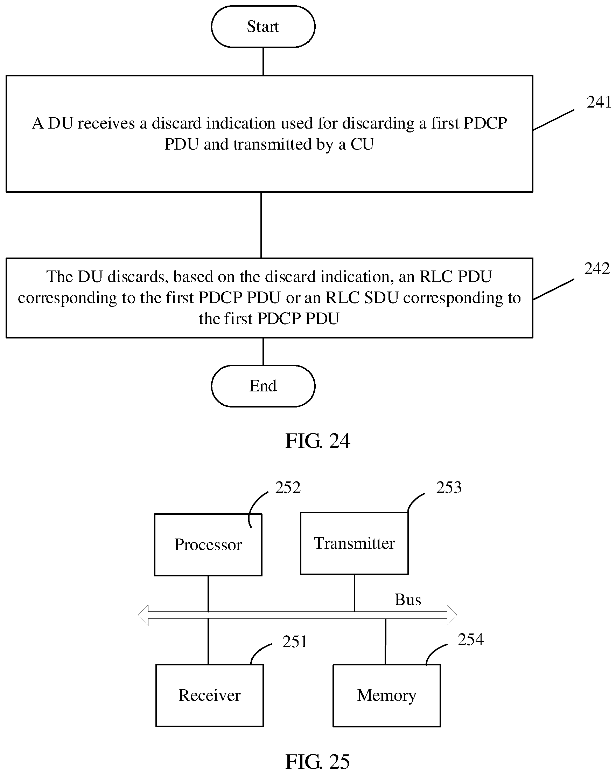

FIG. 24 is a schematic flowchart of another data transmission processing method according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. However, for brevity of description, the gNB is used as an example for description in this embodiment. One of the access network device and the terminal device is a transmit end, and the other one is a receive end. For example, when the access network device is a transmit end, the terminal device is a receive end, or vice versa.

Step 241: The DU receives a discard indication used for discarding a first PDCP PDU and transmitted by the CU.

Step 242: The DU discards, based on the discard indication, an RLC PDU corresponding to the first PDCP PDU or an RLC SDU corresponding to the first PDCP PDU.

In another embodiment of the present invention, if the DU has not processed the first PDCP PDU, the DU discards, based on the discard indication, the RLC SDU corresponding to the first PDCP PDU. In another embodiment of the present invention, that the DU has not processed the first PDCP PDU includes: The DU has not performed RLC sequence numbering on the first PDCP PDU, or has not generated the RLC PDU corresponding to the first PDCP PDU.

In another embodiment of the present invention, if the DU has performed RLC sequence numbering on the first PDCP PDU, or has generated the RLC PDU corresponding to the first PDCP PDU, or has transmitted the first PDCP PDU, the DU discards, based on the discard indication, the RLC PDU corresponding to the first PDCP PDU, and instructs the terminal device to discard a sequence number corresponding to the RLC PDU.

In another embodiment of the present invention, the discard indication carries information for discarding the first PDCP PDU; or the discard indication is a discard timer for the first PDCP PDU, where the DU starts the discard timer when receiving the first PDCP PDU and discards the first PDCP PDU when the discard timer expires.

FIG. 25 is a schematic structural diagram of another data transmission processing apparatus according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. One of the access network device and the terminal device is a transmit end, and the other one is a receive end. For example, when the access network device is a transmit end, the terminal device is a receive end, or vice versa.

However, in this embodiment, for brevity of description, the gNB is used as an example for description in this embodiment. The data transmission processing apparatus is the DU. The data transmission processing apparatus includes a receiver 251, a processor 252, a transmitter 253, and a memory 254. The receiver 251, the processor 252, the transmitter 253, and the memory 254 communicate with each other by using a bus.

In this embodiment of this application, the processor 252 may be an EPLD, an FPGA, a DSP chip, an ASIC or another programmable logic device, a discrete gate or transistor logic device, a discrete hardware component, or the like.

The memory 254 is configured to store code or instruction information, and may further store information about a device type. The memory 254 may include a ROM and a RAM, and is configured to provide an instruction and data for the processor 252. A part of the memory 254 may further include a non-volatile random access memory.

The receiver 251 is configured to receive a discard indication used for discarding a first PDCP PDU and transmitted by the CU.

The processor 252 is configured to discard, based on the discard indication, an RLC PDU corresponding to the first PDCP PDU or an RLC SDU corresponding to the first PDCP PDU.

In another embodiment of the present invention, if the processor 252 has not processed the first PDCP PDU, the processor 252 is configured to discard, based on the discard indication, the RLC SDU corresponding to the first PDCP PDU. In another embodiment of the present invention, that the processor 252 has not processed the first PDCP PDU includes: The processor 252 has not performed RLC sequence numbering on the first PDCP PDU, or has not generated the RLC PDU corresponding to the first PDCP PDU.

In another embodiment of the present invention, if the processor 252 has performed RLC sequence numbering on the first PDCP PDU, or has generated the RLC PDU corresponding to the first PDCP PDU, or has transmitted the first PDCP PDU, the processor 252 is configured to: discard, based on the discard indication, the RLC PDU corresponding to the first PDCP PDU, and instruct a terminal device to discard a sequence number corresponding to the RLC PDU.

In another embodiment of the present invention, the discard indication carries information for discarding the first PDCP PDU; or the discard indication is a discard timer for the first PDCP PDU, where the processor 252 is configured to: start the discard timer when the receiver 251 receives the first PDCP PDU and discard the first PDCP PDU when the discard timer expires.

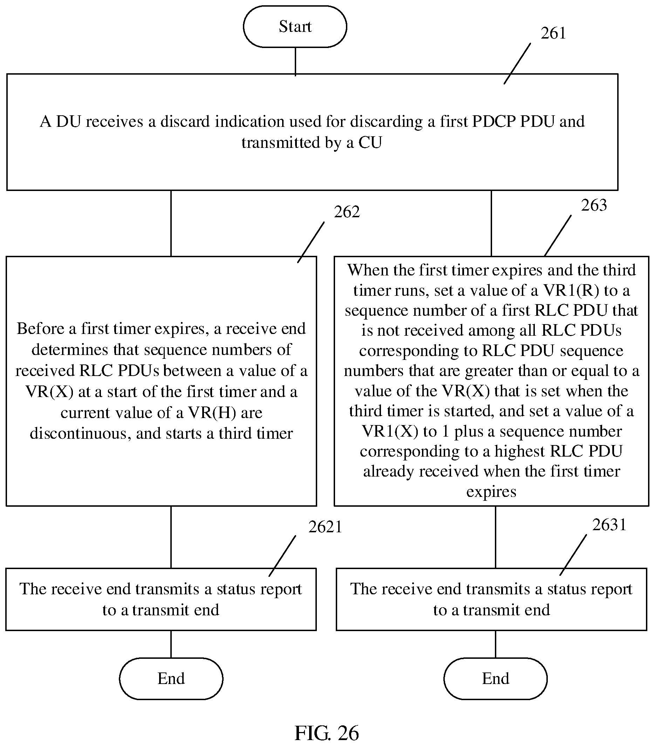

FIG. 26 is a schematic flowchart of another data transmission processing method according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. One of the access network device and the terminal device is a transmit end, and the other one is a receive end. For example, when the access network device is a transmit end, the terminal device is a receive end, or vice versa.

Step 261: Before the first timer expires, a receive end determines that sequence numbers of received RLC PDUs between a value of a VR(X) at a start of the first timer and a current value of a VR(H) are discontinuous, and starts a third timer, where the third timer is used by the receive end to determine whether an RLC PDU corresponding to a missing sequence number between the value of the VR(X) at the start of the first timer and the current value of the VR(H) is lost.

For example, for a first RLC PDU (for example, the RLC PDU whose sequence number is M, denoted as RLC PDU SN = M) not received after an RLC PDU (for example, the second RLC PDU) that has a highest sequence number and has been successfully received when the first timer is started, the receive end also starts a t-reordering timer or a reassembly and segmentation timer, that is, a third timer. For example, the receive end determines, when the third timer expires, whether the RLC PDU whose sequence number is M is lost. It should be understood that the RLC PDU M may be a segmented or complete RLC PDU. In another embodiment of the present invention, duration of the first timer is equal to duration of the third timer, or duration of the first timer is unequal to duration of the third timer. It should be understood that, in an implementation, the third timer is the first timer. A plurality of first timers run simultaneously on a terminal device, respectively for managing or waiting for RLC PDUs in different ranges.

Step 262: When the first timer expires and the third timer runs, set a value of a VR1(R) to a sequence number of a first RLC PDU that is not received among all RLC PDUs corresponding to RLC PDU sequence numbers that are greater than or equal to a value of the VR(X) that is set when the third timer is started, and set a value of the VR1(X) to 1 plus a sequence number corresponding to a highest RLC PDU already received when the first timer expires.

Step 2621: Optionally, the receive end transmits a status report to a transmit end, where the status report includes status information of all RLC PDUs received by the receive end when the first timer expires.

Step 263: When the first timer expires and the third timer does not run, set a value of a VR1(R) to a sequence number of a first RLC PDU that is not received among all RLC PDUs corresponding to RLC PDU sequence numbers that are greater than or equal to the value of the VR(X) that is set when the first timer is started, and set a value of the VR1(X) to 1 plus a sequence number corresponding to a highest RLC PDU already received when the first timer expires.

Step 2631: Optionally, the receive end transmits a status report to a transmit end, where the status report includes status information of all RLC PDUs received by the receive end when the first timer expires.

Step 262 and step 263 are parallel steps.

In this embodiment of the present invention, a waiting time may be managed for each of packets lost at different moments, and a status report is triggered in time, so that retransmission is obtained in time.

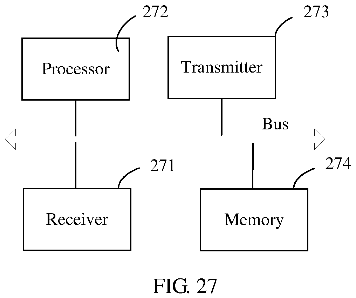

FIG. 27 is a schematic structural diagram of another data transmission processing apparatus according to another embodiment of the present invention. A communications system includes an access network device and a terminal device. The access network device communicates with the terminal device by using an air interface. The access network device may be a 2G/3G/4G distributed base station or a gNB in a 5G communications system. The distributed base station includes an RRU and a BBU. The gNB includes a CU and a DU. One of the access network device and the terminal device is a transmit end, and the other one is a receive end. For example, when the access network device is a transmit end, the terminal device is a receive end, or vice versa.

However, in this embodiment, for brevity of description, the gNB is used as an example for description in this embodiment. The data transmission processing apparatus is the DU. The data transmission processing apparatus includes a receiver 271, a processor 272, a transmitter 273, and a memory 274. The receiver 271, the processor 272, the transmitter 273, and the memory 274 communicate with each other by using a bus.

In this embodiment of this application, the processor 272 may be an EPLD, an FPGA, a DSP chip, an ASIC or another programmable logic device, a discrete gate or transistor logic device, a discrete hardware component, or the like.

The memory 274 is configured to store code or instruction information, and may further store information about a device type. The memory 274 may include a ROM and a RAM, and is configured to provide an instruction and data for the processor 272. A part of the memory 274 may further include a non-volatile random access memory.

Before the first timer expires, the processor 272 is configured to determine that sequence numbers of RLC PDUs received by the receiver 271 between a value of a VR(X) at a start of the first timer and a current value of a VR(H) are discontinuous, and start a third timer, where the third timer is used by the receive end to determine whether an RLC PDU corresponding to a missing sequence number between the value of the VR(X) at the start of the first timer and the current value of the VR(H) is lost.

For example, for a first RLC PDU (for example, the RLC PDU whose sequence number is M, denoted as RLC PDU SN = M) not received after an RLC PDU (for example, the second RLC PDU) that has a highest sequence number and has been successfully received by the receiver 271 when the first timer is started, the receive end also starts a t-reordering timer or a reassembly and segmentation timer, that is, a third timer. For example, the processor 272 determines, when the third timer expires, whether the RLC PDU whose sequence number is M is lost. It should be understood that the RLC PDU M may be a segmented or complete RLC PDU.

In another embodiment of the present invention, duration of the first timer is equal to duration of the third timer, or duration of the first timer is unequal to duration of the third timer. It should be understood that, in an implementation, the third timer is the first timer. A plurality of first timers run simultaneously on a terminal device, respectively for managing or waiting for RLC PDUs in different ranges.

When the first timer expires and the third timer runs, the processor 272 is further configured to set a value of a VR1(R) to a sequence number of a first RLC PDU that is not received among all RLC PDUs corresponding to RLC PDU sequence numbers that are greater than or equal to a value of the VR(X) that is set when the third timer is started, and set a value of the VR1(X) to 1 plus a sequence number corresponding to a highest RLC PDU already received when the first timer expires. Optionally, the transmitter 273 is configured to transmit a status report to a transmit end, where the status report includes status information of all RLC PDUs received by the receive end when the first timer expires.

When the first timer expires and the third timer does not run, the processor 272 is further configured to set a value of a VR1(R) to a sequence number of a first RLC PDU that is not received among all RLC PDUs corresponding to RLC PDU sequence numbers that are greater than or equal to the value of the VR(X) that is set when the first timer is started, and set a value of the VR1(X) to 1 plus a sequence number corresponding to a highest RLC PDU already received when the first timer expires. Optionally, the transmitter 273 is configured to transmit a status report to a transmit end, where the status report includes status information of all RLC PDUs received by the receive end when the first timer expires.

In this embodiment of the present invention, a waiting time may be managed for each of packets lost at different moments, and a status report is triggered in time, so that retransmission is obtained in time.

In another embodiment of the present invention, to reduce overheads and a processing latency, a protocol data unit of a protocol layer using a UM transmission mode may not have a subheader of the protocol layer in a case of non-segmentation. In this case, a header of a protocol layer below the protocol layer needs to include an indication about whether the protocol data unit of the protocol layer includes a header. For two radio access technologies 3GPP LTE and NR, when the protocol layer is RLC, and the lower protocol layer is MAC, the foregoing indication may indicate, by using a reserved bit in a MAC subheader corresponding to an RLC PDU, whether the RLC PDU includes an RLC header. Further, that the header of the lower protocol layer includes the indication about "whether the protocol data unit of the upper protocol layer includes a header" is also applicable to a case in which a header of a PDCP PDU in a 3GPP NR radio access technology is used to indicate whether an SDAP PDU includes a header. In this embodiment of the present invention, overheads and a processing latency are reduced, and a problem about RLC processing with/without an RLC header by a receive end is resolved.

In an implementation process, steps in the foregoing methods can be implemented by using a hardware integrated logical circuit in the processor, or by using instructions in a form of software. The steps of the methods disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described again herein. A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

Further embodiments of the present invention are provided in the following. It should be noted that the numbering used in the following section does not necessarily need to comply with the numbering used in the previous sections.
Embodiment 1. A data transmission processing method, comprising:
   generating, by an access network device, configuration information of a terminal device, wherein the configuration information of the terminal device is intended to map one PDCP entity of the terminal device to at least two different RLC entities; and
   transmitting, by the access network device, the configuration information of the terminal device to the terminal device.
Embodiment 2. The method according to embodiment 1, wherein the at least two different RLC entities respectively use an RLC AM and an RLC UM.
Embodiment 3. The method according to embodiment 1, wherein the at least two different RLC entities both use an RLC AM or an RLC UM, timers with different duration are respectively configured for the at least two different RLC entities, and each timer is used by an RLC entity corresponding to the timer to detect whether an RLC PDU transmitted by the access network device is lost.
Embodiment 4. The method according to embodiment 1, wherein the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.
Embodiment 5. A data transmission processing apparatus, comprising:
   a processor, configured to generate configuration information of a terminal device, wherein the configuration information of the terminal device is intended to map one PDCP entity of the terminal device to at least two different RLC entities; and
   a transmitter, configured to transmit the configuration information of the terminal device to the terminal device.
Embodiment 6. The apparatus according to embodiment 5, wherein the at least two different RLC entities respectively use an RLC AM and an RLC UM.
Embodiment 7. The apparatus according to embodiment 5, wherein the at least two different RLC entities both use an RLC AM or an RLC UM, timers with different duration are respectively configured for the at least two different RLC entities, and each timer is used by an RLC entity corresponding to the timer to detect whether an RLC PDU transmitted by the access network device is lost.
Embodiment 8. The apparatus according to embodiment 1, wherein the at least two different RLC entities both use an RLC AM, a timer is configured for at least one of the at least two different RLC entities, and each timer is used by an RLC entity corresponding to the timer to wait for an RLC PDU that is transmitted by the access network device but not received as indicated by a status report transmitted by the terminal device.
Embodiment 9. A data transmission processing method, comprising:
   determining, by a receive end, that a value of a highest receiving state variable VR(H) is greater than a value of a receiving state variable VR(R), starting a first timer, and setting a value of a state variable VR(X), wherein the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started;
   when the first timer expires, transmitting a status report, and starting a second timer, wherein the status report indicates a sequence number of at least one lost RLC PDU; and
   when the second timer expires, setting the value of the VR(R) to a sequence number of a first RLC PDU that is not received among all RLC PDUs corresponding to RLC PDU sequence numbers that are greater than or equal to the value of the VR(X), and setting the value of the VR(X) to 1 plus a sequence number corresponding to a highest RLC PDU already received when the second timer expires.
Embodiment 10. The method according to embodiment 9, wherein the method further comprises:
   when the first timer expires, starting a third timer, setting a value of a VR1(R) to a sequence number of a first RLC PDU that is not received among all RLC PDUs corresponding to RLC PDU sequence numbers that are greater than or equal to the value of the VR(X) that is set when the first timer is started, and setting a value of the VR1(X) to 1 plus a sequence number corresponding to a highest RLC PDU already received when the first timer expires; and
   when the third timer expires, setting the value of the VR(R) to a sequence number of a first RLC PDU that is not received among all RLC PDUs corresponding to RLC PDU sequence numbers that are greater than or equal to the value of the VR1(X) that is set when the third timer is started, and setting the value of the VR(X) to 1 plus a sequence number corresponding to a highest RLC PDU already received when the third timer expires.
Embodiment 11. The method according to embodiment 9, wherein the method further comprises:
   before the first timer expires, determining, by the receive end, that sequence numbers of received RLC PDUs between the value of the VR(X) at the start of the first timer and a current value of the VR(H) are discontinuous, and starting a third timer, wherein the third timer is used by the receive end to determine whether an RLC PDU corresponding to a missing sequence number is lost.
Embodiment 12. A data transmission processing apparatus, comprising:
   a processor, configured to: determine that a value of a highest receiving state variable VR(H) is greater than a value of a receiving state variable VR(R), start a first timer, and set a value of a state variable VR(X), wherein the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and
   a transmitter, configured to transmit a status report when the first timer expires, wherein the status report indicates a sequence number of at least one lost RLC PDU; wherein
   the processor is further configured to start a second timer when the first timer expires; and
   when the second timer expires, the processor is further configured to: set the value of the VR(R) to a sequence number of a first RLC PDU that is not received among all RLC PDUs corresponding to RLC PDU sequence numbers that are greater than or equal to the value of the VR(X), and set the value of the VR(X) to 1 plus a sequence number corresponding to a highest RLC PDU already received when the second timer expires.
Embodiment 13. The apparatus according to embodiment 12, wherein
   when the first timer expires, the processor is further configured to: start a third timer, set a value of a VR1(R) to a sequence number of a first RLC PDU that is not received among all RLC PDUs corresponding to RLC PDU sequence numbers that are greater than or equal to the value of the VR(X) that is set when the first timer is started, and set a value of the VR1(X) to 1 plus a sequence number corresponding to a highest RLC PDU already received when the first timer expires; and
   when the third timer expires, the processor is further configured to: set the value of the VR(R) to a sequence number of a first RLC PDU that is not received among all RLC PDUs corresponding to RLC PDU sequence numbers that are greater than or equal to the value of the VR1(X) that is set when the third timer is started, and set the value of the VR(X) to 1 plus a sequence number corresponding to a highest RLC PDU already received when the third timer expires.
Embodiment 14. The apparatus according to embodiment 12, wherein
   before the first timer expires, the processor is further configured to: determine that sequence numbers of received RLC PDUs between the value of the VR(X) at the start of the first timer and a current value of the VR(H) are discontinuous, and start a third timer, wherein the third timer is used by the receive end to determine whether an RLC PDU corresponding to a missing sequence number is lost.
Embodiment 15. A data transmission processing method, comprising:
   when determining that a value of a highest receiving state variable VR(H) is greater than a value of a receiving state variable VR(R), transmitting, by a receive end, a status report to a transmit end, starting a first timer, and setting a value of a state variable VR(X), wherein the status report comprises status information of all RLC PDUs received by the receive end when the first timer is started, the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and
   when the first timer expires, setting the value of the VR(R) to a sequence number of a first RLC PDU that is unsuccessfully received among all received RLC PDUs corresponding to RLC PDU sequence numbers that are greater than or equal to the value of the VR(X) when the first timer is started, and setting the value of the VR(X) at the expiry of the first timer to the value of the VR(H) at the expiry of the first timer; or
   before the first timer expires, determining, by the receive end, that sequence numbers of received RLC PDUs between the value of the VR(X) at the start of the first timer and a current value of the VR(H) are discontinuous, and starting a third timer, wherein the third timer is used by the receive end to determine whether an RLC PDU corresponding to a missing sequence number is lost.
Embodiment 16. The method according to embodiment 15, wherein the method further comprises:
   when the first timer expires and the third timer runs, setting the value of the VR(R) to a sequence number of a first RLC PDU that is unsuccessfully received among all received RLC PDUs corresponding to RLC PDU sequence numbers that are greater than or equal to the value of the VR(X) when the third timer is started.
Embodiment 17. The method according to embodiment 15, wherein the method further comprises:
   transmitting a status report to the transmit end when the first timer or the third timer expires, wherein the status report comprises status information of all RLC PDUs received by the receive end when the first timer or the third timer expires.
Embodiment 18. A data transmission processing apparatus, comprising:
   a processor, configured to: when determining that a value of a highest receiving state variable VR(H) is greater than a value of a receiving state variable VR(R), start a first timer, and set a value of a state variable VR(X), wherein the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and
   a transmitter, configured to transmit a status report to a transmit end when it is determined that the value of the highest receiving state variable VR(H) is greater than the value of the receiving state variable VR(R), wherein the status report comprises status information of all RLC PDUs received by the receive end when the first timer is started; wherein
   when the first timer expires, the processor is further configured to: set the value of the VR(R) to a sequence number of a first RLC PDU that is unsuccessfully received among all received RLC PDUs corresponding to RLC PDU sequence numbers that are greater than or equal to the value of the VR(X) when the first timer is started, and set the value of the VR(X) at the expiry of the first timer to the value of the VR(H) at the expiry of the first timer; or before the first timer expires, the processor is further configured to: determine that sequence numbers of received RLC PDUs between the value of the VR(X) at the start of the first timer and a current value of the VR(H) are discontinuous, and start a third timer, wherein the third timer is used by the receive end to determine whether an RLC PDU corresponding to a missing sequence number is lost.
Embodiment 19. The apparatus according to embodiment 18, wherein
   when the first timer expires and the third timer runs, the processor is further configured to set the value of the VR(R) to a sequence number of a first RLC PDU that is unsuccessfully received among all received RLC PDUs corresponding to RLC PDU sequence numbers that are greater than or equal to the value of the VR(X) when the third timer is started.
Embodiment 20. The apparatus according to embodiment 18, wherein
   the transmitter is further configured to transmit a status report to the transmit end when the first timer or the third timer expires, wherein the status report comprises status information of all RLC PDUs received by the receive end when the first timer or the third timer expires.
Embodiment 21. A data transmission processing method, comprising:
   receiving, by an RLC layer of a transmit end, a discard indication used for discarding a first PDCP PDU and transmitted by a PDCP layer of the transmit end; and
   discarding, by the RLC layer based on the discard indication, an RLC PDU corresponding to the first PDCP PDU or an RLC SDU corresponding to the first PDCP PDU.
Embodiment 22. The method according to embodiment 21, wherein the discarding, by the RLC layer based on the discard indication, an RLC SDU corresponding to the first PDCP PDU comprises:
   if the RLC layer has not processed the first PDCP PDU, discarding, by the RLC layer based on the discard indication, the RLC SDU corresponding to the first PDCP PDU.
Embodiment 23. The method according to embodiment 21, wherein the discarding, by the RLC layer based on the discard indication, an RLC PDU corresponding to the first PDCP PDU comprises:
   if the RLC layer has performed RLC sequence numbering on the first PDCP PDU, or has generated the RLC PDU corresponding to the first PDCP PDU, or has transmitted the first PDCP PDU, discarding, by the RLC layer based on the discard indication, the RLC PDU corresponding to the first PDCP PDU, and instructing a receive end to discard a sequence number corresponding to the RLC PDU.
Embodiment 24. The method according to embodiment 21, wherein the discard indication carries information for discarding the first PDCP PDU; or
   the discard indication is a discard timer for the first PDCP PDU, wherein the RLC layer starts the discard timer when receiving the first PDCP PDU and discards the first PDCP PDU when the discard timer expires.
Embodiment 25. A data transmission processing apparatus, comprising:
   a receiver, configured to receive a discard indication used for discarding a first PDCP PDU and transmitted by a PDCP layer of the transmit end; and
   a processor, configured to discard, based on the discard indication, an RLC PDU corresponding to the first PDCP PDU or an RLC SDU corresponding to the first PDCP PDU.
Embodiment 26. The apparatus according to embodiment 25, wherein that the processor is configured to discard, based on the discard indication, an RLC SDU corresponding to the first PDCP PDU specifically comprises:
   if the first PDCP PDU has not been processed, the processor is configured to discard, based on the discard indication, the RLC SDU corresponding to the first PDCP PDU.
Embodiment 27. The apparatus according to embodiment 25, wherein that the processor is configured to discard, based on the discard indication, an RLC PDU corresponding to the first PDCP PDU specifically comprises:
   if RLC sequence numbering has been performed on the first PDCP PDU, or the RLC PDU corresponding to the first PDCP PDU has been generated, or the first PDCP PDU has been transmitted, the processor is configured to: discard, based on the discard indication, the RLC PDU corresponding to the first PDCP PDU, and instruct a receive end to discard a sequence number corresponding to the RLC PDU.
Embodiment 28. The apparatus according to embodiment 25, wherein the discard indication carries information for discarding the first PDCP PDU; or
   the discard indication is a discard timer for the first PDCP PDU, wherein the processor is further configured to: start the discard timer when the receiver receives the first PDCP PDU and discard the first PDCP PDU when the discard timer expires.
Embodiment 29. A data transmission processing method, wherein a base station comprises a CU and a DU, and the method comprises:
   receiving, by the DU, a discard timer transmitted by the CU for a first bearer or a first logical channel (group); and
   starting, by the DU, the discard timer when receiving a PDCP PDU of the first bearer or the first logical channel (group), and discarding the PDCP PDU when the discard timer expires.
Embodiment 30. The method according to embodiment 29, wherein the discarding the PDCP PDU when the discard timer expires comprises:
   if the DU has not processed the PDCP PDU, when the discard timer expires, discarding, by the DU, the RLC SDU corresponding to the PDCP PDU.
Embodiment 31. The method according to embodiment 29, wherein the discarding the PDCP PDU when the discard timer expires comprises:
   if the DU has performed RLC sequence numbering on the PDCP PDU, or has generated an RLC PDU corresponding to the PDCP PDU, or has transmitted the PDCP PDU, when the discard timer expires, discarding, by the DU, the RLC PDU corresponding to the PDCP PDU, and instructing a terminal device to discard a sequence number corresponding to the RLC PDU.
Embodiment 32. A data transmission processing apparatus, comprising:
   a receiver, configured to receive a discard timer transmitted by a CU for a first bearer or a first logical channel (group); and
   a processor, configured to: start the discard timer when the receiver receives a PDCP PDU of the first bearer or the first logical channel (group), and discard the PDCP PDU when the discard timer expires.
Embodiment 33. The apparatus according to embodiment 32, wherein that the processor is configured to discard the PDCP PDU when the discard timer expires specifically comprises:
   if the PDCP PDU has not been processed, when the discard timer expires, the processor is configured to discard the RLC SDU corresponding to the PDCP PDU.
Embodiment 34. The apparatus according to embodiment 32, wherein that the processor is configured to discard the PDCP PDU when the discard timer expires specifically comprises:
   if RLC sequence numbering has been performed on the PDCP PDU, or an RLC PDU corresponding to the PDCP PDU has been generated, or the PDCP PDU has been transmitted, when the discard timer expires, the processor is configured to discard the RLC PDU corresponding to the PDCP PDU; and
   the data transmission processing apparatus further comprises a transmitter, configured to instruct a terminal device to discard a sequence number corresponding to the RLC PDU.
Embodiment 35. A data transmission processing method, wherein a base station comprises a CU and a DU, and the method comprises:
   receiving, by the DU, a discard indication used for discarding a first PDCP PDU and transmitted by the CU; and
   discarding, by the DU based on the discard indication, an RLC PDU corresponding to the first PDCP PDU or an RLC SDU corresponding to the first PDCP PDU.
Embodiment 36. The method according to embodiment 35, wherein the discarding, by the DU based on the discard indication, an RLC SDU corresponding to the first PDCP PDU comprises:
   if the DU has not processed the first PDCP PDU, discarding, by the DU based on the discard indication, the RLC SDU corresponding to the first PDCP PDU.
Embodiment 37. The method according to embodiment 35, wherein the discarding, by the DU based on the discard indication, an RLC PDU corresponding to the first PDCP PDU comprises:
   if the DU has performed RLC sequence numbering on the first PDCP PDU, or has generated the RLC PDU corresponding to the first PDCP PDU, or has transmitted the first PDCP PDU, discarding, by the DU based on the discard indication, the RLC PDU corresponding to the first PDCP PDU, and instructing a terminal device to discard a sequence number corresponding to the RLC PDU.
Embodiment 38. The method according to embodiment 35, wherein the discard indication carries information for discarding the first PDCP PDU; or
   the discard indication is a discard timer for the first PDCP PDU, wherein the DU starts the discard timer when receiving the first PDCP PDU and discards the first PDCP PDU when the discard timer expires.
Embodiment 39. A data transmission processing apparatus, comprising:
   a receiver, configured to receive a discard indication used for discarding a first PDCP PDU and transmitted by a distributed unit CU; and
   a processor, configured to discard, based on the discard indication, an RLC PDU corresponding to the first PDCP PDU or an RLC SDU corresponding to the first PDCP PDU.
Embodiment 40. The apparatus according to embodiment 39, wherein that the processor is configured to discard, based on the discard indication, an RLC SDU corresponding to the first PDCP PDU specifically comprises:
   if the first PDCP PDU has not been processed, the processor is configured to discard, based on the discard indication, the RLC SDU corresponding to the first PDCP PDU.
Embodiment 41. The apparatus according to embodiment 39, wherein that the processor is configured to discard, based on the discard indication, an RLC PDU corresponding to the first PDCP PDU specifically comprises:
   if RLC sequence numbering has been performed on the first PDCP PDU, or the RLC PDU corresponding to the first PDCP PDU has been generated, or the first PDCP PDU has been transmitted, the processor is configured to discard, based on the discard indication, the RLC PDU corresponding to the first PDCP PDU; and
   the data transmission processing apparatus further comprises a transmitter, configured to instruct a terminal device to discard a sequence number corresponding to the RLC PDU.
Embodiment 42. The apparatus according to embodiment 39, wherein the discard indication carries information for discarding the first PDCP PDU; or
   the discard indication is a discard timer for the first PDCP PDU, wherein the processor is configured to: start the discard timer when the receiver receives the first PDCP PDU and discard the first PDCP PDU when the discard timer expires.

The foregoing descriptions are merely specific implementations of this application, but are not intended to limit the protection scope of this application. Any variation or replacement readily figured out by a person skilled in the art within the technical scope disclosed in the present invention shall fall within the protection scope of the present invention. Therefore, the protection scope of this application shall be subject to the protection scope of the claims.

## Claims

1. A data transmission processing method, comprising:
when determining that a value of a highest receiving state variable VR(H) is greater than a value of a receiving state variable VR(R), starting, by a receive end, a first timer, and setting a value of a state variable VR(X), wherein when the first timer is started, the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and
when the first timer expires, setting the value of the VR(R) to a sequence number of a first RLC PDU that is unsuccessfully received among all received RLC PDUs corresponding to RLC PDU sequence numbers that are greater than or equal to the value of the VR(X) when the first timer is started, and setting the value of the VR(X) at the expiry of the first timer to the value of the VR(H) at the expiry of the first timer; or
before the first timer expires, determining, by the receive end, that sequence numbers of received RLC PDUs between the value of the VR(X) at the start of the first timer and a current value of the VR(H) are discontinuous, and starting a third timer, wherein the third timer is used by the receive end to determine whether an RLC PDU corresponding to a missing sequence number is lost.

2. The method according to claim 1, wherein the method further comprises:
when the first timer expires and the third timer runs, setting the value of the VR(R) to a sequence number of a first RLC PDU that is unsuccessfully received among all received RLC PDUs corresponding to RLC PDU sequence numbers that are greater than or equal to the value of the VR(X) when the third timer is started.

3. The method according to claim 1 or 2, wherein the method further comprises:
transmitting a status report to the transmit end when the first timer or the third timer expires, wherein the status report comprises status information of all RLC PDUs received by the receive end when the first timer or the third timer expires.

4. A data transmission processing apparatus, comprising:
a processor, configured to: when determining that a value of a highest receiving state variable VR(H) is greater than a value of a receiving state variable VR(R), start a first timer, and set a value of a state variable VR(X), wherein the value of the VR(H) indicates a sequence number of an RLC PDU and is 1 plus a sequence number corresponding to a highest RLC PDU already received when the first timer is started, the value of the VR(R) indicates a sequence number of an RLC PDU and is a sequence number corresponding to an RLC PDU that the receive end expects to receive when the first timer is started, and the value of the VR(X) indicates a sequence number of an RLC PDU and is 1 plus the sequence number corresponding to the highest RLC PDU already received when the first timer is started; and wherein
when the first timer expires, the processor is further configured to: set the value of the VR(R) to a sequence number of a first RLC PDU that is unsuccessfully received among all received RLC PDUs corresponding to RLC PDU sequence numbers that are greater than or equal to the value of the VR(X) when the first timer is started, and set the value of the VR(X) at the expiry of the first timer to the value of the VR(H) at the expiry of the first timer; or before the first timer expires, the processor is further configured to: determine that sequence numbers of received RLC PDUs between the value of the VR(X) at the start of the first timer and a current value of the VR(H) are discontinuous, and start a third timer, wherein the third timer is used by the receive end to determine whether an RLC PDU corresponding to a missing sequence number is lost.

5. The apparatus according to claim 4, wherein
when the first timer expires and the third timer runs, the processor is further configured to set the value of the VR(R) to a sequence number of a first RLC PDU that is unsuccessfully received among all received RLC PDUs corresponding to RLC PDU sequence numbers that are greater than or equal to the value of the VR(X) when the third timer is started.

6. The apparatus according to claim 4 or 5, wherein the apparatus comprises a transmitter, and
the transmitter is further configured to transmit a status report to the transmit end when the first timer or the third timer expires, wherein the status report comprises status information of all RLC PDUs received by the receive end when the first timer or the third timer expires.

7. A data transmission processing method, comprising:
receiving, by an RLC layer of a transmit end, a discard indication used for discarding a first PDCP PDU and transmitted by a PDCP layer of the transmit end; and
if the RLC layer has transmitted the first PDCP PDU, discarding, by the RLC layer based on the discard indication, an RLC PDU corresponding to the first PDCP PDU or an RLC SDU corresponding to the first PDCP PDU.

8. The method according to claim 7, wherein if the RLC layer has transmitted the first PDCP PDU, discarding, by the RLC layer based on the discard indication, the RLC PDU corresponding to the first PDCP PDU, and instructing a receive end to discard a sequence number corresponding to the RLC PDU.

9. The method according to claim 8, wherein the discard indication carries information for discarding the first PDCP PDU; or
the discard indication is a discard timer for the first PDCP PDU, wherein the RLC layer starts the discard timer when receiving the first PDCP PDU and discards the first PDCP PDU when the discard timer expires.

10. A data transmission processing apparatus, comprising:
a receiver, configured to receive a discard indication used for discarding a first PDCP PDU and transmitted by a PDCP layer of the transmit end; and
if the first PDCP PDU has been transmitted, a processor, configured to discard, based on the discard indication, an RLC PDU corresponding to the first PDCP PDU or an RLC SDU corresponding to the first PDCP PDU.

11. The apparatus according to claim 10, wherein
if the first PDCP PDU has been transmitted, the processor is configured to: discard, based on the discard indication, the RLC PDU corresponding to the first PDCP PDU, and instruct a receive end to discard a sequence number corresponding to the RLC PDU.

12. The apparatus according to claim 10 or 11, wherein the discard indication carries information for discarding the first PDCP PDU; or
the discard indication is a discard timer for the first PDCP PDU, wherein the processor is further configured to: start the discard timer when the receiver receives the first PDCP PDU and discard the first PDCP PDU when the discard timer expires.
